(19) Europäisches Patentamt
European Patent Office
Office européen des brevets

(11) Publication number: 0 093 828 B1

(12) **EUROPEAN PATENT SPECIFICATION**

(45) Date of publication of patent specification: **19.11.87**

(51) Int. Cl.$^4$: **C 09 B 44/00,** C 09 B 45/00 // D06P3/32, D21H1/46

(21) Application number: **83100106.0**

(22) Date of filing: **06.05.81**

(60) Publication number of the earlier application in accordance with Art. 76 EPC: **0 041 040**

(54) **Sulpho-free basic azo compounds in metal-free or 1:1 or 1:2 metal complex form.**

(30) Priority: **08.05.80 CH 3601/80**
**08.05.80 CH 3602/80**
**08.05.80 CH 3603/80**
**08.05.80 CH 3604/80**
**08.05.80 CH 3605/80**
**08.05.80 CH 3606/80**
**13.05.80 CH 3735/80**
**13.05.80 CH 3736/80**
**13.05.80 CH 3737/80**
**29.05.80 CH 4183/80**
**29.05.80 CH 4184/80**
**29.05.80 CH 4185/80**
**01.07.80 CH 5079/80**
**01.07.80 CH 5080/80**
**01.07.80 CH 5081/80**
**10.12.80 CH 9104/80**
**10.12.80 CH 9105/80**
**10.12.80 CH 9106/80**

(43) Date of publication of application:
**16.11.83 Bulletin 83/46**

(45) Publication of the grant of the patent:
**19.11.87 Bulletin 87/47**

(84) Designated Contracting States:
**CH DE FR GB IT LI**

(73) Proprietor: **SANDOZ AG**
**Lichtstrasse 35**
**CH-4002 Basel (CH)**

(72) Inventor: **Doswald, Paul**
**Eschenstrasse 4**
**CH-4142 Münchenstein (CH)**
Inventor: **Moriconi, Emil**
**Passwangstrasse 59**
**CH-4059 Basle (CH)**
Inventor: **Moser, Helmut**
**Libellenstrasse 25**
**CH-4104 Oberwil (CH)**
Inventor: **Schmid, Horst**
**Habshagstrasse 13**
**CH-4153 Reinach (CH)**

(56) References cited:
**FR-A-1 211 425**
**GB-A- 883 445**
**GB-A-1 296 857**
**GB-A-1 299 080**
**US-A-4 103 092**
**US-A-4 206 144**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 093 828 B1

Courier Press, Leamington Spa, England.

**Description**

The invention relates to sulpho-free azo compounds, in metal-free, 1:1 metal complex or 1:2 metal complex form, which are useful for dyeing paper and leather.

What is meant by a "1:1 metal complex" is that each molecule of the complex has 1 metal atom bonded to 1 dyestuff molecule or has 2 metal atoms bonded to two dyestuff units, which dyestuff units are joined together by a direct bond or a conventional bridging group; and what is meant by a "1:2 metal complex" is that the complex has 1 atom of metal bonded to two dyestuff units, which dyestuff units can be the same or different but which dyestuff units are part of two separate dyestuff molecules.

British Patent 1,299,080 describes water soluble quaternary ammonium salts of basic azo dyes.

British Patent 1,296,857 describes pyridone azo dyes.

The invention provides sulpho-free azo compounds 1:1 metal complex or 1:2 metal complex form having an average of at least 1.3 water solubilising basic groups per dyestuff unit, the compounds being of the formula III

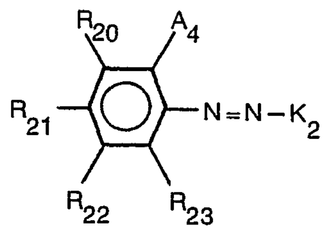

III

in which

$A_4$ and a hydroxy or amino group on $K_2$ together form the group —NH—Me—O—, —NH—Me—NH—, —NH—Me—OOC—, —O—Me—O— or —O—Me—OOC— where Me is a metal capable of either forming a 1:1 metal complex or a 1:2 metal complex or capable of forming both a 1:1 and a 1:2 metal complex,

$K_2$ is one of the groups of the formula

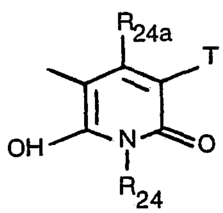

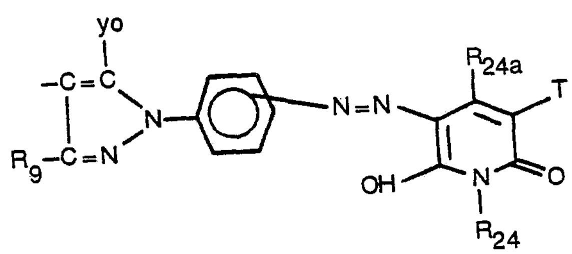

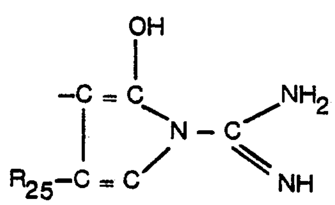

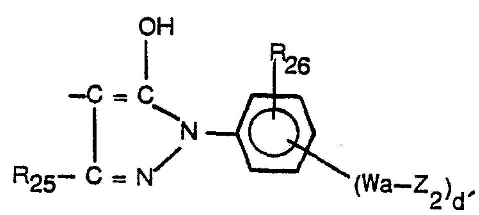

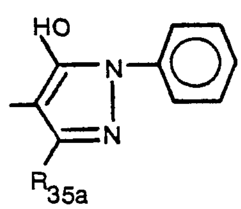

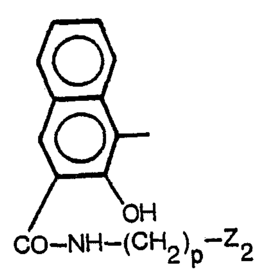

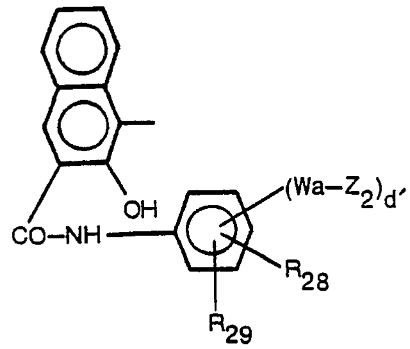

$CH_3—CO—CH—CO—NH—R_{32}$

where $R_9$ is $—CH_3$ or $—COOH$ and yo is OH or $NH_2$, in which

$R_{20}$ is hydrogen or $—NO_2$,

$R_{21}$ is hydrogen, $—NO_2$, $—NH—(CH_2)_s—Z_2$, $—CH_2—Z_2$, $—SO_2—NH—(CH_2)_s$, $—Z_2$, $—SO_2NH_2$, $—CO—CH_2—Z_2$, $—CO—NH—(CH_2)_s—Z_2$ or

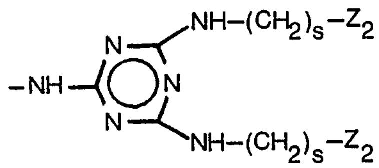

$R_{22}$ is hydrogen, $—NO_2$, $—SO_2NH_2$, $—SO_2—N(R_{22a})$ $—SO_2—NH—(CH_2)_s—OH$, $CH_2—Z_2$, $—SO_2—NH—(CH_2)_s—Z_2$, $—CO—NH—(CH_2)_s—Z_2$, $—NH—CO—(CH_2)_s—Z_2$ or

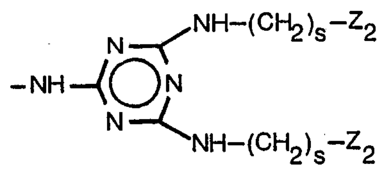

where

$R_{22a}$ is $(C_{1-4})$alkyl;

$R_{23}$ is hydrogen or $—CH_3$;

T is

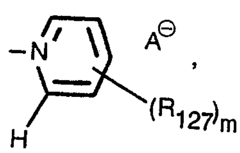 $A^{\ominus}$ , 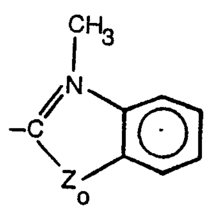 $A^{\ominus}$ ,

$—CO—NH_2$, $—NH_2$, $—N(CH_3)_2$, $—\overset{\oplus}{N}(CH_3)_3$ $A^{\ominus}$ or $—CN$,

where $Z_o$ is

$—S—$, $—O—$, or $—N—R_{35}$;

where

$R_{35}$ is hydrogen, $(C_{1-4})$alkyl or $—CH_2—COO—R_{35a}$

where

$R_{35a}$ is $(C_{1-4})$alkyl;

$R_{127}$ is methyl or ethyl;

m is O, 1 or 2;

$Z_2$ is a group of the formula

$$-NH_2\ ;\quad -N(R_o)_2\ ;\quad \overset{\oplus}{-N}(R_o)_3\quad A^{\oplus}$$

$$\overset{\oplus}{-N}-(CH_2)_p-NH_2 \quad (RCH_3)_2$$

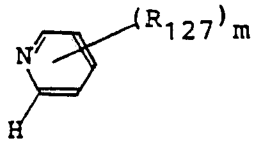

$$\text{or}\quad \overset{\oplus}{-N}-(CH_2)_p-N(CH_3)_2\quad A^{\ominus} \quad (CH_3)_2$$

p is 1, 2 or 3;
yo is OH or $NH_2$;
where each $R_o$ independently is methyl, ethyl, β-hydroxyethyl, benzyl, $—CH_2COCH_3$ or

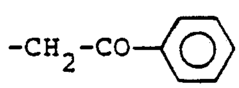

provided that not more than one benzyl, $—CH_2COCH_3$ or

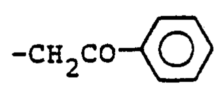

is attached not more than two β-hydroxy groups are attached to a nitrogen atom,
$R_{24}$ is hydrogen, $(C_{1-4})$alkyl, $—C_2H_4OH$, $—(CH_2)_p—Z_2$, benzyl,

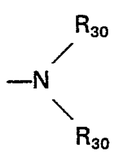

$—(CH_2)_3OCH_3$;

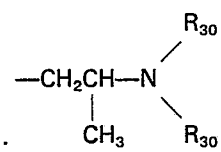

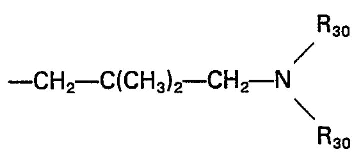

where
$R_{24a}$ is $(C_{1-4})$alkyl, preferably $—CH_3$;
$R_{25}$ is $(C_{1-4})$alkyl, $—COO—(R_{25a})$ or COOH where $R_{25a}$ is $(C_{1-4})$alkyl;
$R_{26}$ is hydrogen, halogen, $(C_{1-4})$alkyl or $(C_{1-4})$alkoxy,
Wa is

$$—(CH_2)_s—,\ —NHCO(\overset{*}{C}H_2)_s—,\ —CONH—(\overset{*}{C}H_2)_s—\ \text{or}\ —SO_2—NH—(\overset{*}{C}H_2)_s—,$$

in which the starred C atom is attached to the N atom of the group $Z_2$ defined above,
s is 1, 2, 3, 4, 5 or 6;
p is 1, 2 or 3;
$R_{28}$ is hydrogen, $(C_{1-4})$alkyl, $(C_{1-4})$alkoxy or halogen,
$R_{29}$ is hydrogen, $(C_{1-4})$alkyl, $(C_{1-4})$alkoxy, halogen, $—NH—(CH_2)_s—Z_2$ or $—NH—C_2H_4OH$;
each $R_{30}$ independently is hydrogen or $(C_{1-4})$alkyl;

$R_{32}$ is hydrogen,

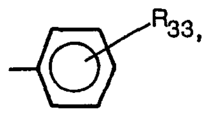

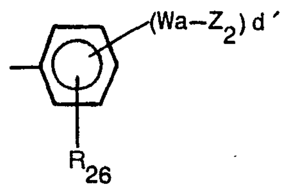

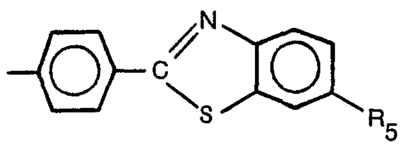

;

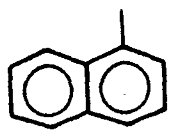

,

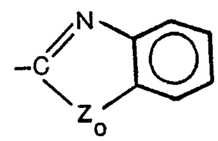

or

where

d' is 0 or 1, $Z_o$, Wa and $R_5'$ are defined above;

$R_{33}$ is hydrogen, halogen, $(C_{1-4})$alkyl, $(C_{1-4})$alkoxy, $-SO_2NH_2$ or $-SO_2N(CH_3)_2$;

$R_5$ is hydrogen, $C_{1-4}$alkyl and $C_{1-4}$alkoxy; and $A^{\ominus}$ is a non-chromophoric anion;

with the provisos that

i) $R_{20}$ and $R_{21}$ cannot both be $-NO_2$,

ii) $R_{21}$ and $R_{22}$ cannot be the same group unless $R_{21}$ and $R_{22}$ are both hydrogen,

iii) when $R_{21}$ and $R_{22}$ are both hydrogen $R_{20}$ and cannot be $-NO_2$.

Preferably when the compounds of the invention are in 1:1 metal complex form Me is copper, chromium, cobalt, iron, nickel or manganese, more preferably copper, chromium or cobalt, most preferably copper. Preferably copper is $Cu^{2+}$; chromium is $Cr^{2+}$; cobalt is $Co^{2+}$; iron is $Fe^{2+}$; nickel is $Ni^{2+}$ and manganese is $Mn^{2+}$.

Preferably when the compounds of the invention are 1:2 metal complex form, Me is chromium, cobalt, iron or nickel, more preferably chromium, cobalt or iron, most preferably iron. Preferably chromium is $Cr^{3+}$; cobalt is $Co^{3+}$, iron is $Fe^{3+}$ and nickel is $Ni^{3+}$.

Further according to the invention there is provided an azo compound in metal-free form having an average of at least two water solubilising basic groups per dyestuff unit the compound being of formula III defined above in which $A_4$ is hydrogen, —OH, $NH_2$, $C_{1-4}$alkoxy or COOH and $K_2$ is one of the groups of the formula

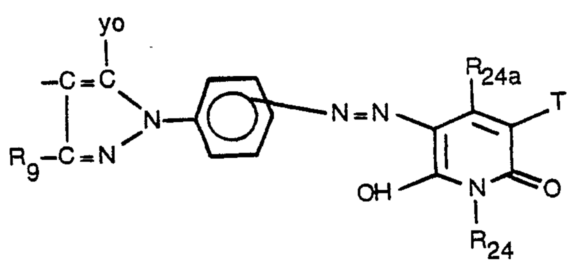

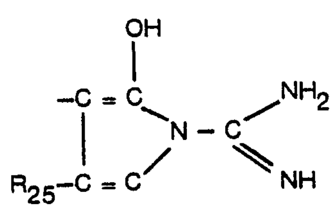

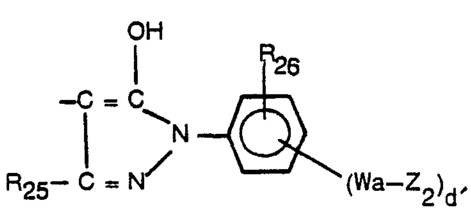

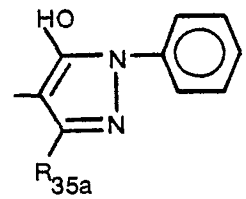

and the other symbols are as defined above.

Preferred azo compounds of formula III in metal free form have the formula IIIa

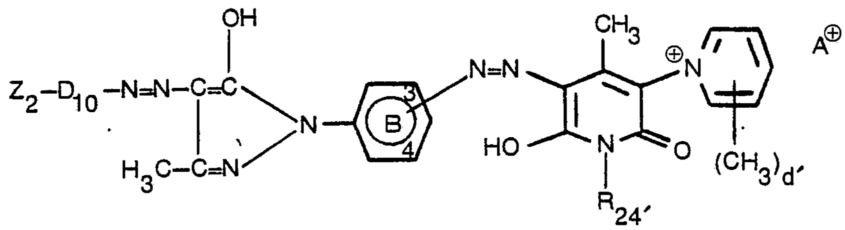

IIIa

in which

$R_{24}'$ is hydrogen, $-N(CH_3)_2$, $-CH_3$, $-C_2H_5$, n$-C_3H_7$, n$-C_4H_9$, i$-C_3H_7$, i$-C_4H_9$, Benzyl, $-C_2H_4OH$, $-(CH_2)_{m'}-Z_2$,

$$-CH_2-\underset{CH_3}{\underset{|}{CH}}-N(CH_3)_2 \text{ or } -CH_2-CH-(CH_3)_2-CH_2-N(CH_3)_2;$$

m' is 2 or 3;

$Z_2-D_{10}-$ is

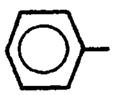 , 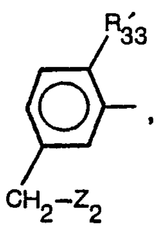 , 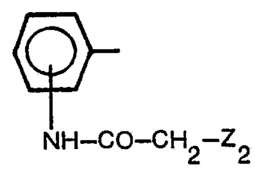 , 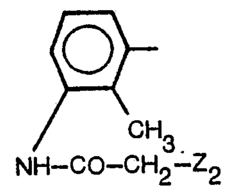 , 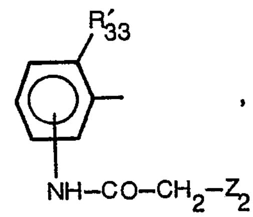 ,

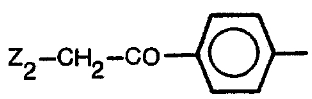 , 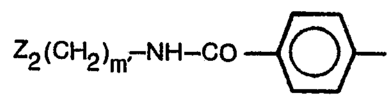 ,

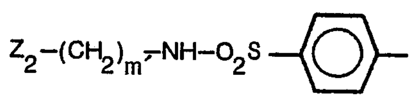 , 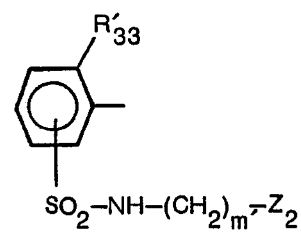

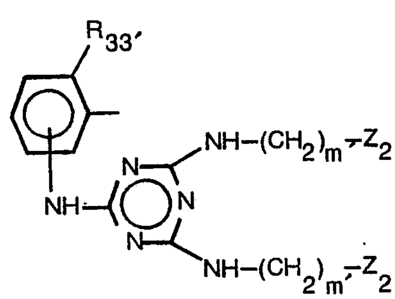 or 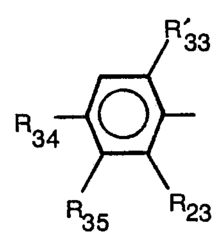 ,

$R'_{33}$ is $-OH$, $-OCH_3$, $-OC_2H_5$ or $-COOH$;

$R_{34}$ is hydrogen, $-NO_2$, $-SO_2-NH_2$ or $-CH_2-Z_2$;

$R_{35}$ is hydrogen, $-NO_2$, $-SO_2NH-(CH_2)_2-OH$, $-SO_2-NH_2$, $-SO_2-NH(CH_2)_3N(CH_3)_2-$ or

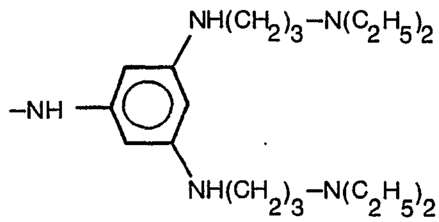

and the other symbols are above defined with the provisos

( i) that the azo bridge in ring B is in the 3 or 4 position;

(ii) that $R_{34}$ and $R_{35}$ are not both $—NO_2$.

Preferred azo compounds for formula IIIa are of the formula IIIb

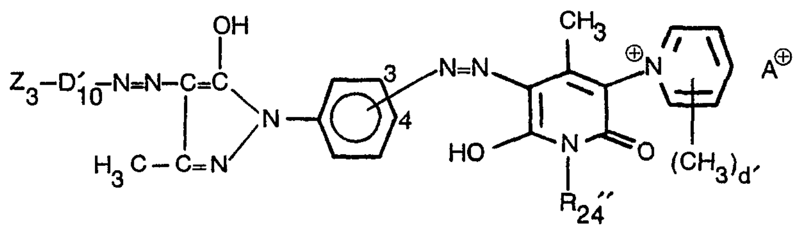

IIIb

in which $R_{24}''$ is hydrogen, $—CH_3$, $—C_2H_5$, $—C_2H_4OH$ or $—(CH_2)_{m'}—Z_3$;

$Z_3—D_{10}'—$ is

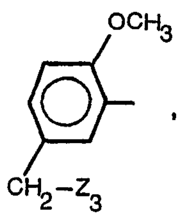

,

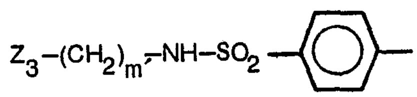

,

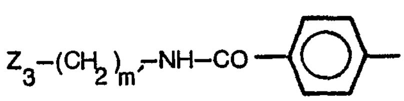

,

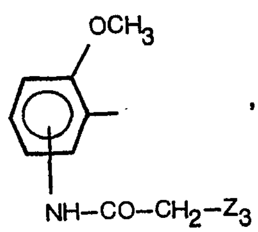

,

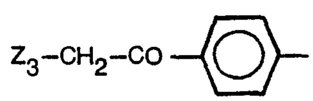

,

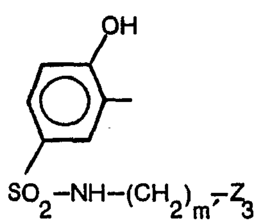

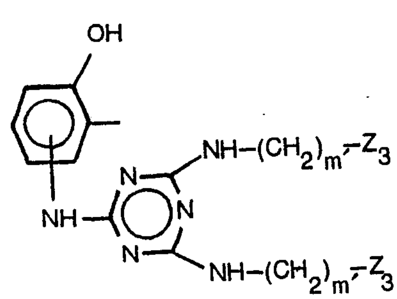

or

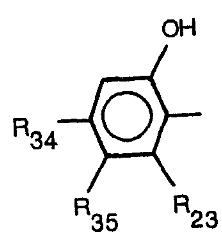

$Z_3$ is

$-N(CH_3)_2$, $-\overset{\oplus}{N}(CH_3)_3$ $A^{\ominus}$,

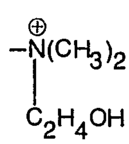

$A^{\ominus}$

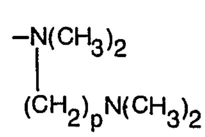

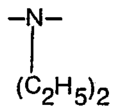 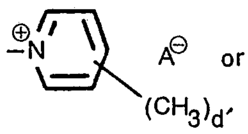 $A^{\ominus}$ or 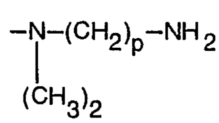 $A^{\ominus}$

and all the other symbols are above defined, with the proviso that $R_{34}$ and $R_{35}$ are not both $-NO_2$.

More preferred azo compounds of formula IIIa are of formula IIIc

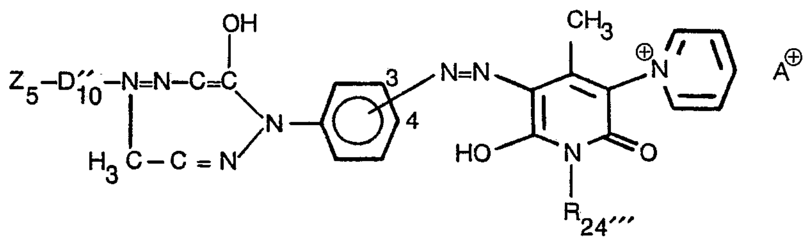

IIIc

in which

$R_{24}'''$ is hydrogen, $-C_2H_4OH$, $-(CH_2)_3-N(CH_3)_2$, $-(CH_2)_3-N(C_2H_5)_2$ or $-(CH_2)_3-{}^{\oplus}N(CH_3)_3$ $A^{\ominus}$,

$Z_5-D_{10}''-$ is

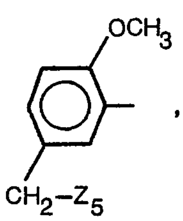 , 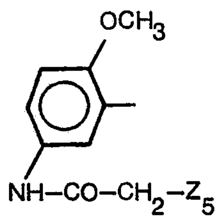 , 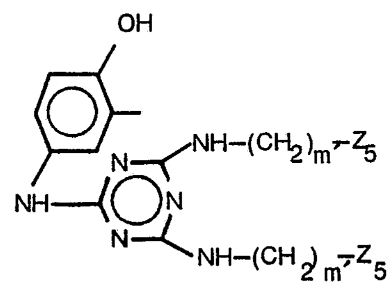 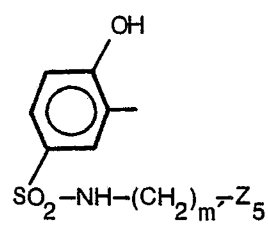

or 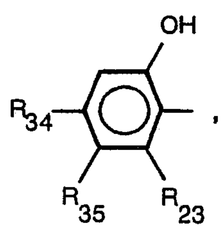 ,

$Z_5$ is

$-N(CH_3)_2$, $-N(C_2H_5)_2$, $-{}^{\oplus}N(CH_3)_3$ $A^{\ominus}$ or 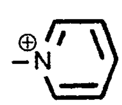 $A^{\ominus}$

and where all the other symbols are above defined, with the proviso that $R_{34}$ and $R_{35}$ are not both $NO_2$.

Alternatively preferred compounds of formula III in metal free form are of the formula IIId

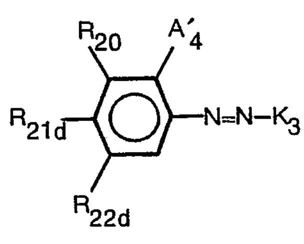

IIId

in which

$A'_4$ is hydrogen, —OH, —$OCH_3$ or —COOH;

$R_{20}$ is hydrogen or $NO_2$;

$R_{21d}$ is hydrogen, —$NO_2$, —NH—CO—$(CH_2)_q$—$Z_3$, —$CH_2$—$Z_3$ —$SO_2$—$NH_2$, —$SO_2$—NH—$(CH_2)_q$—$Z_3$,

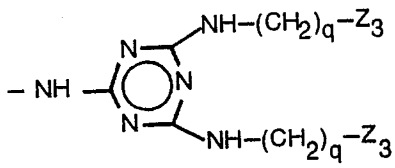

or CO—NH—$(CH_2)_q$—$Z_3$,

$R_{22d}$ is hydrogen, —$CH_2$—$Z_3$, —$SO_2$—$N(CH_3)_2$, —$NO_2$, —$SO_2$—NH—$(CH_2)_q$—OH,

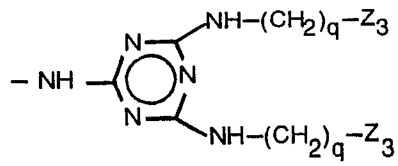

—$SO_2$—NH—$(CH_2)_q$—$Z_3$, —CO—$NH(CH_2)_q$—$Z_3$ or —NH—CO—$(CH_2)_q$—$Z_3$,

$K_3$ is

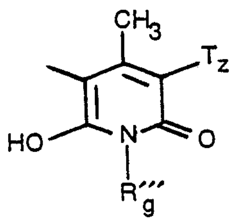

, IIIaa

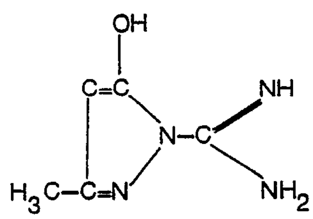

IIIab

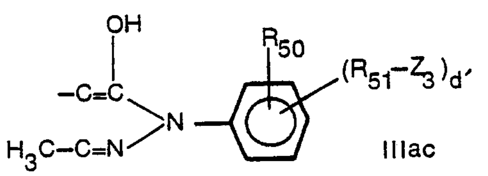

IIIac

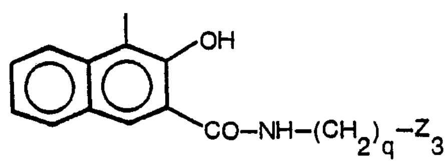

IIIad

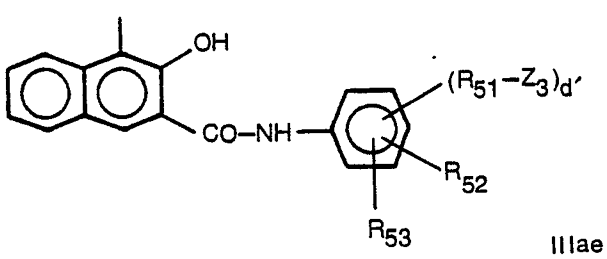

IIIae

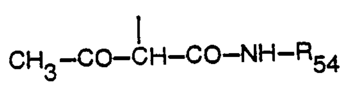

IIIaf

where

$T_z$ is

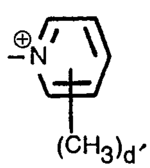

$A^{\ominus}$ or —CN;

$Z_3$ is

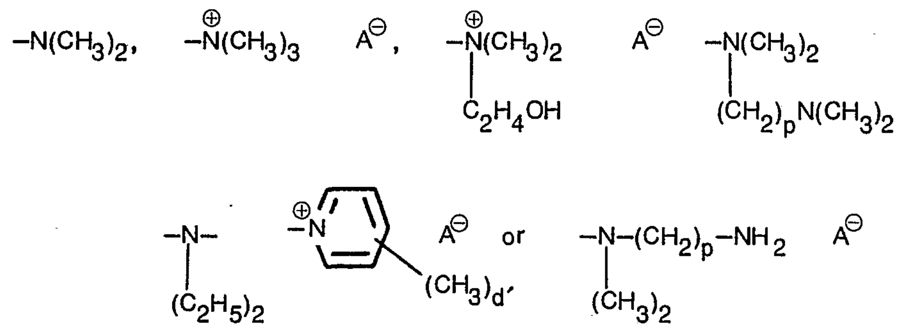

$R_g'''$ is hydrogen, $CH_3$, $-C_2H_5$, $i-C_3H_7$, $i-C_4H_9$, $n-C_3H_7$, $n-C_4H_9$, $-C_2H_4OH$, $-(CH_2)_q-Z_3$;
$R_{50}$ is hydrogen, —Cl, —Br, $-CH_3$ or $OCH_3$;
$R_{51}$ is

$$-(CH_2)_q-,\ -NH-CO-(\overset{*}{C}H_2)_q-,\ -CO-NH-(\overset{*}{C}H_2)_q-\ \text{or}\ -SO_2-NH-(\overset{*}{C}H_2)_q-;$$

$R_{52}$ is hydrogen, —Cl, —Br, $-CH_3$ or $-OCH_3$;
$R_{53}$ is hydrogen, $-NH-(CH_2)_q-Z_3$, $-NH-C_2H_4OH$, —Cl, —Br, $-CH_3$ or $-OCH_3$;
$R_{54}$ is hydrogen,

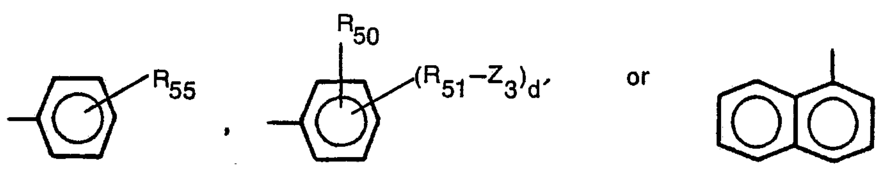

$R_{55}$ is hydrogen, —Cl, —Br, $-CH_3$, $-OCH_3$, $-SO_2NH_2$ or $-SO_2-N(CH_3)_2$
with the provisos

(i) that $R_{21d}$ and $R_{22d}$ are not both the same unless both are hydrogen;
(ii) that $R_{20}$ and $R_{21d}$ are not both $NO_2$;
(iii) that the starred carbon atoms are not attached to the N-atom of the basic or quaternary ammonium group; and
(iv) that $R_{20}$ is not $NO_2$ when $R_{21d}$ or $R_{22d}$ are both hydrogen.

Preferred compounds of formula IIId are of the formula IIIe

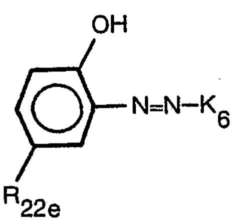

IIIe

in which
$R_{22e}$ is hydrogen, $-CH_2-Z_5$, $-SO_2-NH-(CH_2)_{m'}-Z_5$, $-CO-NH-(CH_2)_{m'}-Z_5$, $-NO_2$,

$-NH-CO-(CH_2)_a-Z_5$ or 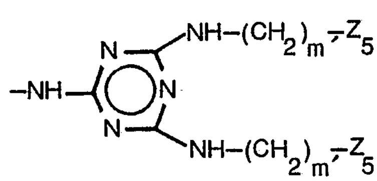 m' is 2 or 3;

$Z_5$ is

$-N(CH_3)_2$, $-N(C_2H_5)_2$, $-^{\oplus}N(CH_3)_3$ $A^{\ominus}$, 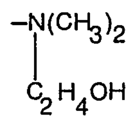 $A^{\ominus}$ or 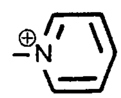 $A^{\ominus}$,

$K_6$ is

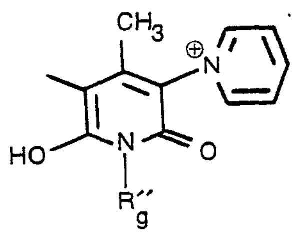 $A^{\ominus}$ IIIa$_1$

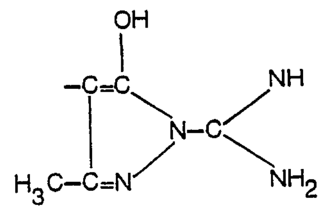 IIIb$_1$

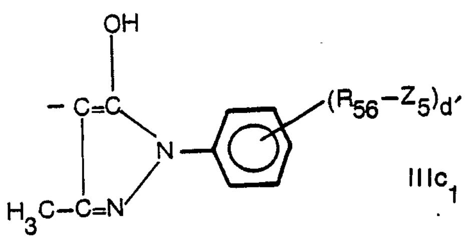 IIIc$_1$

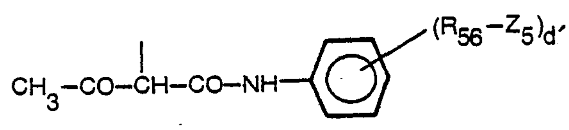 IIId$_1$

$R_{56}$ is

$-(CH_2)'_m-$, $-NH-CO-(\overset{*}{C}H_2)_a-$, $-CO-NH-(\overset{*}{C}H_2)_{m'}-$ or $-SO_2NH-(\overset{*}{C}H_2)_{m'}-$

where p″ is 2 or 3 and the starred C atoms are attached to the $Z_5$ group and all the other symbols are as above defined.

Preferred azo compounds of formula III in 1:1 metal complex form are of the formula IIIf

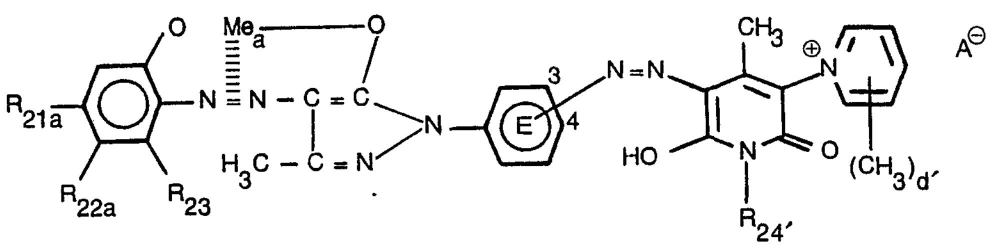 IIIf

in which

$R_{21a}$ is hydrogen, $-CH_2-Z_2$, $-NH-CO-(CH_2)_a-Z_2$, $-CO-CH_2-Z_2$, $-NO_2$, $-SO_2-NH_2$, $-CO-NH-(CH_2)_{m'}-Z_2$, $-SO_2-NH-(CH_2)_{m'}-Z_2$ or

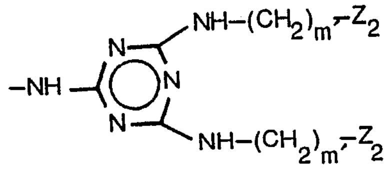 ;

$R_{22a}$ is hydrogen, $-NO_2$, $-SO_2-NH_2$, $-SO_2-NH-(CH_2)_2-OH$, $-CH_2-Z_2$, $-NH-CO-(CH_2)_a-Z_2$,

$-SO_2-NH-(CH_2)_{m'}-Z_2$ or 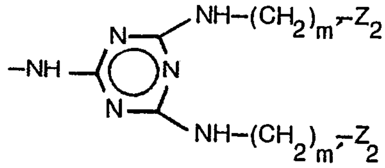 ;

$Me_a$ is copper, cobalt, iron or chromium;

$R_{24}'$ is hydrogen, $-N(CH_3)_2$, $-CH_3$, $-C_2H_5$, n$-C_3H_7$, n$-C_4H_9$, i$-C_3H_7$, i$-C_4H_9$, Benzyl, $-C_2H_4OH$,

$-(CH_2)_{m'}-Z_2$, $-CH_2-CH(CH_3)-N(CH_3)_2$ or $-CH_2-CH-(CH_3)_2-N-(CH_3)_2$;

m' is 2 or 3;

$Z_2-D_{10}-$ is

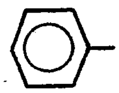 , 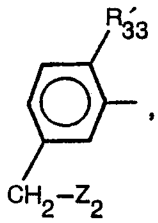 , 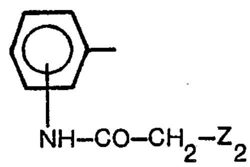 , 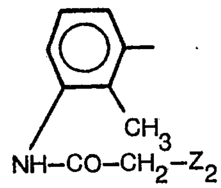 , 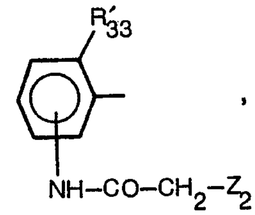 ,

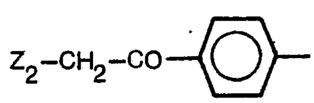 , 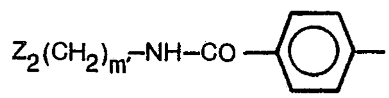 ,

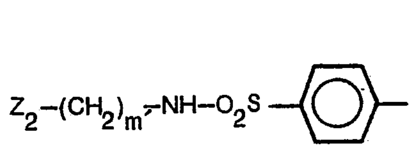 , 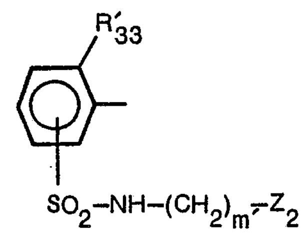

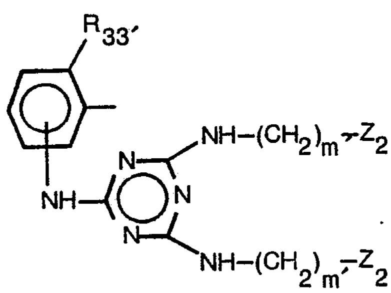 or 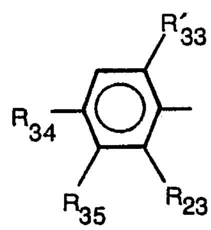 ,

and the other symbols are as defined above, with the provisos that

i) that in ring E the azo bridge is in the 3- or 4-position; and

ii) that $R_{21a}$ and $R_{22a}$ are not both $-NO_2$, or a compound of formula IIIg

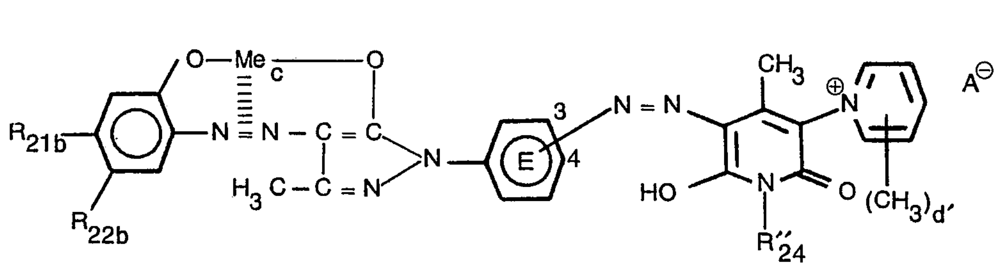

IIIg

in which

$R_{21b}$ and $R_{22b}$ are independently hydrogen, $-CH_2-Z_3$, $-NO_2$, $-SO_2-NH_2$, $-NH-CO-CH_2-Z_3$, $-SO_2-NH-(CH_2)_m-Z_3$ or

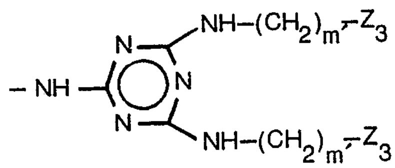

$R_{24}''$ is hydrogen, $-CH_3$, $-C_2H_5$, $-C_2H_4OH$ or $-(CH_2)_m-Z_3$;

$Z_3-D'_{10}-$ is

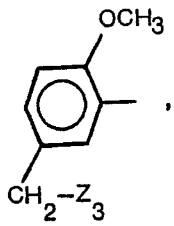 , 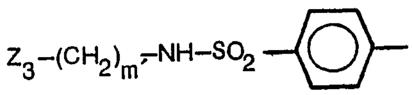 , 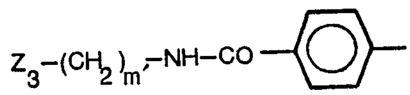 ,

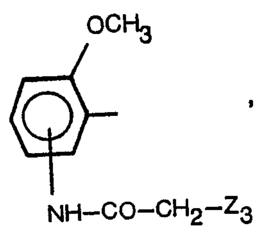 , 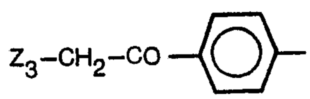 , 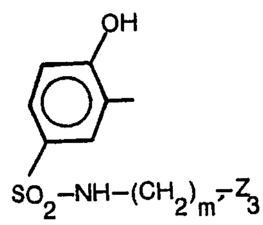

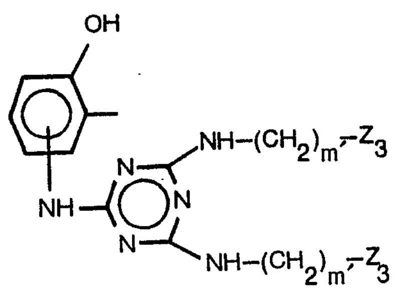 or 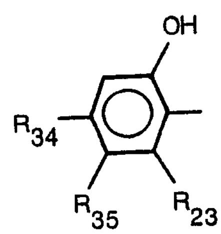

d' is defined above; and

$Me_c$ is copper, cobalt or chromium;

and all the other symbols are defined above, with the proviso

(i) that $R_{34}$ and $R_{35}$ are not both $-NO_2$,

(ii) that $R_{21b}$ and $R_{22b}$ are not both $-NO_2$;

More preferred azo compounds of formula IIIf are of the formula IIIh

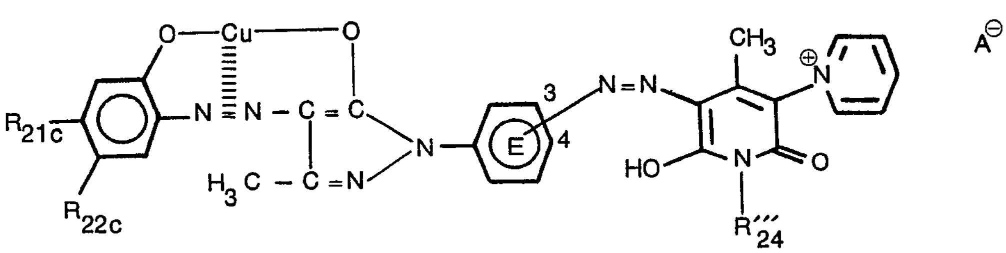 IIIh

in which

$R_{21c}$ and $R_{22c}$ independently are hydrogen, $-CH_2-Z_5$, $-NO_2$, $-SO_2-NH_2$, $-NH-CO-CH_2-Z_5$,

$—SO_2—NH—(CH_2)_{m'}—Z_5$ or 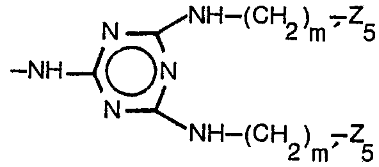

$R_{24}'''$ is hydrogen, $C_2H_4OH$, $—(CH_2)_3$, $—N(CH_3)_2$ $—(CH_2)_3—N(C_2H_5)_2$ or $—(CH_2)_3—\overset{\oplus}{N}(CH_3)_3\ A^{\ominus}$

and all other symbols are as defined above, with the proviso that $R_{21c}$ and $R_{22c}$ are not both $—NO_2$.

Alternatively preferred compounds of formula III in 1:1 metal complex form are of the formula IIIi and IIIj

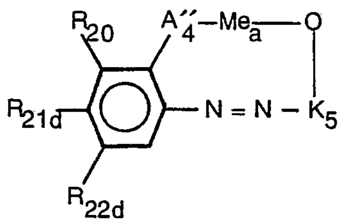
IIIi

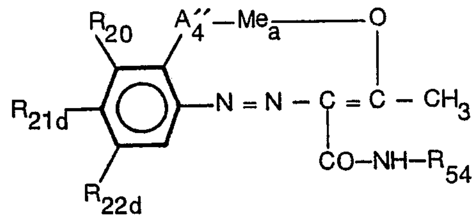
IIIj

in which

$A_4''$ is —O— or —COO—,

$—K_5—O—$ is one of the following formulae IIIba to IIIbf

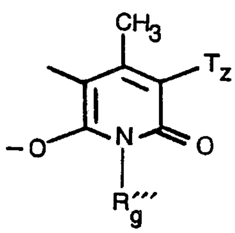
IIIba

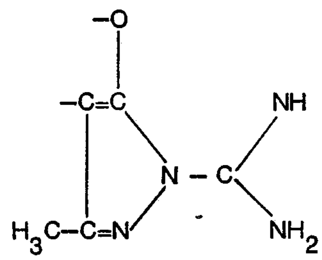
IIIbb

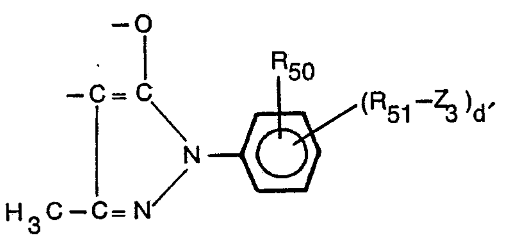
IIIbc

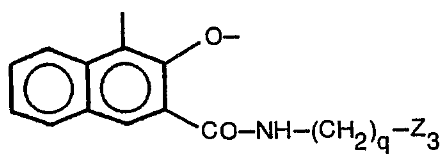
IIIbd

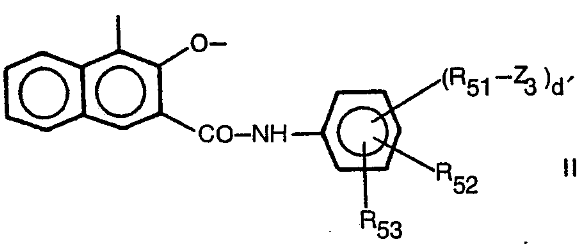
IIIbe

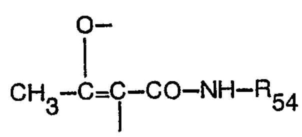
IIIbf

$R_{20}$ is defined above;

$R_{21d}$ is hydrogen, $—NO_2$, $—NH—CO—(CH_2)_q—Z_3$, $—CH_2—Z_3$, $—SO_2—NH_2$, $—SO_2—NH—(CH_2)_q—Z_3$,

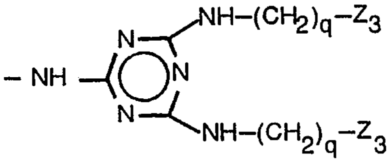 or $CO—NH—(CH_2)_q—Z_3$,

$R_{22d}$ is hydrogen,

$$—CH_2Z_3, —SO_2—N(CH_3)_2, —NO_2, —SO_2—NH—(CH_2)_q—OH,$$

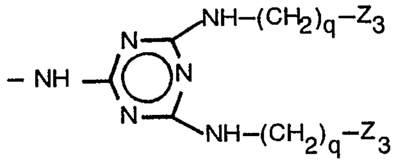 $—SO_2—NH—(CH_2)_q—Z_3.$

Preferred compounds of formula IIIi or IIIj in 1:1 metal complex form are of the formula IIIk or IIIl

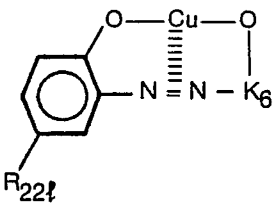 IIIk

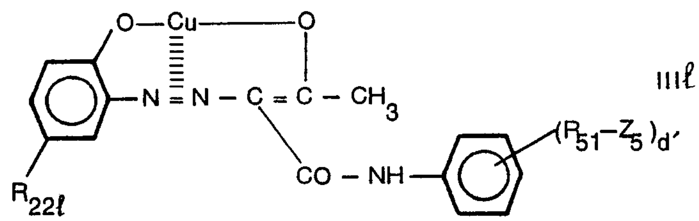 IIIℓ

in which $—O—K_6—$ is

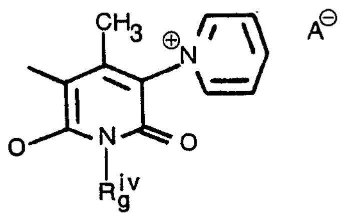 IIIca

or groups IIIbb or IIIbc are above defined where $R_g^{iv}$ is hydrogen, $—CH_3$ or $—(CH_2)_2—Z_5$, and the other symbols are as defined above.

Preferably $Me_g$ is iron.

$$—CO—NH—(CH_2)_q—Z_3 \text{ or } —NH—CO—(CH_2)_q—Z_3,$$

$R_{51}$ is

$$—(CH_2)_q—, —NH—CO—(\overset{*}{C}H_2)_q—, —CO—NH—(\overset{*}{C}H_2)_q— \text{ or } —SO_2—NH—(\overset{*}{C}H_2)_q—;$$

$R_{52}$ is hydrogen, $—Cl$, $—Br$, $—CH_3$ or $—OCH_3$;
$R_{53}$ is hydrogen, $—NH—(CH_2)_q—Z_3$, $—NH—C_2H_4OH$, $—Cl$, $—Br$, $—CH_3$, or $OCH_3$;
$R_{54}$ is hydrogen,

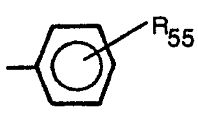 , 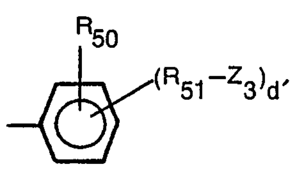 or 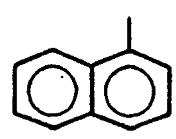

$Z_3$ is

$-N(CH_3)_2$, $-\overset{\oplus}{N}(CH_3)_3$ $A^{\ominus}$, 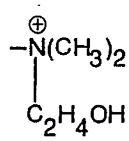 $A^{\ominus}$ 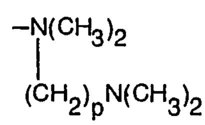

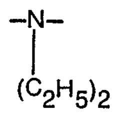 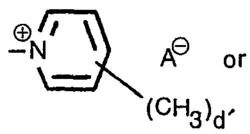 or 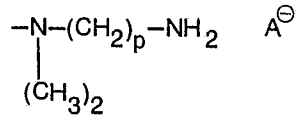

where $-D_1-Z_3$ has the significances of $-D_1-Z_2$ except $Z_2$ is replaced by $Z_3$

$R_g'''$ is hydrogen,

$CH_3$, $-C_2H_5$, $i-C_3H_7$, $i-C_4H_9$, $n-C_3H_7$, $n-C_4H_9$, $-C_2H_4OH$, $-(CH_2)_q-Z_3$; q is 1, 2, 3 or 4,

and the other symbols are as defined above.

Preferred azo compounds of formula III in 1:2 metal complex form are symmetric or asymmetric and are of the formula IIIm

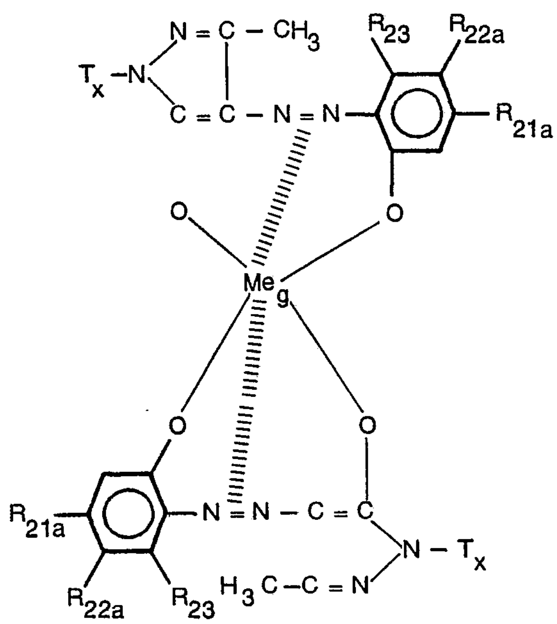

IIIm

in which $T_x$, independently, is

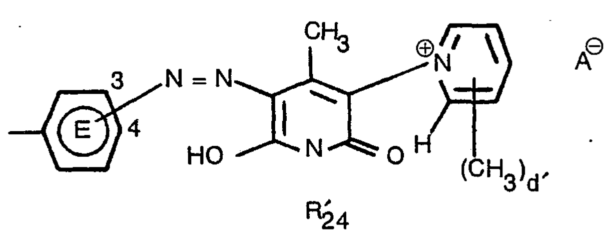

in which $Me_g$ is chromium, iron or cobalt; preferably iron; and all the other symbols are as defined above with the provisos

i) that in ring E the azo bridge is in the 3- or 4-position and

ii) that $R_{21a}$ and $R_{22a}$ are not both $-NO_2$.

Preferred azo compounds of formula IIIm are of the formula IIIn

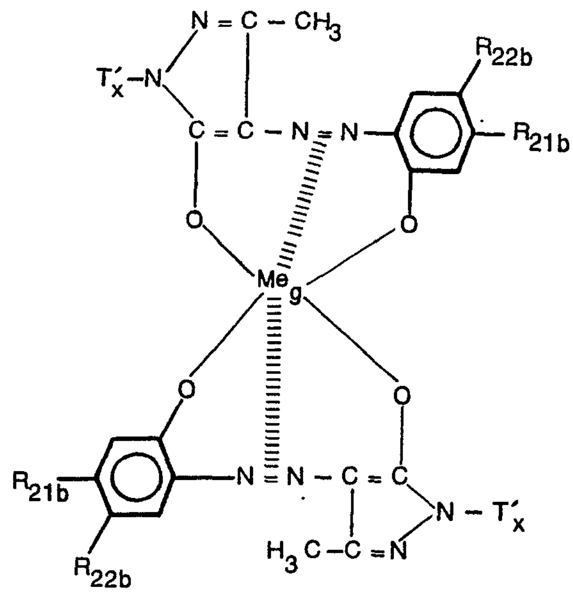

IIIn

in which each $T'_x$ independently is

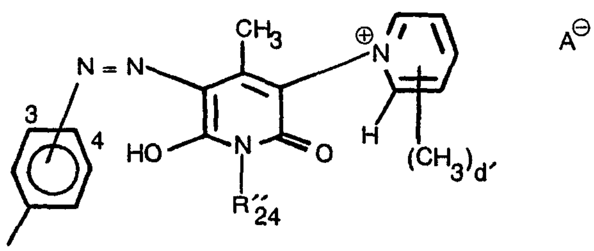

and all the other symbols are as defined above with the proviso that $R_{21b}$ and $R_{22b}$ are not both $-NO_2$.

More preferred azo compounds of formula IIIm are of the formula IIIo

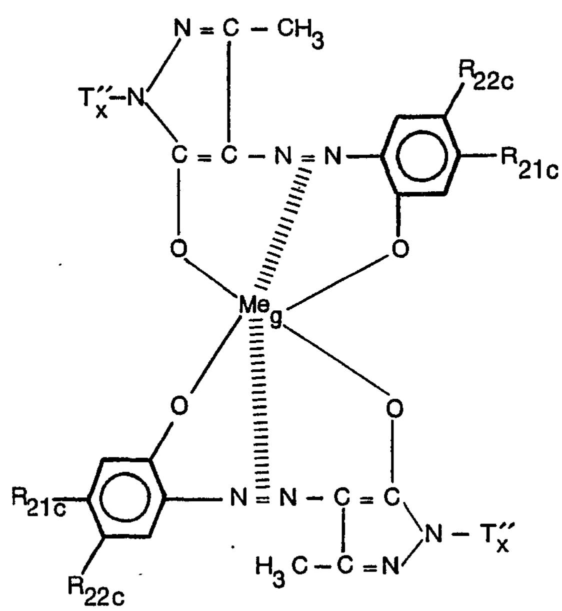

IIIo

in which each $T_x''$ independently is

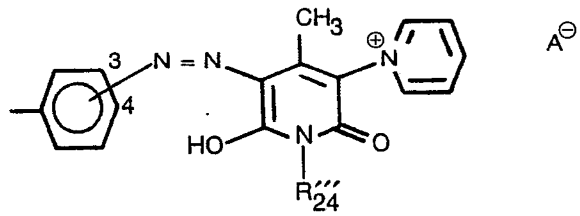

in which all the other symbols are as defined above with the proviso that $R_{21c}$ and $R_{22c}$ are not both $—NO_2$.

Alternatively preferred azo compounds in 1:2 metal complex form are of the formula $III_p$ or $III_q$

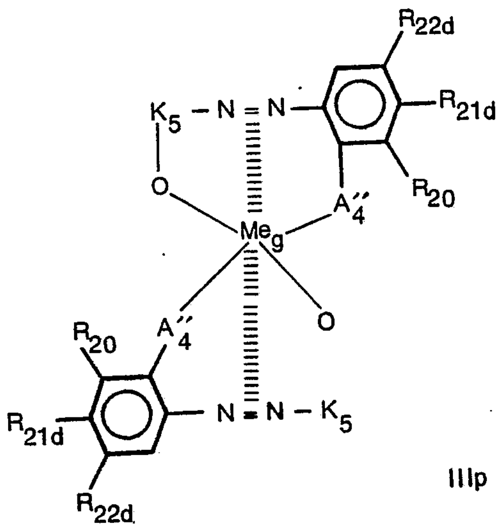

IIIp

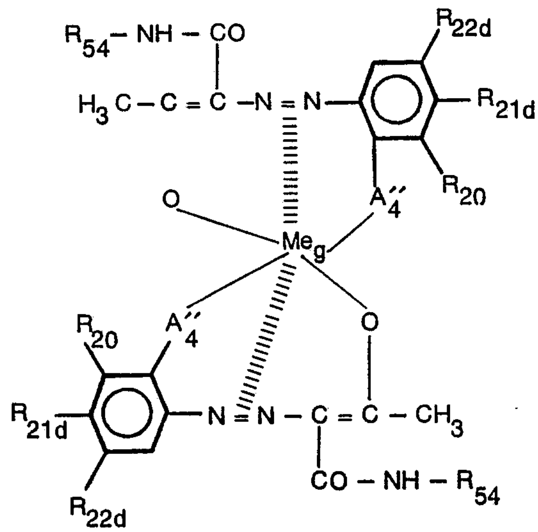

IIIq

in which all the symbols are as defined above.

More preferred azo compounds of formula IIIp or IIIq are of the formula IIIr or IIIs

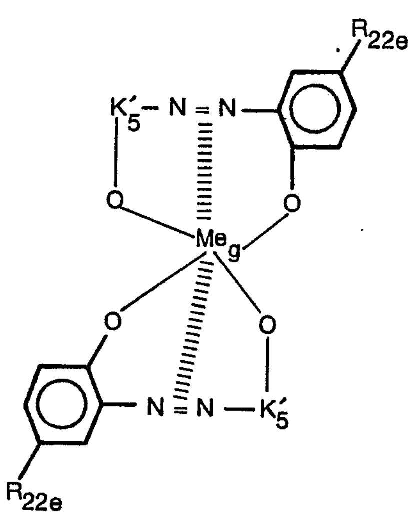

IIIr

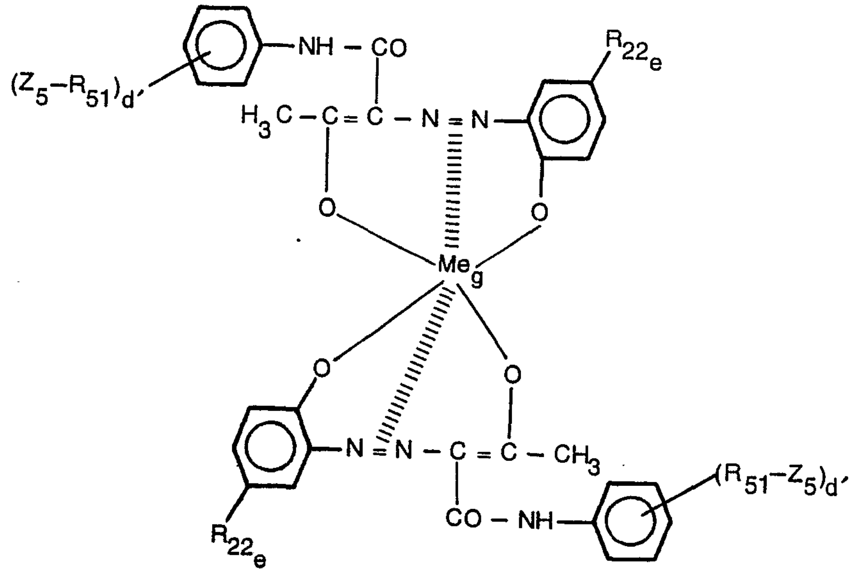

IIIs

in which $K_5'$—O— has the significances of IIIba, IIIbb or IIIbc of $K_5$—O— above and all the other symbols are as defined above.

The azo compounds of formula I in metal free form can be prepared by coupling a diazotised amine of formula γ

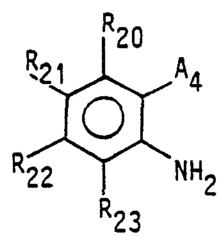

γ

with a coupling component of the formula δ

$K_2$—H δ and

where the symbols are as defined above in the case of the metal complexes metallising with a metal capable of forming a 1:1 or 1:2 metal complex or capable of forming both a 1:1 and 1:2 metal complex. For example the azo compounds of formula I in metal free form can be formed by diazotising a corresponding arylamine and coupling with the requisite coupling component by conventional methods.

The azo compounds of formula I in 1:1 metal complex form may be prepared by metallising compounds of formula I in metal free form with a metal selected from copper, cobalt, iron, nickel, manganese, chromium or zinc.

The azo compounds of formula I in 1:2 metal complex form may be prepared by metallising compounds of formula I in metal free form with a metal selected from chromium, nickel, cobalt or iron.

A further method for the preparation of an azo compound of formula I in 1:2 metal complex form is bonding an azo compound of formula I in metal free form with an azo compound 1:1 metal complex form when the metal is chromium, nickel, cobalt or iron.

The metallisation process to form a 1:1 metal complex is advantageously carried out by treating 1 mole of azo compounds with a metallising agent containing 1 equivalent of metal.

Metallisation is carried out by known methods advantageously in aqueous medium or a mixture of water and a water-miscible organic solvent for example acetone, lower alkyl alcohols, dimethylformamide, formamide, glycols or acetic acid at a pH range from 1.0 to 8.0, preferably pH 2 to 7. The metallisation process may be carried out at a temperature from room temperature to the boiling point of the reaction medium.

Alternatively metallisation may be effected in a wholly organic medium (for example dimethylformamide). Advantageously for instance cobaltisation may be carried out in the presence of an inorganic nitrite

such as lithium, sodium, ammonium or potassium nitrite in the ratio of 2 to 6 moles of nitrite per gram atom of cobalt.

Suitable cobalt-yielding compounds are for example cobalt (II) or Co (III) sulphate, acetate, formate or chloride.

Copper-yielding compounds are for example cupric sulphate, cupric formate, cupric acetate or cupric chloride.

The nickel-yielding compounds are Ni (II) or Ni (III) compounds, such as nickel formate, nickel acetate or nickel sulphate.

Preferred manganese yielding compounds are Mn (II) compounds and iron yielding compounds are Fe (II) or Fe (III) compounds. Examples of these and zinc-yielding compounds are manganese-, iron- or zinc formate, acetate or sulphate.

Preferred chromium yielding compounds are Cr (II) or Cr(III) formate, acetate or sulphate.

The starting compounds of formula γ and δ are for the most part known or can be prepared according to known methods.

The coupling can be carried out according to known methods. Advantageously coupling is carried out in aqueous, acid, neutral or alkali medium at a temperature from −10°C to room temperature, if necessary in the presence of a coupling accelerator such as pyridine or urea. Alternatively, coupling may be effected in a mixture of solvents for example water and organic solvent.

In the compounds of the invention the anion $A^{\ominus}$ can be any non-chromophoric anion conventional in basic dyestuff chemistry. Suitable anions include such as chloride and bromide, sulphate, bisulphate, methylsulphate, aminosulphonate, perchlorate, benzosulphonate, oxalate, maleinate, acetate, propionate, lactate, succinate, tartrate, malate, methanesulphonate and benzoate, as well as complex anions for example zinc chloride double salts and anions of boric acid, citric acid, glycollic acid, diglycollic acid and adipic acid or of addition products of orthoboric acid with polyalcohols with at least an cis diol group present. These anions can be exchanged for each other by ion exchange resins or by reaction with acids or salts (for example via the hydroxide or bicarbonate or according to German Offenlegungsschrift 2 001 748 or 2 001 816).

The compounds according to the invention are suitably worked up into a solid or liquid preparation for example by granulation or by dissolving in a suitable solvent. The compounds of the invention are suitable for dyeing, padding or printing on fibres, threads or textile materials paticularly matural or regenerated cellulose materials for example cotton, synthetic polyamides or synthetic polyesters in which the acid groups have been modified. Such polyamide is described in Belgian Patent 706,104 and such synthetic polyester is described in US Patent 3 379 723.

The new compounds are also used for dyeing, pad-dyeing or printing fibres, threads or textiles produced therefrom, which consist of or contain homo- or mixed polymers of acrylonitrile or of asymmetrical dicyanoethylene.

The textile material is dyed, printed or pad-dyed in accordance with known methods. Acid modified polyamide is dyed particularly advantageously in an aqueous, neutral or acid medium, at temperatures of 60°C to boiling point or at temperatures of above 100°C under pressure.

The textile material may also be dyed by the compounds of formula I in organic solvents, e.g. in accordance with the directions given in German DOS 2 437 549.

Cellulose material is mainly dyed by the exhaust process, e.g. from a long or short bath, at room temperature to boiling temperature, optionally under pressure, whereby the ratio of the bath is from 1:1 to 1:100, and preferably from 1:20 to 1:50. If dyeing is effected from a short bath, then the liquor ratio is 1:5 to 1:15, and the pH value of the dye baths varies between 3 and 10. Dyeing preferably takes place in the presence of electrolytes.

Printing may be effected by impregnation with a printing paste produced by known methods.

The dyestuffs are also suitable for dyeing or printing paper, e.g. for the production of bulk-dyed, sized and unsized paper. The dyestuffs may similarly be used for dyeing paper by the dipping process. The dyeing of paper is effected by known methods.

The new dyestuffs are also suitable for dyeing or printing leather by known methods. Dyeings with good fastness are obtained both on paper and on leather.

Dyeings made from the new compounds on leather have good light fastness properties, good diffusion properties, with PVC, good water-wash and sweat properties, good fastness to dry cleaning, good fastness to drops of water, good fastness to hard water.

Dyeings made from the new compounds on paper have good build-up, good light fastness, good fastness to water, milk, fruit juice, sweetened mineral water and alcoholic drinks, good fastness to 1% sodium chloride, washing powder solution, good sulphite reductive or oxidative (with hypochlorite) clearance and good fastness to hard water. Dyeings made from mixtures of the new dyestuffs remain tone-in-tone and the nuance stability of dyeings made from the dyestuffs is good.

Further the dyestuffs of the invention do not run after dyeing on paper nor on the whole are they pH sensitive.

The new compounds may be converted into dyeing preparations. The processing into stable, liquid or solid dyeing preparations may take place in a generally known manner. Advantageously by grinding or granulating, or by dissolving in suitable solvents, optionally adding an assistant, e.g. a stabiliser or

dissolving intermediary, such as urea. Such preparations may be obtained for example as described in French Patent Specifications 1.572.030 and 1.581.900 or in accordance with German DOS 2.001.748 and 2.001.816.

Liquid preparations of the compounds of formula I preferably comprise 10—30% by weight of a compound of formula I and to 30% of a solubilising agent such as urea, lactic acid or acetic acid the rest of the composition being water. Solid preparations preferably comprising 20—80% dyestuff, 80—20% solubilising agent such as urea or $Na_2SO_4$ and 2—5% water.

In the following examples all parts and percentages given are by weight and the temperatures given ARE in degrees centigrade unless indicated to the contrary.

Example 1

a) 27.3 Parts (0.1 mole) of 1-hydroxy-2-amino-benzol-4-sulphonic acid dimethylaminopropylamide is diazotised at 0—5° in 150 parts of water, 32 parts of 30% hydrochloric acid with 6.9 parts (0.1 mole) sodium nitrite (according to known methods). Over an hour the darkly coloured diazonium solution is added, dropwise, to 18.9 parts (0.1 mole) 4-aminophenyl-3-methyl pyrazolone dissolved in 105 parts of water and 25 parts of 30% hydrochloric acid. The mixture is slowly brought to a pH of 4.0 by the addition of 30% sodium hydroxide. The dyestuff so produced is of the formula a)

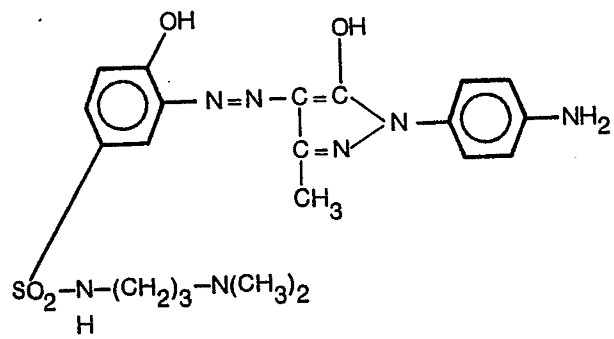

a)

which produces dyeings of a yellow shade.

b) A strongly acid solution of the monoazo dyestuff is made up with a 30% solution of hydrochloric acid and is then diazotised with 6.9 parts of sodium nitrite according to known methods. Over a period of 15 minutes the solution is added, dropwise, to 32.4 parts (0.1 mole) of 6-hydroxy-4-methyl-1-dimethyl-aminopropyl-pyridonyl-(3)-pyridinium chloride dissolved in 250 parts of water.

The pH of the solution is then brought to 6.5 using a sodium hydroxide solution and the reaction mixture concentrated by evaporation under vacuum. The resultant dyestuff is of formula b)

b)

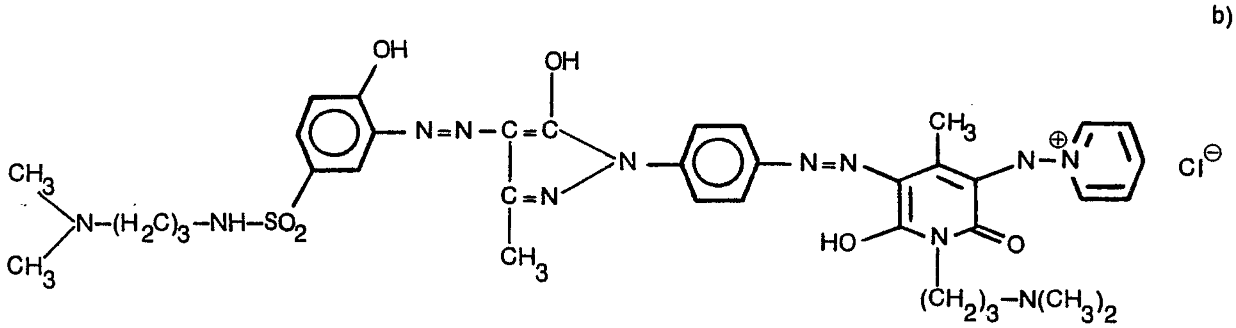

which dyes leather a red/orange colour.

c) 40.4 Parts (1/20 mole) of the dyestuff b) above is dissolved in 200 parts of water at 65°C and the solution is made up with 8 parts of sodium acetate. A solution of 12.5 parts of copper sulphate in water is added, dropwise, to the solution and the resulting solution has a pH of 4.5 to 5. After 30 minutes stirring at 60°C the reaction mixture is concentrated by evaporation under vacuum. A 1:1 copper complex of formula c)

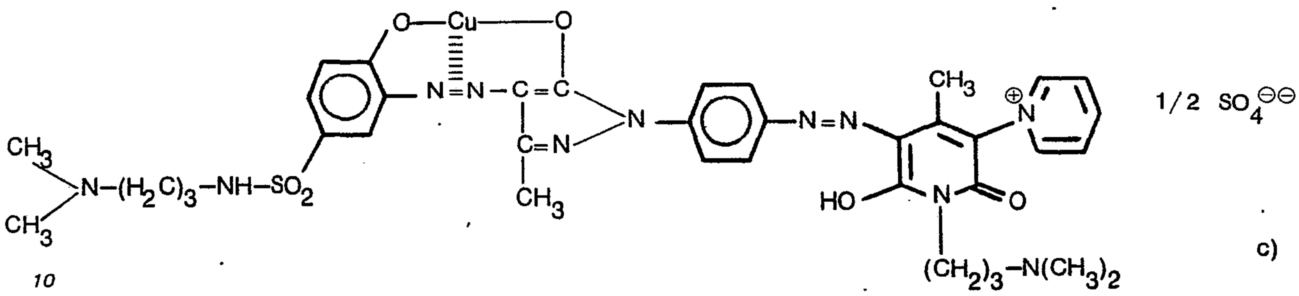

c)

is produced which dyes leather a red-brown tone and has good fastness properties.

Example 2

103.2 Parts (0.15 mole) of a dyestuff of formula d)

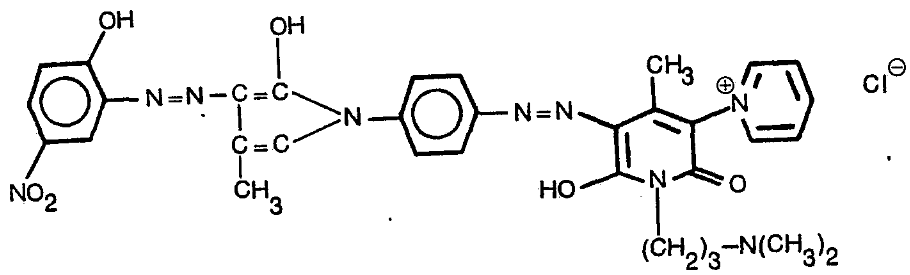

d)

and 82.7 parts of $KCr(SO_4)_2$ $12H_2O$ are autoclaved with 1500 parts of water. The mixture is brought to a pH of 2 by the addition of sulphuric acid. The mixture is heated for 2 hours at a temperature of 130°C and the 1:1 chromium complex is formed under pressure. The so-formed complex dyes leather a brown shade and has good fastness properties.

Example 3

7 Parts of $CoSO_4$ $7H_2O$ (1/40 mole) and 10.5 parts of sodium nitrite are dissolved in 250 parts of water. At a temperature of 10°C, 17.2 parts (1/40 mole) of the dyestuff of formula d) above is added to the solution. To improve the solubility of the dyestuff 50 parts of dimethylformamide is added to the reaction mixture. The pH of the reaction solution is brought to 5.0—5.5 by the addition of hydrochloric acid. After about 3 hours cobaltisation is substantially completed and a 1:1 cobalt complex of the compound of formula d) above is formed and is isolated using acetone.

Example 4

40.4 Parts (1/20 mole) of the dyestuff of formula b) [of Example 1] is dissolved in 500 parts of water. The solution is heated to 60°C and 35 parts of sodium acetate and 12.5 parts (1/40 mole) of $KCr(SO_4)_2$ $12H_2O$ is added to the solution. The pH of the reaction mixture is about 4.5. The temperature of the reaction mixture is raised to 90—95°C and after 1 hour metalisation is substantially completed. The reaction mixture is cooled to 20°C and the product is isolated in acetone after which the product is filtered and dried. The product is a dyestuff of the formula e)

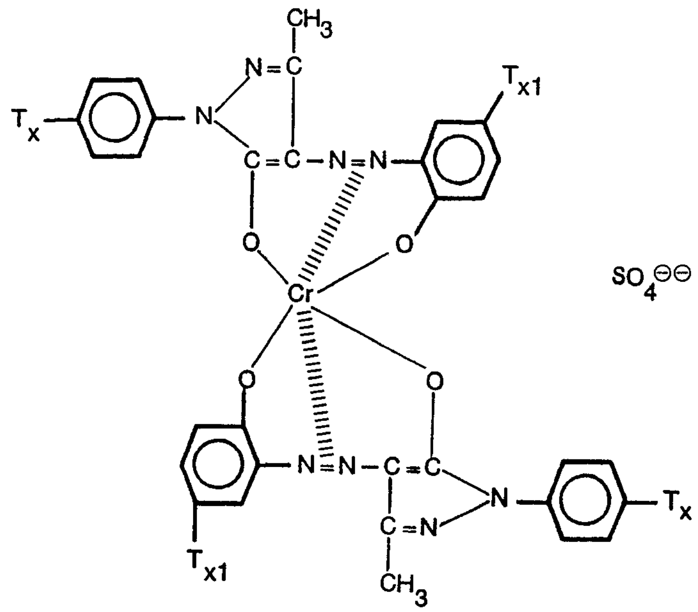

$SO_4^{\ominus\ominus}$

e)

in which $T_x$ is

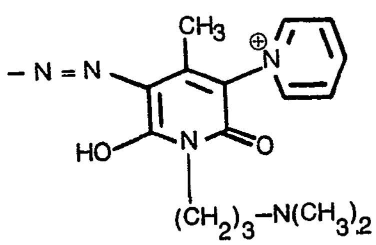

$A^{\ominus}$

and $T_{x1}$ is $—SO_2—NH—(CH_2)_3—N(CH_3)_2$.

The dyestuff dyes leather a red brown colour with good fastness properties.

By substituting 7 parts cobalt sulphate (1/40 mole) or 6.8 parts of $FeCl_3$ $6H_2O$ (1/40 mole) for 12.5 parts of $KCr(SO_4)_2$ $12H_2O$ the corresponding 1:1 cobalt and iron complexes respectively can be produced.

## Example 5

According to the method of Exámple 1a) and 1b) and with subsequent cobaltisation (with cobalt sulphate) a compound of formula f) is produced

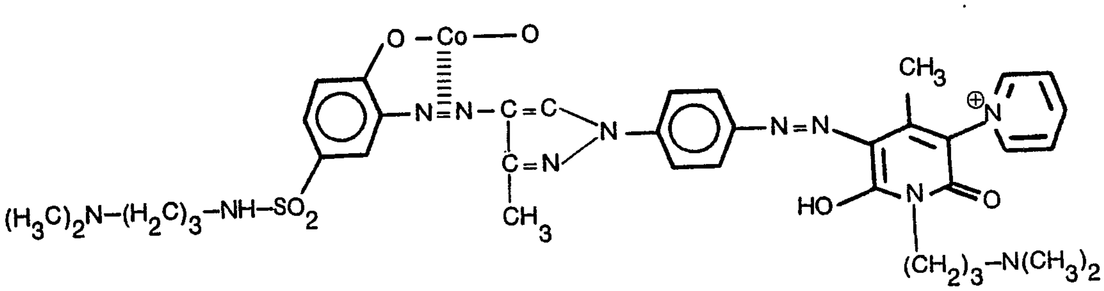

$Cl^{\ominus}$

f)

8.3 parts of the above dyestuff f) in 150 parts of water is heated to 85°C. 8 Parts of a dyestuff of the formula g) (1/10 mole)

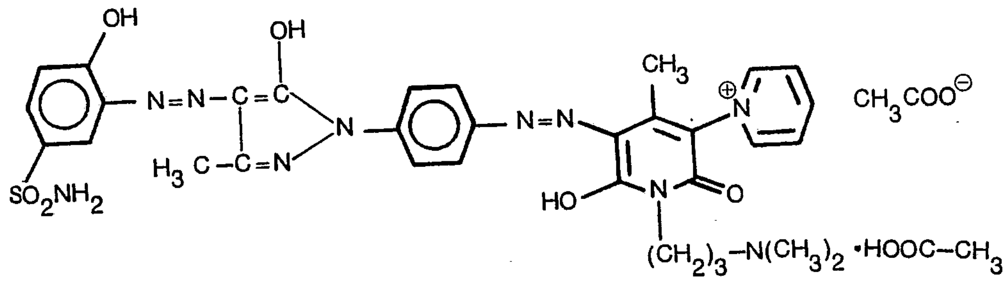

g)

is added gradually. The pH of the reaction is held at 9 by the addition of aqueous sodium hydroxide solution. After 3 hours an asymmetric 1:2 cobalt complex dyestuff of formula h)

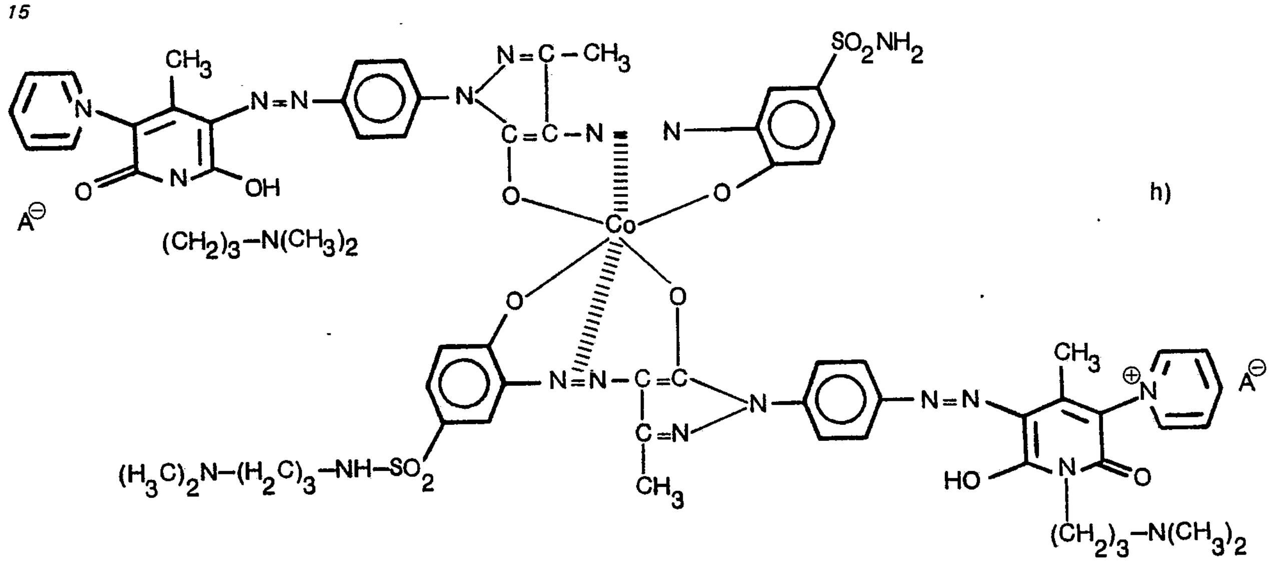

h)

is produced which is isolated in acetone, washed and vacuum dried. This dyestuff of formula h) dyes leather a red brown colour.

In the following Examples symbols are selected from:

Za is $-\overset{\oplus}{N}(CH_3)_3$ $A^{\ominus}$

Zb is $-\overset{\oplus}{N}(C_2H_5)_3$ $A^{\ominus}$

Zc is 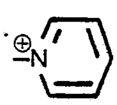 $A^{\ominus}$

Zd is 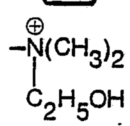 $A^{\ominus}$

Ze is 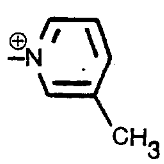 $A^{\ominus}$;

Zf is 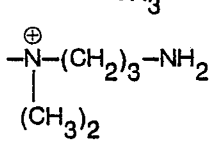 $A^{\ominus}$,

Zg is 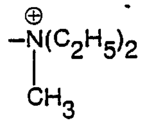 $A^{\ominus}$ ;

R300 is 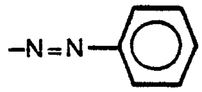 ;

R301 is 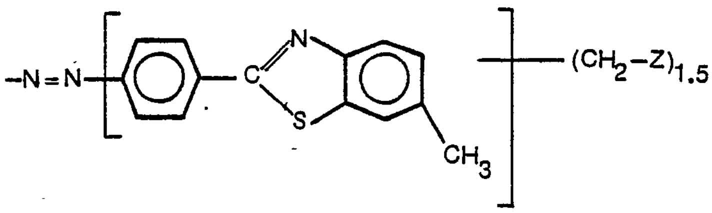 ;

R302 is 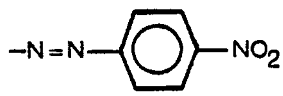 ;

R303 is 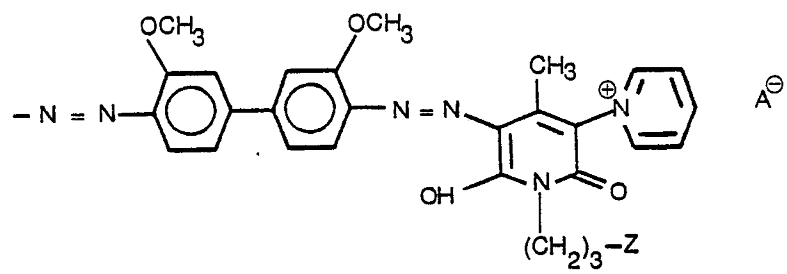 $A^{\ominus}$ ;

R304 is 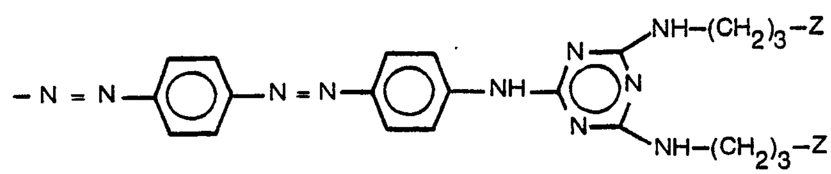 ;

R305 is 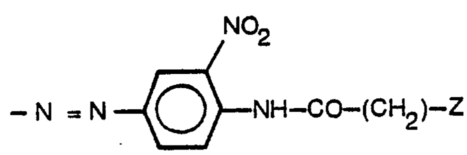 ;

R306 is 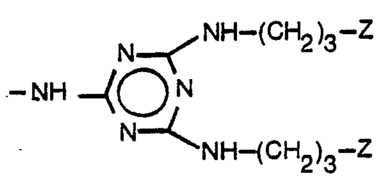 ;

R307 is 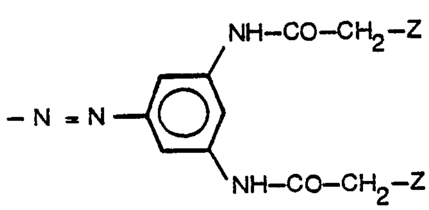 ;

R308 is 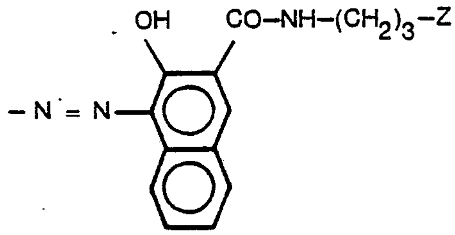 ;

R309 is 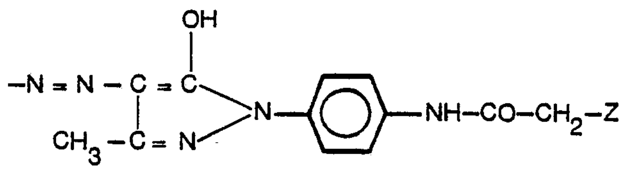 ;

R310 is 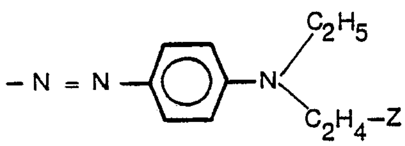 ;

R311 is 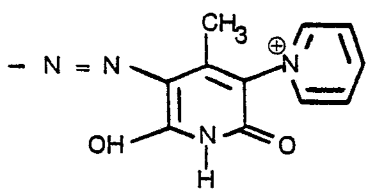 ;

R312 is $-NH-CO-(CH_2)-Z$ ;

R313 is $-SO_2-NH-(CH_2)_3-Z$ ;

R314 is 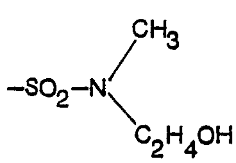 ;

$K_{10}$ is 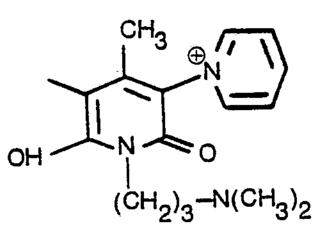 $A^{\ominus}$ ;

$K_{11}$ is 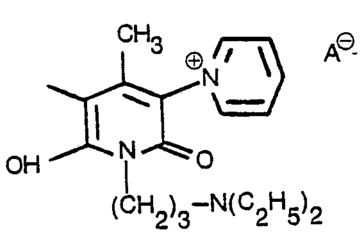 $A^{\ominus}$ ;

$K_{12}$ is 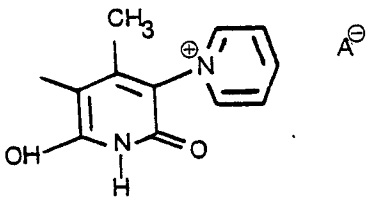 ;

$K_{13}$ is 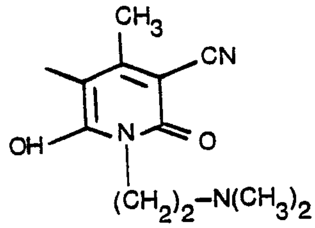 ;

$K_{14}$ is 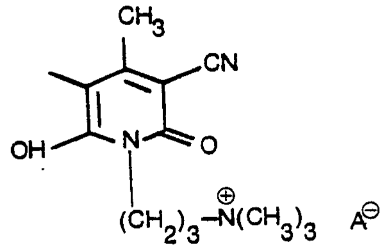 ;

$K_{15}$ is 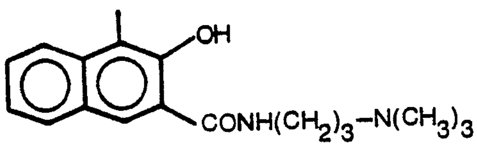 ;

$K_{16}$ is 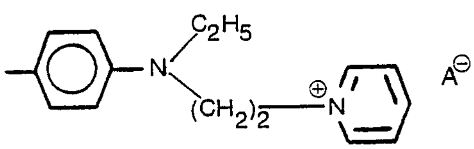 ;

$K_{17}$ is 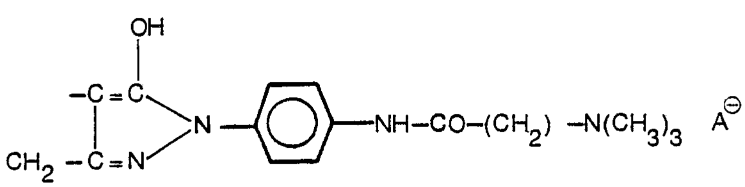 ;

$K_{18}$ is 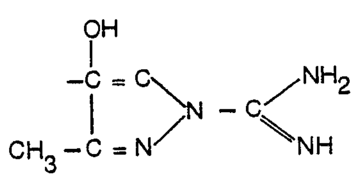 ;

$K_{19}$ is $CH_3-CO-CH-CO-NH-CH_2-N^{\oplus}-(CH_3)_3$ $A^{\ominus}$ ;

$K_{20}$ is 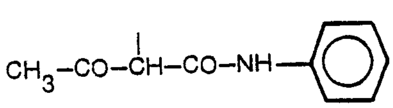 ;

$R_{317}$ is 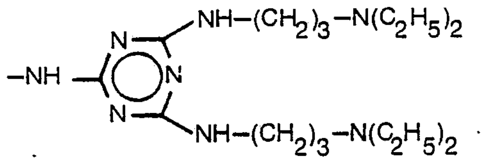 ;

$R_{318}$ is $-SO_2-NH-(CH_2)_3-\overset{\oplus}{N}(C_2H_5)_3$ $A^{\ominus}$ ;

$R_{319}$ is $-CO-NH-(CH_2)_3-\overset{\oplus}{N}(CH_3)_3$ $A^{\ominus}$

$R_{320}$ is $-NH-CO-(CH_2)_2-\overset{\oplus}{N}(CH_3)_2$ $A^{\ominus}$
$\qquad\qquad\qquad\qquad |$
$\qquad\qquad\qquad\quad C_2H_4OH$

$R_{321}$ is 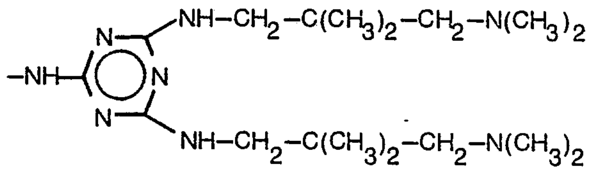 ;

$R_{322}$ is $-CH_2N(CH_3)_3$ $A^{\ominus}$ ; $R_{323}$ is $-NH-CO-(CH_2)-N(CH_3)_2$ ;

Examples 6 to 16

The following Examples are compounds of the formula III

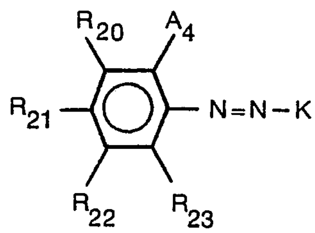

III

| Example No. | $R_{20}$ | $R_{21}$ | $R_{22}$ | $R_{23}$ | K | metal complex | $A_4$ |
|---|---|---|---|---|---|---|---|
| 6 | H | H | H | H | $K_{10}$ | — | OH |
| 7 | $NO_2$ | H | $SO_2NH_2$ | H | $K_{11}$ | 1:1 Cu | OH |
| 8 | H | $R_{317}$ | H | H | $K_{12}$ | 1:2 Co | $OCH_3$ |
| 9 | H | $R_{318}$ | H | H | $K_{13}$ | — | COOH |
| 10 | H | $R_{319}$ | $R_{320}$ | H | $K_{14}$ | 1:1 Cu | OH |
| 11 | H | $R_{320}$ | $R_{319}$ | H | $K_{15}$ | 1:2 Fe | OH |
| 12 | H | $R_{321}$ | H | H | $K_{16}$ | — | OH |
| 13 | H | H | $R_{321}$ | H | $K_{17}$ | 1:1 Cu | OH |
| 14 | H | $R_{322}$ | H | $-CH_3$ | $K_{18}$ | — | OH |
| 15 | H | $R_{320}$ | H | H | $K_{19}$ | 1:1 Cu | OH |
| 16 | H | H | $R_{320}$ | H | $K_{20}$ | 1:2 Cr | OH |

Examples 17—160

The following Examples are of the formula

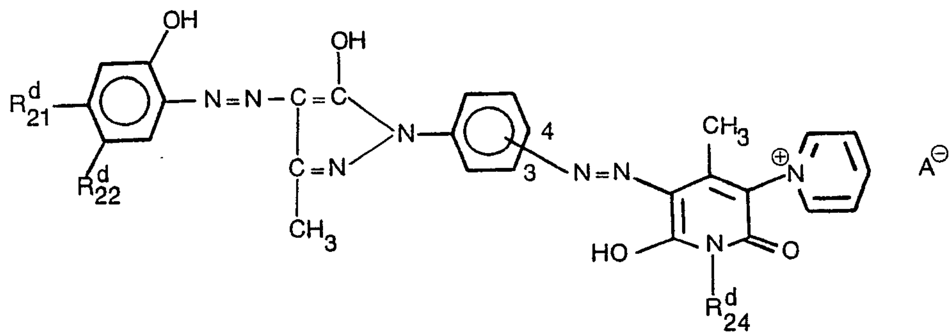

and can be prepared by following the method of Example 1 (and where 1:2 metallisation is carried out of Example 5) using a suitable choice of starting materials.

| Ex. No. | $R^d_{21}$ | $R^d_{22}$ | $R^d_{24}$ | substitution position | metal complex |
|---|---|---|---|---|---|
| 17 | H | H | $-(CH_2)_3-N(CH_3)_2$ | 4 | — |
| 18 | H | H | " | 4 | 1:1 Cu |
| 19 | H | H | " | 4 | 1:2 Fe |
| 20 | H | $-SO_2-\underset{H}{N}-(CH_2)_3-N(CH_3)_2$ | H | 4 | — |
| 21 | H | " | H | 4 | 1:1 Cu |
| 22 | H | " | H | 4 | 1:2 Fe |
| 23 | H | $NO_2$ | $-(CH_2)_3-N(CH_3)_2$ | 4 | — |
| 24 | H | " | " | 4 | 1:1 Cu |
| 25 | H | " | " | 4 | 1:2 Cr |
| 26 | H | " | " | 4 | 1:2 Fe |
| 27 | $NO_2$ | H | " | 4 | — |
| 28 | " | H | " | 4 | 1:2 Fe |
| 29 | H | $-SO_2\underset{H}{N}(CH_2)_3N(CH_3)_2$ | " | 3 | — |
| 30 | H | " | " | 3 | 1:1 Cu |
| Ex. No. | $R^d_{21}$ | $R^d_{22}$ | $R^d_{24}$ | substitution position | metal complex |
| 31 | H | $-SO_2\underset{H}{N}(CH_2)_3N(CH_3)_2$ | H | 3 | — |
| 32 | H | " | H | 3 | 1:1 Cu |
| 33 | H | " | H | 3 | 1:2 Fe |

| Ex. No. | $R^d_{21}$ | $R^d_{22}$ | $R^d_{24}$ | substitution position | metal complex |
|---|---|---|---|---|---|
| 34 | H | 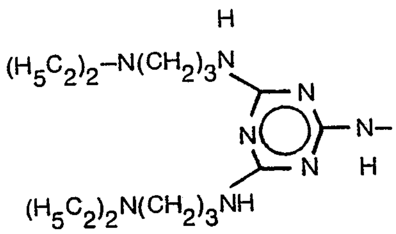 | H | 3 | — |
| 35 | H | " | H | 3 | 1:1 Cu |
| 36 | H | " | H | 3 | 1:2 Cr |
| 37 | H | $NO_2$ | $(CH_2)_3N(CH_3)_2$ | 3 | — |
| 38 | H | " | " | 3 | 1:1 Cu |
| 39 | H | " | " | 3 | 1:2 Co |
| 40 | H | " | " | 3 | 1:2 Fe |
| 41 | H | $-SO_2NH_2$ | " | 3 | 1:2 Fe |
| 42 | $NO_2$ | H | " | 3 | 1:1 Cu |
| 43 | " | H | " | 3 | 1:2 Co |
| 44 | " | H | " | 3 | 1:2 Fe |
| 45 | H | $NO_2$ | " | 4 | 1:1 Co |
| 46 | H | " | " | 4 | 1:1 Cr |

Example 47

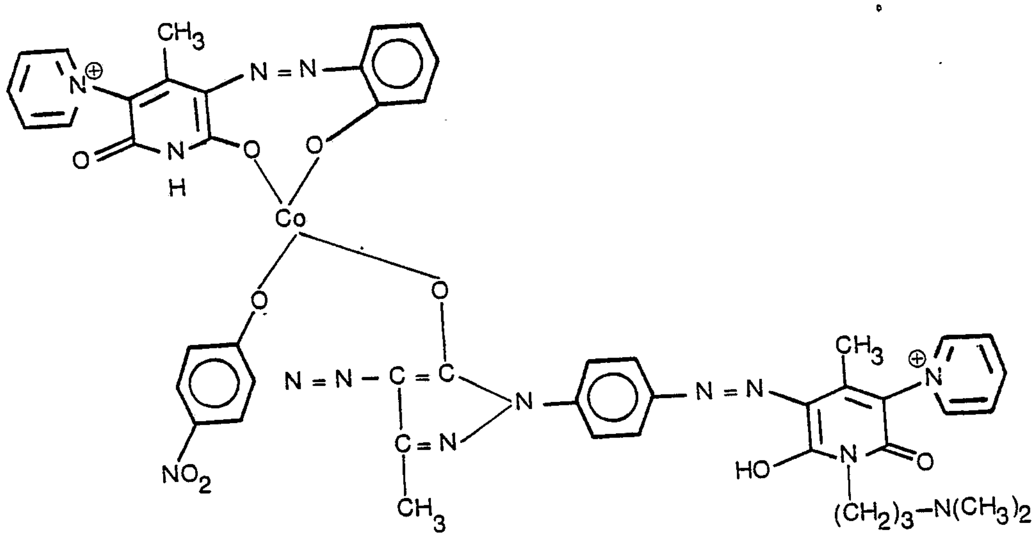

Examples 48—60

The following compounds can be made according to Example 1 (or where 1:2 metallisation is carried out according to Example 5) by suitable choice of starting materials.

Example 48

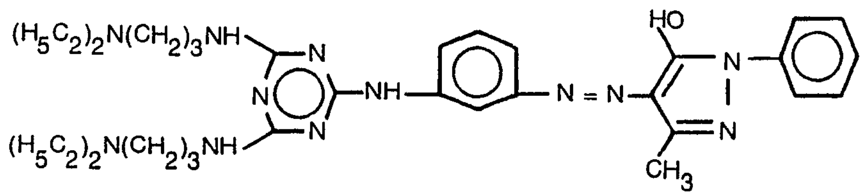

Example 49

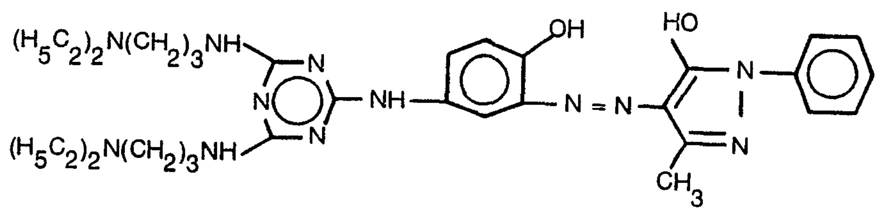

Example 50

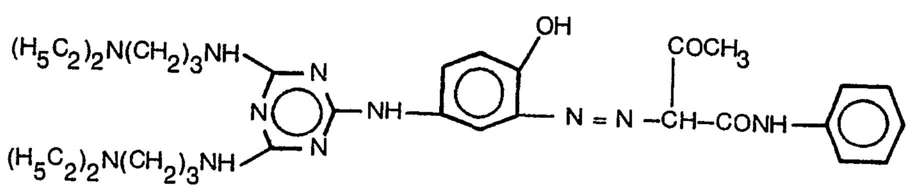

Example 51

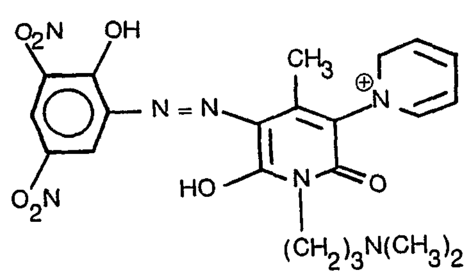

Example 52

1:1 Cu-complex from Example 48.

Example 53

1:1 Cu-complex from Example 49.

Example 54

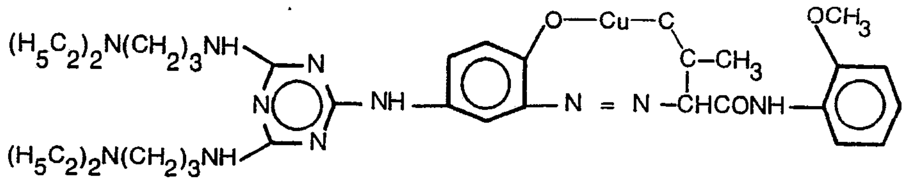

Example 55

1:2 Fe-complex from Example 48.

Example 56

1:2 Fe-complex from Example 49.

Example 57

1:2 Fe-complex from Example 48.

Example 58

1:2 Cr-complex from Example 49.

Example 59

1:2 Co-complex from Example 48.

Example 60

1:2 Co-complex from Example.

The dyes of Examples 3 and 6 to 16 dye leather and paper in orange, brown, red-brown, yellow-brown or red shades with good fastness properties.

Application Example A

100 Parts of freshly tanned and neutralised chrome grain leather are soaked in a bath at 55°C of 250 parts water and 0.5 parts of a dyestuff of any one of Example 1 to 5 for 30 minutes, then treated for 30 minutes in the same bath with 2 parts of an anionic fat liquor based on sulphonated train oil and then dried and finished in conventional manner. The colour of the dyed leather is given below:

| Dyestuff | Colour |
|---|---|
| 1:1 copper complex of Example 1 part c) | red/brown |
| 1:1 chromium complex of Example 2 | brown |
| 1:1 cobalt complex of Example 3 | red |
| 1:2 chromium complex of Example 4 | red/brown |
| 1:2 cobalt complex of Example 4 | red/brown |
| 1:2 iron complex of Example 4 | red/brown |
| 1:2 cobalt complex of Example 5 | red/brown |

Calf suede leather, chrome-vegetable tanned sheepskin and box cowhide leather can also be dyed by known methods.

Application Example B

70 Parts of a chemically bleached sulphite cellulose (from conifer wood) and 30 parts of a chemically bleached sulphite cellulose (from birch wood) is ground in a Hollander of 2000 parts water. 0.2 Part of a dyestuff of any one of those listed in Application Example A of Examples 1 to 5 above is added to the mass. After 20 minutes of mixing, paper is produced from the mass. The absorbent paper so produced has the same colour as the leather dyed with the dyestuffs as given in Application Example A above and the backwaters are colourless.

Application Example C

0.5 Part of a dyestuff of any one of those of Examples 1 to 5 is dissolved in 100 parts of hot water and cooled to room temperature. The solution is added to 100 parts of chemically bleached sulphite cellulose which has been ground in a Hollander with 2000 parts of water. After 15 minutes mixing the mixture is sized. Paper produced from this mass has the same colour as the leather dyed with the dyestuffs as given in Application Example A and is of medium intensity with good wet fastness properties.

Application Example D

An absorbent paper web of unsized paper is drawn through a dyestuff solution of the following constitution:

0.5 parts of a dyestuff of Examples 1 to 5
0.5 parts starch
99.0 parts of water.

Excess dyestuff solution is squeezed out by pressing between two rollers. The dried paper web has the same colour as the leather dyed with the dyestuffs as given in Application Example A.

Similar good paper dyeings can be obtained by using equivalent quantities of a liquid preparation or a granular preparation of the dyestuff for the pure dyestuff in the above Application Examples A to D.

**Claims**

1. An azo compound in 1:1 metal complex of 1:2 metal complex form having an average of at least 2 water solubilising basic groups per dyestuff unit, the compound being of the formula III

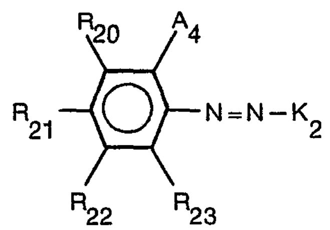

III

in which

$A_4$ and a hydroxy or amino group on $K_2$ together form the group —NH—Me—O—, —NH—Me—NH—, —NH—Me—OOC—, —O—Me—O— or —O—Me—OOC— where Me is a metal capable of either forming a 1:1 metal complex or a 1:2 metal complex or capable of forming both a 1:1 and 1:2 metal complex,

$K_2$ is one of the groups of the formula

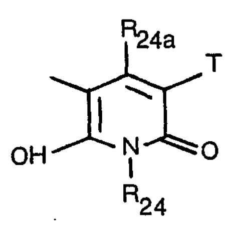

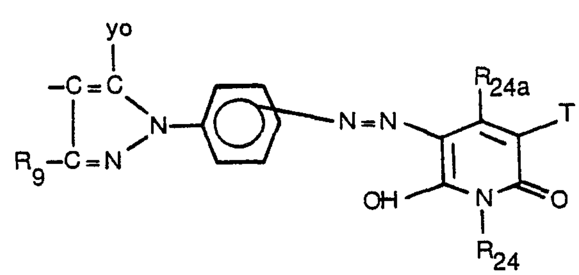

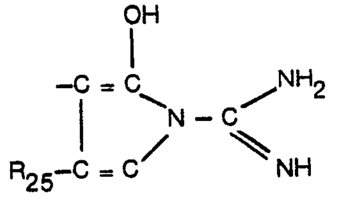

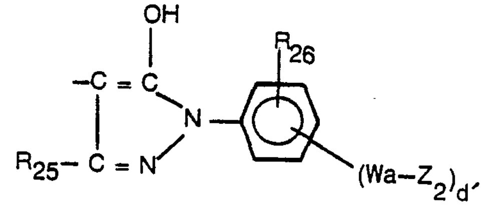

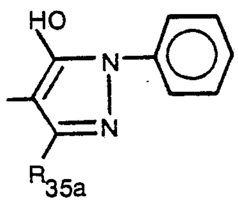

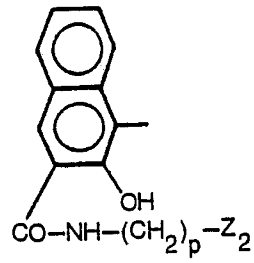

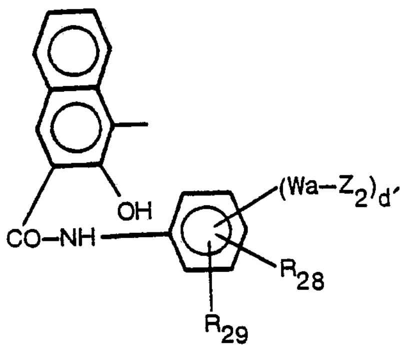

$CH_3$—CO—CH—CO—NH—$R_{32}$

where $R_9$ is —$CH_3$ or —COOH and yo is OH or $NH_2$, in which

$R_{20}$ is hydrogen or —$NO_2$,

$R_{21}$ is hydrogen, —$NO_2$, —NH—$(CH_2)_s$—$Z_2$, —$CH_2$—$Z_2$, —$SO_2$—NH—$(CH_2)_s$— $Z_2$, —$SO_2$—$NH_2$,

—CO—$CH_2$—$Z_2$, —CO—NH—$(CH_2)_s$—$Z_2$ or 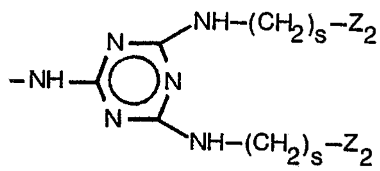

$R_{22}$ is hydrogen, —$NO_2$, —$SO_2$—$NH_2$, —$SO_2$—$N(R_{22a})$ —$SO_2$—NH—$(CH_2)_s$—OH, —$CH_2$—$Z_2$, —$SO_2$—NH—$(CH_2)_s$—$Z_2$, —CO—NH—$(CH_2)_s$—$Z_2$, —NH—CO—$(CH_2)_s$—$Z_2$ or

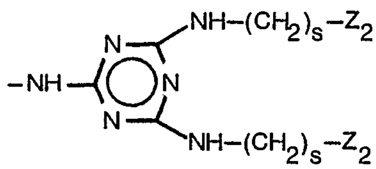

where

$R_{22a}$ is $(C_{1-4})$alkyl;

$R_{23}$ is hydrogen or —$CH_3$;

T is

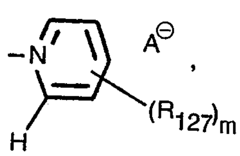 $A^{\ominus}$ , 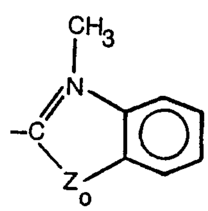 $A^{\ominus}$ ,

—CO—$NH_2$, —$NH_2$, —$N(CH_3)_2$, —$\overset{\oplus}{N}(CH_3)_3$ $A^{\ominus}$ or —CN, where $Z_o$ is —S—, —O—, or —N—$R_{35}$;

where

$R_{35}$ is hydrogen, $(C_{1-4})$alkyl or —$CH_2$—COO—$R_{35a}$ where $R_{35a}$ is $(C_{1-4})$alkyl;

$R_{127}$ is methyl or ethyl;

m is 0, 1 or 2;

$Z_2$ is a group of the formula

$-NH_2$ ; $-N(R_o)_2$ ; $\overset{\oplus}{-N}(R_o)_3$ $A^{\oplus}$ $\overset{\oplus}{-N}-(CH_2)_p-NH_2$ $(RCH_3)_2$

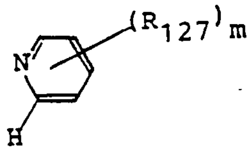

or $\overset{\oplus}{-N}-(CH_2)_p-N(CH_3)_2$ $(CH_3)_2$ $A^{\ominus}$

p is 1, 2 or 3;

where each $R_o$ independently is methyl, ethyl, β-hydroxyethyl, benzyl,

$—CH_2COCH_3$ or 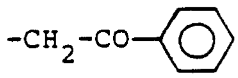

provided that not more than one benzyl,

$—CH_2COCH_3$ or 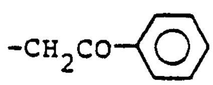

is attached not more than two β-hydroxy groups are attached to a nitrogen atom,

$R_{24}$ is hydrogen, $(C_{1-4})$alkyl, $—C_2H_4OH$, $—(CH_2)_p—Z_2$, benzyl,

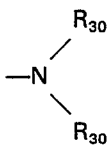 , $—(CH_2)_3OCH_3$; 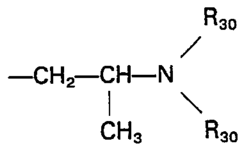 , 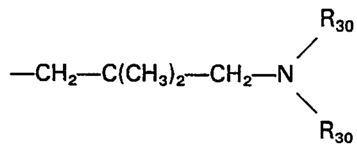 ;

where

$R_{24a}$ is $(C_{1-4})$alkyl, preferably $—CH_3$;

$R_{25}$ is $(C_{1-4})$alkyl, $—COO—(R_{25a})$ or COOH where $R_{25a}$ is $(C_{1-4})$alkyl;

$R_{26}$ is hydrogen, halogen, $(C_{1-4})$alkyl or $(C_{1-4})$alkoxy;

Wa is $—(CH_2)_s$,

$$—NHCO(\overset{*}{C}H_2)_s—,\ —CONH—(\overset{*}{C}H_2)_s—\ \text{or}\ —SO_2—NH—(\overset{*}{C}H_2)_s—,$$

in which the starred C atom is attached to the N atom of the group $Z_2$ defined above,

s is 1, 2, 3, 4, 5 or 6; p is 1, 2 or 3;

$R_{28}$ is hydrogen, $(C_{1-4})$alkyl, $(C_{1-4})$alkoxy or halogen,

$R_{29}$ is hydrogen, $(C_{1-4})$alkyl, $(C_{1-4})$alkoxy, halogen, $—NH—(CH_2)_s—Z_2$ or $—NH—C_2H_4OH$;

each $R_{30}$ independently is hydrogen or $(C_{1-4})$alkyl;

$R_{32}$ is hydrogen,

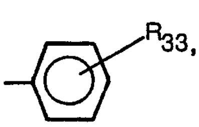 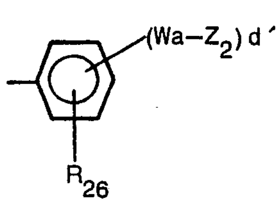 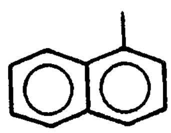 , 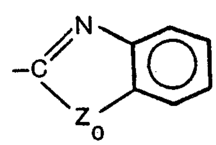

or 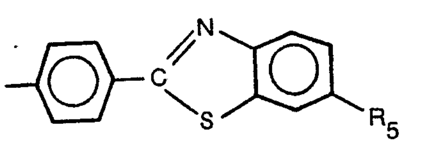 ;

where d' is 0 or 1, $Z_o$, Wa and $R_5'$ are defined above;

$R_{33}$ is hydrogen, halogen, $(C_{1-4})$alkyl, $(C_{1-4})$alkoxy, $-SO_2NH_2$ or $-SO_2N(CH_3)_2$;

$R_5$ is hydrogen, $(C_{1-4})$alkyl and $(C_{1-4})$alkoxy; and

$A^{\ominus}$ is a non-chromophoric anion; with the povisos that

i) $R_{20}$ and $R_{21}$ cannot both be $-NO_2$,

ii) $R_{21}$ and $R_{22}$ cannot be the same group unless $R_{21}$ and $R_{22}$ are both hydrogen,

iii) when $R_{21}$ and $R_{22}$ are both hydrogen $R_{20}$ cannot be $-NO_2$.

2. An azo compound in metal-free form, having an average of at least 2 water solubilising basic groups per dyestuff unit, the compound being of the formula III

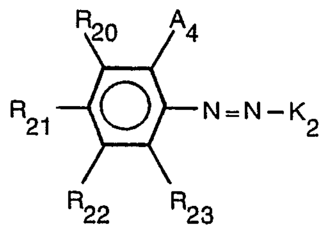

III

in which $A_4$ is hydrogen, OH, $NH_2$, $C_{1-4}$alkoxy or COOH;

$K_2$ is one of the groups of the formula

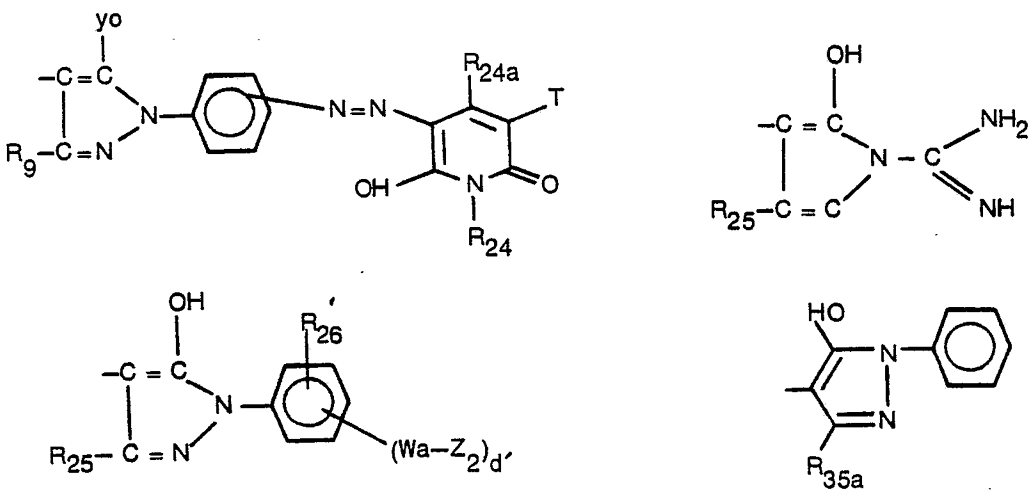

and where the other symbols are defined in Claim 1.

3. A compound according to Claim 2 in metal-free form of formula IIIa

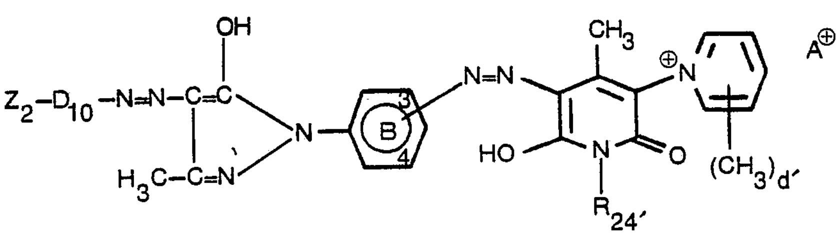

IIIa

in which

$R_{24}'$ is hydrogen, $-N(CH_3)_2$, $-CH_3$, $-C_2H_5$, n-$C_3H_7$, n-$C_4H_9$, i-$C_3H_7$, i-$C_4H_9$, Benzyl, $-C_2H_4OH$,

$-(CH_2)_{m'}-Z_2$, $-CH_2-\underset{CH_3}{\underset{|}{CH}}-N(CH_3)_2$ or $-CH_2-CH-(CH_3)_2-CH_2-N(CH_3)_2$;

m' is 2 or 3;

$Z_2$—$D_{10}$— is

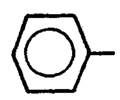 , 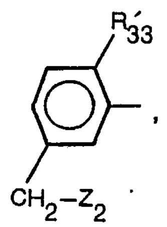 , 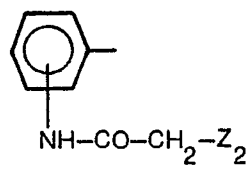 , 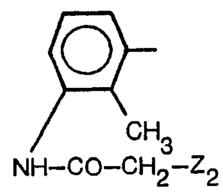 , 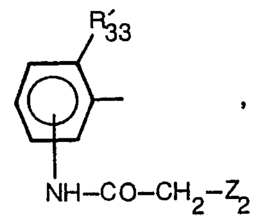 ,

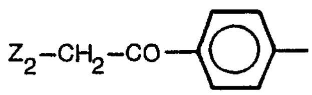 , 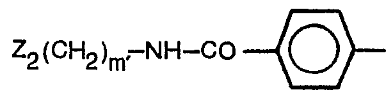 ,

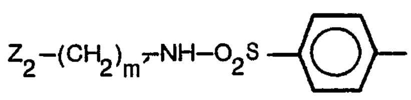 , 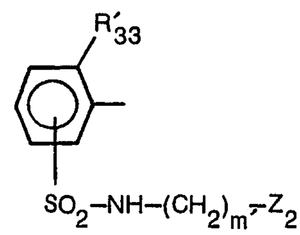

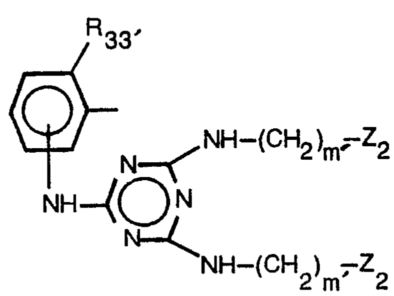 or 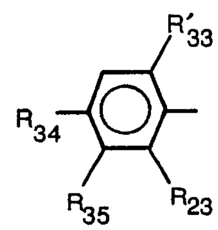 ,

$R'_{33}$ is —OH, —$OCH_3$, —$OC_2H_5$ or —COOH;
$R_{34}$ is hydrogen, —$NO_2$, —$SO_2$—$NH_2$ or —$CH_2$—$Z_2$;
$R_{35}$ is hydrogen, —$NO_2$, —$SO_2NH$—$(CH_2)_2$—OH, —$SO_2$—$NH_2$,

—$SO_2$—$NH(CH_2)_3N(CH_3)_2$— or 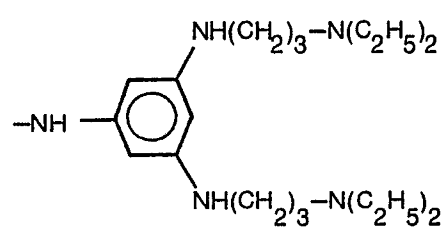

and the other symbols are defined in Claim 1, with the proviso
(i) that the azo bridge in ring B is in the 3- or 4-position;
(ii) that $R_{34}$ and $R_{35}$ are not both —$NO_2$;
or a compound of formula (IIIc)

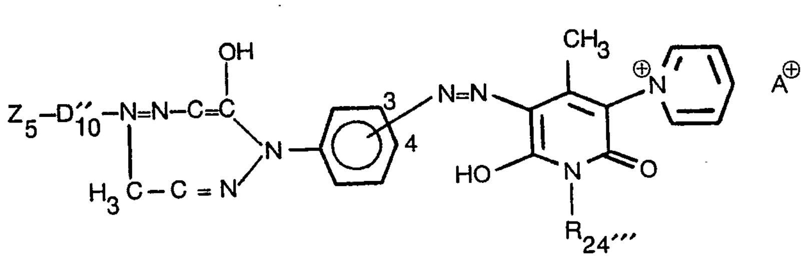 IIIc

in which

$R_{24}'''$ is hydrogen, $-C_2H_4OH$, $-(CH_2)_3-N(CH_3)_2$, $-(CH_2)_3-N(C_2H_5)_2$ or $-(CH_2)_3-{}^{\oplus}N(CH_3)_3A^{\ominus}$,

$Z_5-D_{10}''-$ is

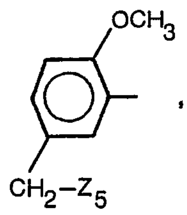
,
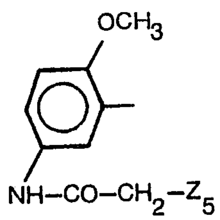
,
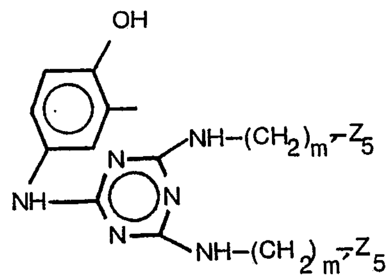

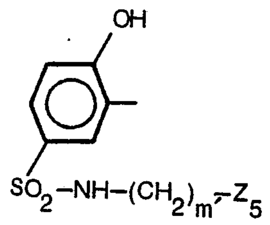
or
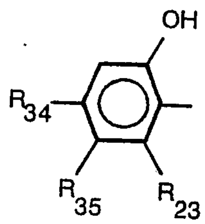
,

$Z_5$ is

$-N(CH_3)_2$, $-N(C_2H_5)_2$, $-{}^{\oplus}N(CH_3)_3\ A^{\ominus}$ or 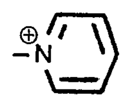 $A^{\ominus}$

and where all the other symbols are above defined, with the proviso that $R_{34}$ and $R_{35}$ are not both $NO_2$; or a compound of formula IIId

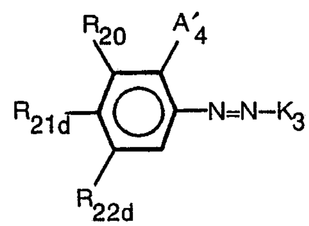

IIId

in which

$A_4'$ is hydrogen, $-OH$, $-OCH_3$ or $-COOH$;

$R_{20}$ is hydrogen or $NO_2$;

$R_{21d}$ is hydrogen, $-NO_2$, $-NH-CO-(CH_2)_q-Z_3$, $-CH_2-Z_3$, $-SO_2-NH_2$, $-SO_2-NH-(CH_2)_q-Z_3$,

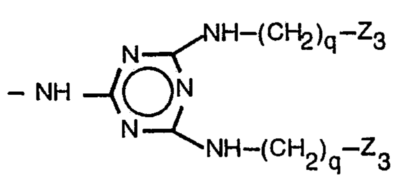

or $CO-NH-(CH_2)_q-Z_3$,

$R_{22d}$ is hydrogen,

$-CH_2-Z_3$, $-SO_2-N(CH_3)_2$, $-NO_2$, $-SO_2-NH-(CH_2)_q-OH$,

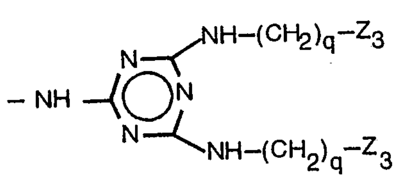

$-SO_2-NH-(CH_2)_q-Z_3$,

$-CO-NH-(CH_2)_q-Z_3$ or $-NH-CO-(CH_2)_q-Z_3$,

$K_3$ is

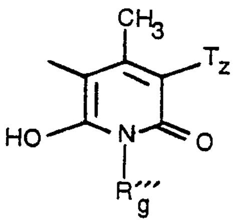 ,

IIIaa

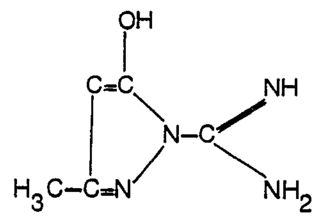

IIIab

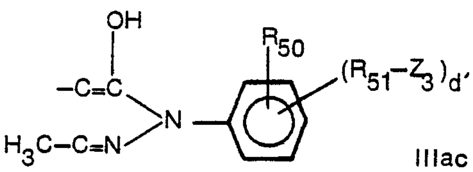

IIIac

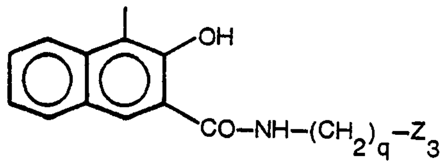

IIIad

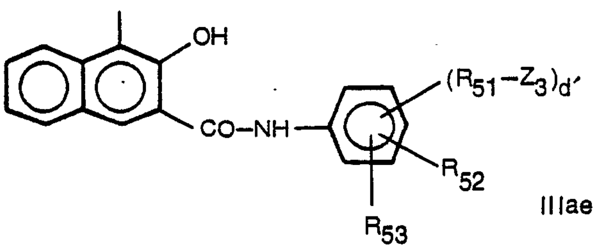

IIIae

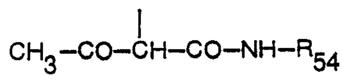

IIIaf

where $T_z$ is

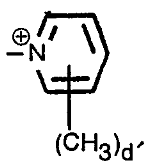 $A^{\ominus}$ or $-CN$;

$Z_3$ is

$-N(CH_3)_2$, $-\overset{\oplus}{N}(CH_3)_3$ $A^{\ominus}$, 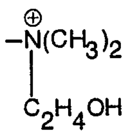 $A^{\ominus}$ 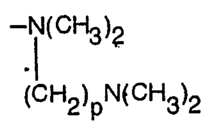

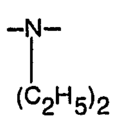 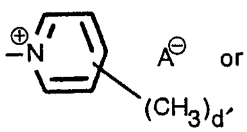 $A^{\ominus}$ or 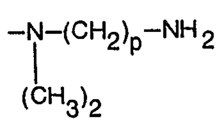 $A^{\ominus}$

$R_{g'''}$ is hydrogen, $CH_3$, $-C_2H_5$, i-$C_3H_7$, i-$C_4H_9$, n-$C_3H_7$, n-$C_4H_9$, $-C_2H_4OH$, $-(CH_2)_q-Z_3$;
$R_{50}$ is hydrogen, $-Cl$, $-Br$, $-CH_3$ or $OCH_3$;
$R_{51}$ is $-(CH_2)_q-$,

$-NH-CO-(\overset{*}{C}H_2)_q-$, $-CO-NH-(\overset{*}{C}H_2)_q-$ or $-SO_2-NH-(\overset{*}{C}H_2)_q-$;
$R_{52}$ is hydrogen, $-Cl$, $-Br$, $-CH_3$ or $-OCH_3$;
$R_{53}$ is hydrogen, $-NH-(CH_2)_q-Z_3$, $-NH-C_2H_4OH$, $-Cl$, $-Br$, $-CH_3$ or $-OCH_3$;
$R_{54}$ is hydrogen,

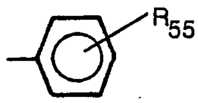, 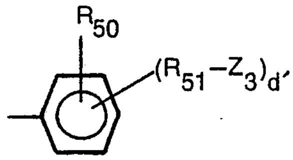 or 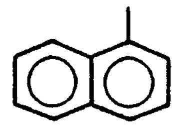

$R_{55}$ is hydrogen, —Cl, —Br, —$CH_3$, —$OCH_3$, —$SO_2NH_2$ or —$SO_2$—$N(CH_3)_2$ with the provisos

(i) that $R_{21d}$ and $R_{22d}$ ae not both the same unless both are hydrogen;

(ii) that $R_{20}$ and $R_{21d}$ are not both $NO_2$;

(iii) that the starred carbon atoms are not attached to the N-atom of the basic or quaternary ammonium group; and

(iv) that $R_{20}$ is not $NO_2$ when $R_{21d}$ or $R_{22d}$ are both hydrogen, or a compound of formula IIIe

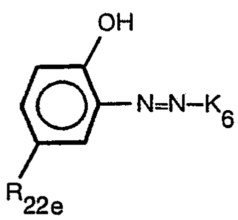

IIIe

in which

$R_{22e}$ is hydrogen, —$CH_2$—$Z_5$,
$SO_2$—NH—$(CH_2)_{m'}$—$Z_5$, —CO—NH—$(CH_2)_{m'}$—$Z_5$, —$NO_2$,

—NH—CO—$(CH_2)_a$—$Z_5$ or 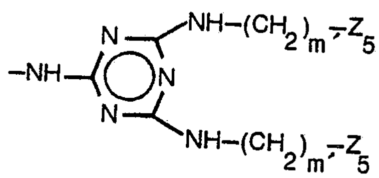

m' is 2 or 3;
$Z_5$ is

$-N(CH_3)_2$, $-N(C_2H_5)_2$, $-\overset{\oplus}{N}(CH_3)_3$ $A^\ominus$,

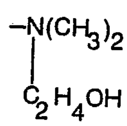 $A^\ominus$ or 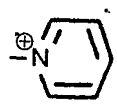 $A^\ominus$,

$K_6$ is

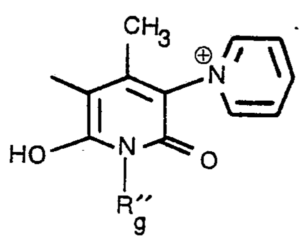 $A^\ominus$

IIIa$_1$

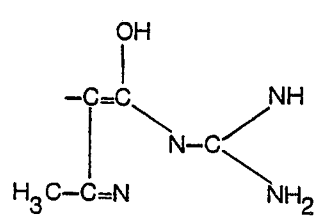

IIIb$_1$

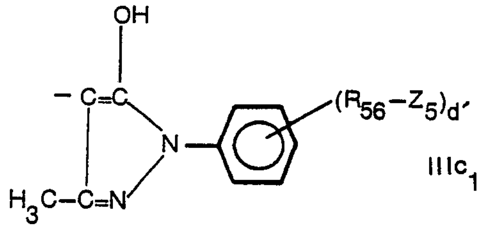

IIIc$_1$

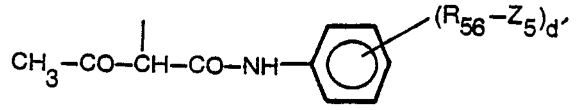

IIId$_1$

$R_{56}$ is $-(CH_2)_{m'}-$,

$-NH-CO-(\overset{*}{C}H_2)_a-$, $-CO-NH-(\overset{*}{C}H_2)_{m'}-$ or $-SO_2NH-(\overset{*}{C}H_2)_{m'}-$

where p'' is 2 or 3 and the starred C atoms are attached to the $Z_5$ group and all the other symbols are as above defined or defined in Claim 1.

4. A compound according to Claim 1 in 1:1 metal complex form of formula IIIf.

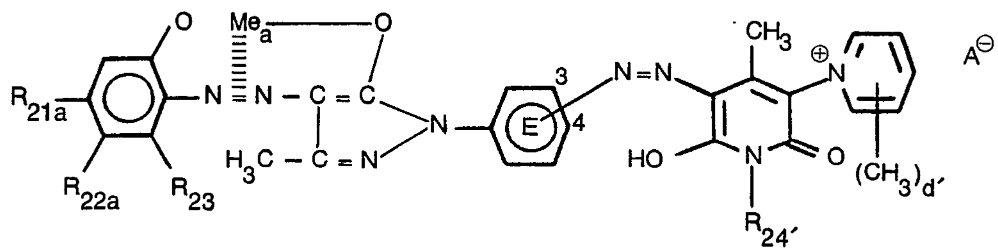

IIIf

in which

$R_{21a}$ is hydrogen, $-CH_2-Z_2$, $-NH-CO-(CH_2)_a-Z_2$, $-CO-CH_2-Z_2$, $-NO_2$, $-SO_2-NH_2$,

$-CO-NH-(CH_2)_{m'}-Z_2$, $-SO_2-NH-(CH_2)_{m'}-Z_2$ or $-NH$ 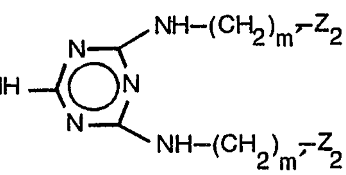 ;

$R_{22a}$ is hydrogen, $-NO_2$, $-SO_2-NH_2$, $-SO_2-NH-(CH_2)_2-OH$, $-CH_2-Z_2$, $-NH-CO-(CH_2)_a-Z_2$,

$-SO_2-NH-(CH_2)_{m'}-Z_2$ or $-NH$ 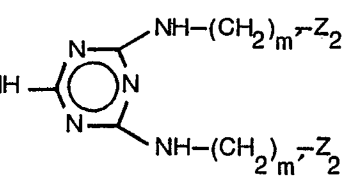 ;

$R_{23}$ is defined in Claim 1;

$Me_a$ is copper, cobalt, iron or chromium;

$R_{24}'$ is hydrogen, $-N(CH_3)_2$, $-CH_3$, $-C_2H_5$, n-$C_3H_7$, n-$C_4H_9$, i-$C_3H_7$, i-$C_4H_9$, Benzyl, $-C_2H_4OH$,

$-(CH_2)_{m'}-Z_2$, $-CH_2-CH(CH_3)-N(CH_3)_2$ or $-CH_2-CH-(CH_3)_2-CH_2-N(CH_3)_2$;

m' is 2 or 3;

$Z_2-D_{10}-$ is

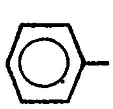 , 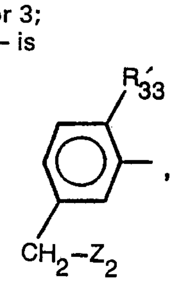 , 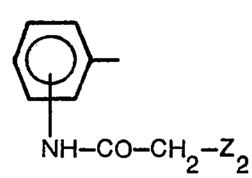 , 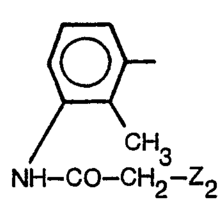 , 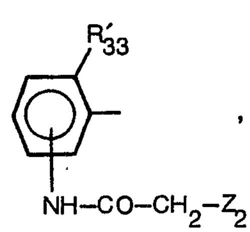 ,

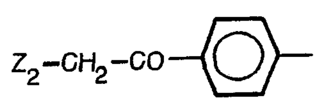,
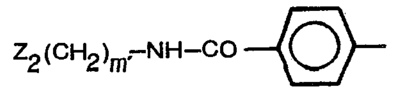,

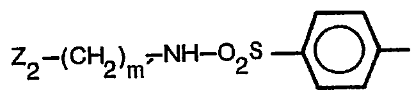,
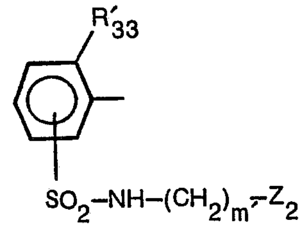

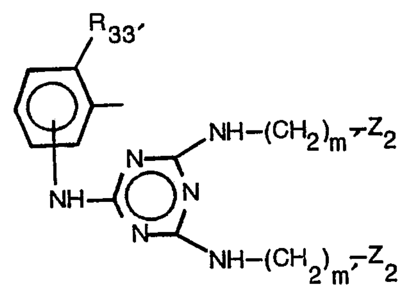
or
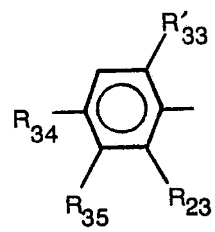,

d' is 0 or 1; and the other symbols are defined in Claim 1.
with the provisos

i) that in ring E the azo bridge is in the 3- or 4-position; and

ii) that $R_{21a}$ and $R_{22a}$ are not both $-NO_2$,

or a compound of formula IIIg

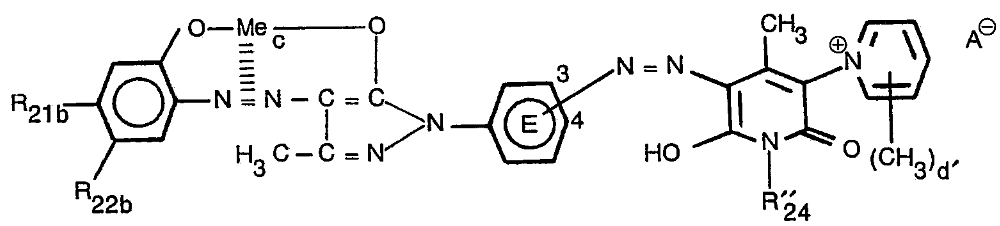
IIIg

in which

$R_{21b}$ and $R_{22b}$ are independently hydrogen, $-CH_2-Z_3$, $-NO_2$, $-SO_2-NH_2$, $-NH-CO-CH_2-Z_3$,

$-SO_2-NH-(CH_2)_{m'}-Z_3$ or 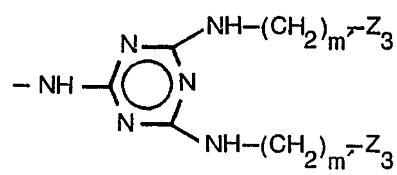

$R_{24}''$ is hydrogen, $-CH_3$, $-C_2H_5$, $-C_2H_4OH$ or $-(CH_2)_{m'}-Z_3$;

$Z_3-D'_{10}-$ is

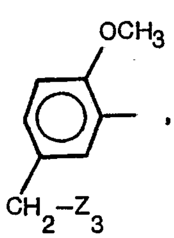,
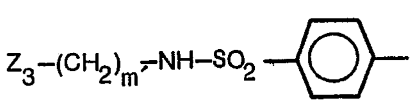,
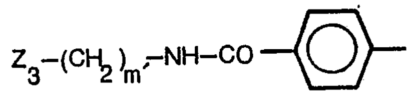,

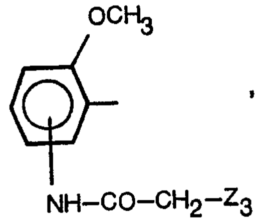 , 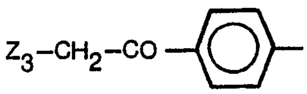 , 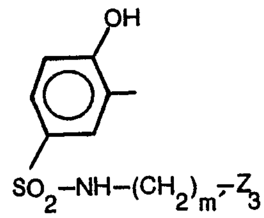

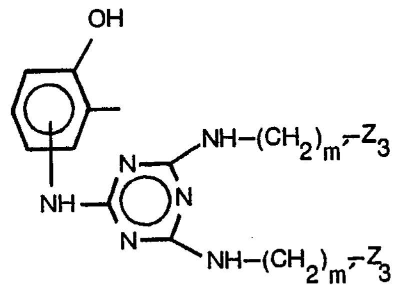 or 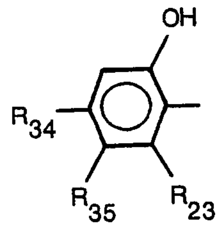

d' is defined above; and

$Me_c$ is copper, cobalt or chromium;

and all the other symbols are defined in Claim 1 or Claim 3;

with the proviso

(i) that $R_{34}$ and $R_{35}$ are not both $-NO_2$,

(ii) that $R_{21b}$ and $R_{22b}$ are not both $-NO_2$;

or a compound of formula IIIi

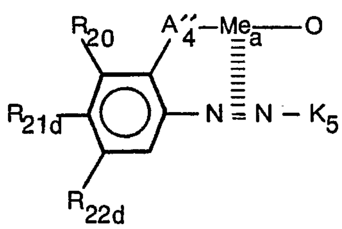

IIIi

a compound of formula IIIj

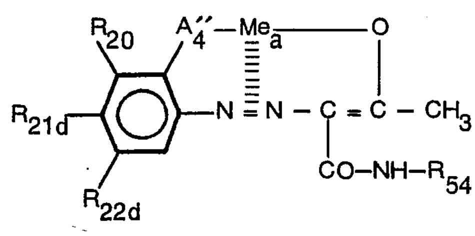

IIIj

in which

$A_4''$ is —O— or —COO—,

—$K_5$—O— is one of the following formulae IIIba to IIIbf

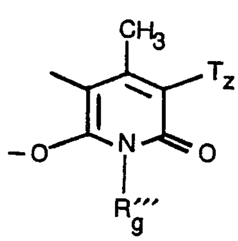

IIIba

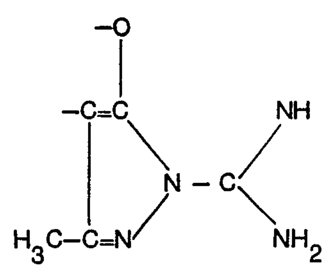

IIIbb

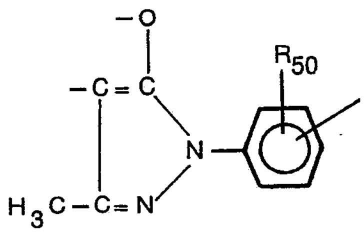 IIIbc

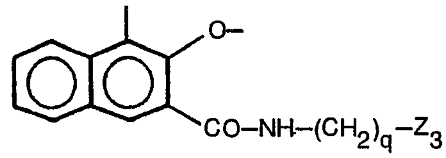 IIIbd

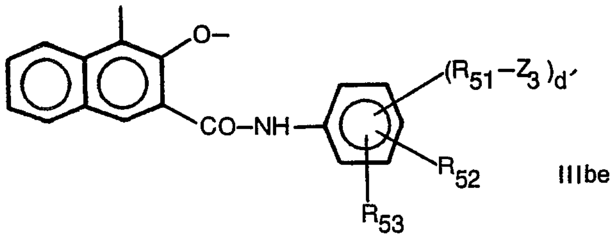 IIIbe

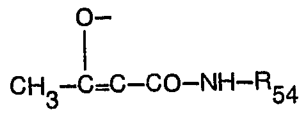 IIIbf

$R_{20}$ is defined in Claim 1;
$R_{21d}$ is hydrogen, $—NO_2$, $—NH—CO—(CH_2)_q—Z_3$, $—CH_2—Z_3$, $—SO_2—NH_2$, $—SO_2—NH—(CH_2)_q—Z_3$,

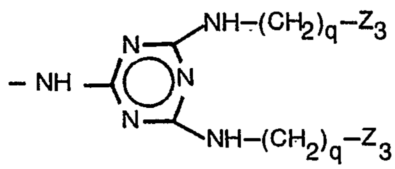 or $CO—NH—(CH_2)_q—Z_3$,

$R_{22d}$ is hydrogen, $—CH_2—Z_3$, $—SO_2—N(CH_3)_2$, $—NO_2$, $—SO_2—NH—(CH_2)_q—OH$,

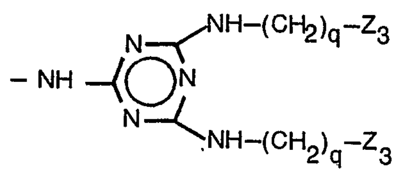

$—SO_2—NH—(CH_2)_q—Z_3$, $—CO—NH—(CH_2)_q—Z_3$ or $—NH—CO—(CH_2)_q—Z_3$,
$R_{51}$ is $—(CH_2)_q$,

$$—NH—CO—\overset{*}{(CH_2)_q}—,\ —CO—NH—\overset{*}{(CH_2)_q}—\ \text{or}\ —SO_2—NH—\overset{*}{(CH_2)_q}—;$$

$R_{52}$ is hydrogen, —Cl, —Br, $—CH_3$ or $—OCH_3$;
$R_{53}$ is hydrogen, $—NH—(CH_2)_q—Z_3$, $—NH—C_2H_4OH$, —Cl, —Br, $—CH_3$ or $—OCH_3$;
$R_{54}$ is hydrogen,

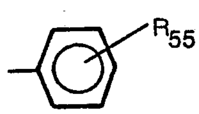 , 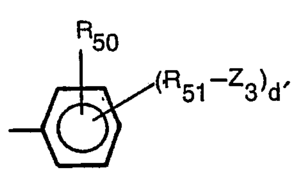 or 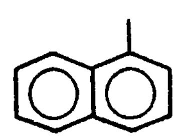

$Z_3$ is

$-N(CH_3)_2$, $-\overset{\oplus}{N}(CH_3)_3\ A^{\ominus}$, 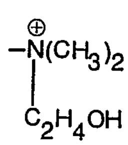 $A^{\ominus}$ 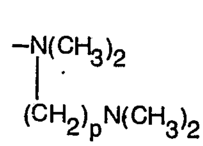

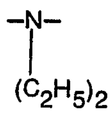

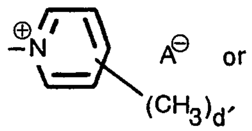

or

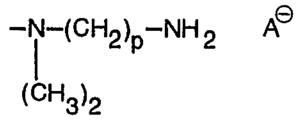

where $—D_1—Z_3$ has the significances of $—D_1—Z_2$ except $Z_2$ is replaced by $Z_3$

$R_9''$ is hydrogen, $CH_3$, $—C_2H_5$, i-$C_3H_7$, i-$C_4H_9$, n-$C_3H_7$, n-$C_4H_9$, $—C_2H_4OH$, $—(CH_2)_q—Z_3$;

q is 1, 2, 3 or 4.

5. A compound according to Claim 1 in 1:2 metal complex form of formula III m

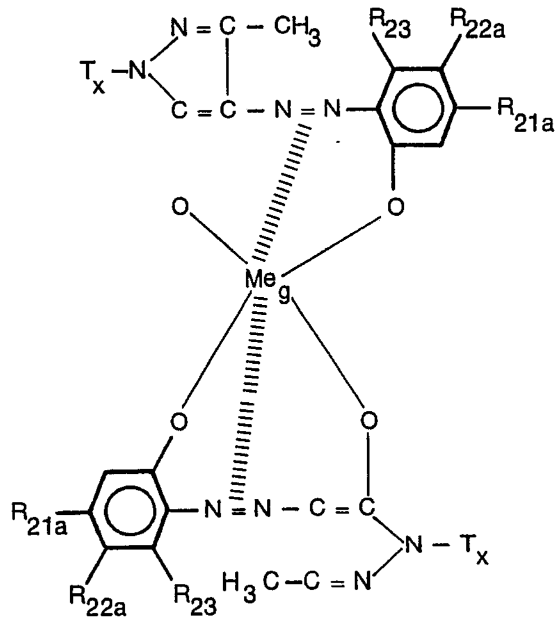

IIIm

in which each $T_x$, independently, is

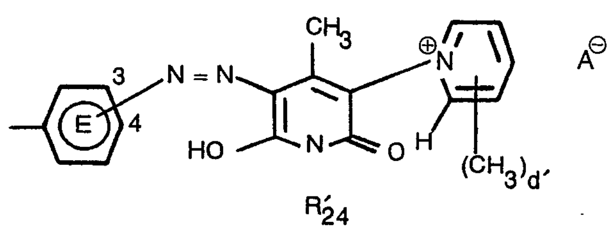

$R_{24}'$

in which $Me_g$ is chromium, iron, or cobalt;

$R_{21a}$ is hydrogen, $—CH_2—Z_2$, $—NH—CO—(CH_2)_a—Z_2$, $—CO—SH_2—Z_2$, $—NO_2$, $—SO_2—NH_2$,

$—CO—NH—(CH_2)_{m'}—Z_2$, $—SO_2—NH—(CH_2)_{m'}—Z_2$ or 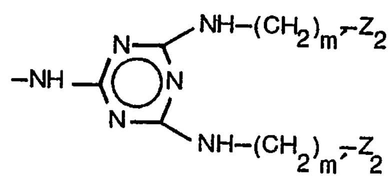 ;

$R_{22a}$ is hydrogen, $—NO_2$, $—SO_2—NH_2$, $—SO_2—NH—(CH_2)_2—OH$, $—CH_2—Z_2$, $—NH—CO—(CH_2)_a—Z_2$,

$—SO_2—NH—(CH_2)_{m'}—Z_2$ or 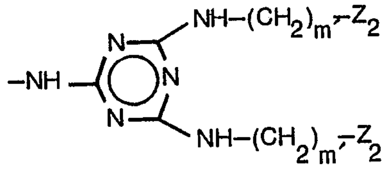 ;

and the other symbols are defined above;

$R_{23}$ is defined in Claim 1;

with the provisos

i) that in ring E the azo bridge is in the 3- or 4-position and

ii) that $R_{21a}$ and $R_{22a}$ are not both $—NO_2$;

or a compound of formula IIIp or of the formula IIIq

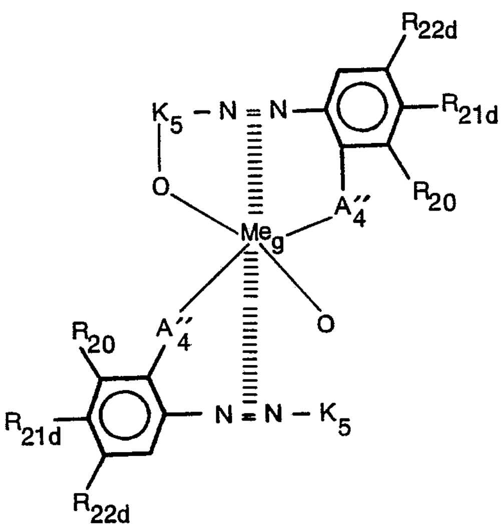

IIIp

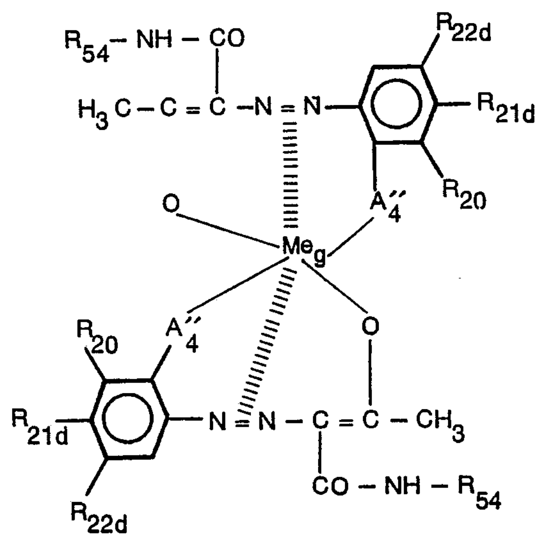

in which

$R_{21d}$ is hydrogen, $—NO_2$, $—NH—CO—(CH_2)_q—Z_3$, $—CH_2—Z_3$, $—SO_2—NH_2$, $—SO_2—NH—(CH_2)_q—Z_3$,

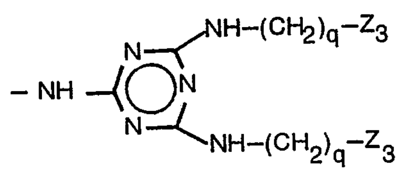 or $CO—NH—(CH_2)_q—Z_3$,

$R_{22d}$ is hydrogen, $—CH_2—Z_3$, $—SO_2—N(CH_3)_2$, $—NO_2$, $—SO_2—NH—(CH_2)_q—OH$,

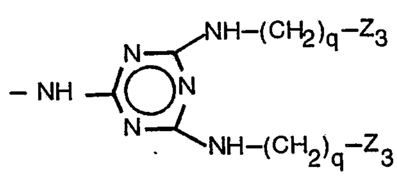

$—SO_2—NH—(CH_2)_q—Z_3$, $—CO—NH—(CH_2)_q—Z_3$ or $—NH—CO—(CH_2)_q—Z_3$,

$A_4''$ is —O— or —COO—,

$—K_5—O—$ is one of the following formulae IIIba to IIIbf

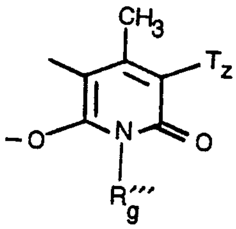
IIIba

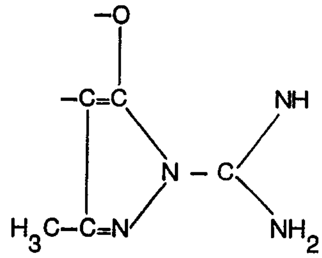
IIIbb

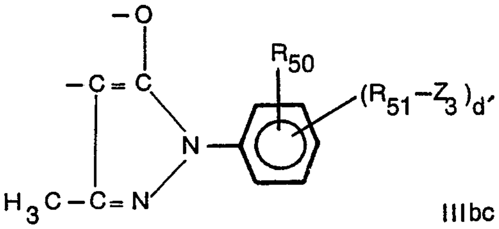
IIIbc

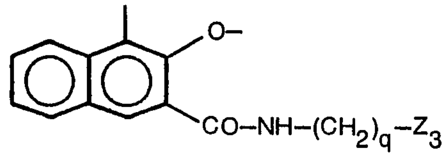
IIIbd

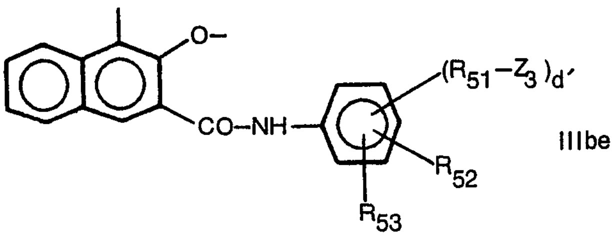
IIIbe

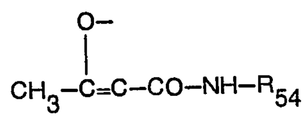
IIIbf

$R_{51}$ is $-(CH_2)_q-$,

$-NH-CO-(\overset{*}{C}H_2)_q-$, $-CO-NH-(\overset{*}{C}H_2)_q-$ or $-SO_2-NH-(\overset{*}{C}H_2)_q-$;

$R_{52}$ is hydrogen, $-Cl$, $-Br$, $-CH_3$ or $-OCH_3$;

$R_{53}$ is hydrogen, $-NH-(CH_2)_q-Z_3$, $-NH-C_2H_4OH$, $-Cl$, $-Br$, $-CH_3$ or $-OCH_3$;

$R_{54}$ is hydrogen,

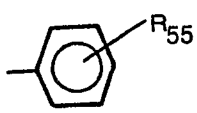
,
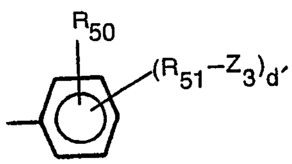
or
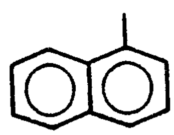

$Z_3$ is

$-N(CH_3)_2$, $-\overset{\oplus}{N}(CH_3)_3$ $A^{\ominus}$,
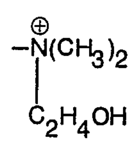
$A^{\ominus}$
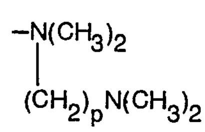

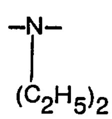
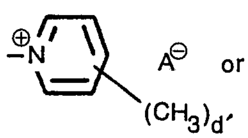
$A^{\ominus}$ or
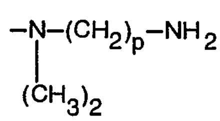
$A^{\ominus}$

where $—D_1—Z_3$ has the significances of $—D_1—Z_2$ except $Z_2$ is replaced by $Z_3$;
d' is 0 or 1.

6. A method for dyeing a substrate comprising applying to that substrate a compound of formula I as defined in Claim 1.

7. Leather or paper when dyed by a method according to Claim 6.

8. A process for the production of azo compounds of formula I according to Claim 1, which comprises coupling a diazatized amine of the formula γ

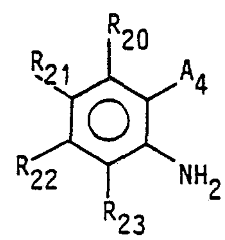

γ

in which the symbols are defined in Claim 1 with a coupling component of the formula δ

$K_2—H$ δ

and

where the symbols are defined in Claim 1; and metallising with a metal capable of forming a 1:1 or 1:2 metal complex or capable of forming a 1:1 or 1:2 metal complex.

**Patentansprüche**

1. Eine Azoverbindung in der 1:1- oder 1:2 Metallkomplexform, welche im Mittel wenigstens zwei wasserlöslichmachende basische Gruppen pro Farbstoffeinheit hat, wobei die Verbindung der Formel III

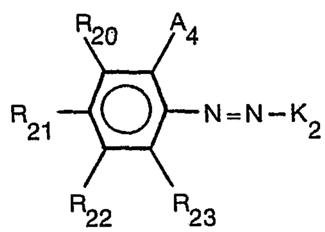

III

entsprechen, worin

$A_4$ und eine Hydroxy- oder Aminogruppe in $K_2$ die Gruppe der Formel —NH—Me—O—, NH—Me—NH—, —NH—Me—OOC—, —O—Me—O— oder —O—Me—O— bilden, worin Me für ein Metall steht, das einen 1:1- oder einen 1:2- Metallkomplex oder sowohl einen 1:1- und einen 1:2- Metallkomplex bilden kann,

$K_2$ eine der Gruppen der Formel

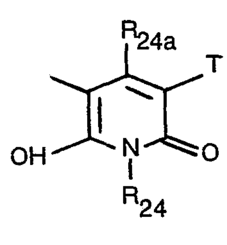

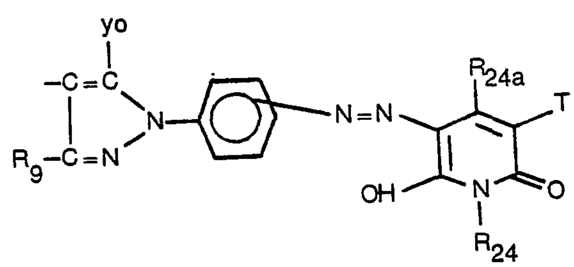

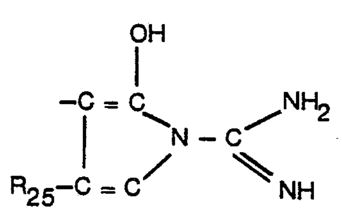

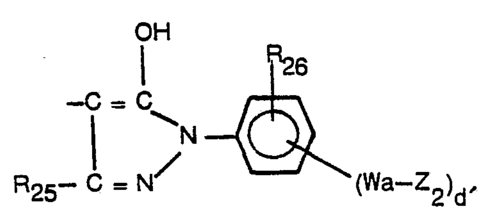

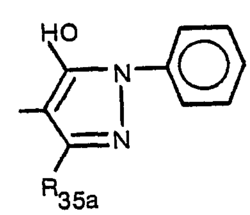

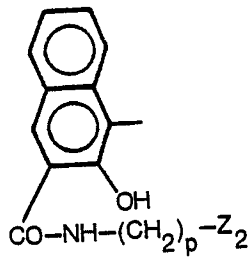

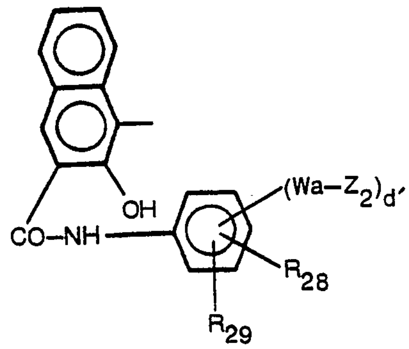 $CH_3—CO—CH—CO—NH—R_{32}$

ist, worin
$R_9$ für $CH_3$ oder —COOH und yo für OH oder $NH_2$ steht,
$R_{20}$ Wasserstoff oder $NO_2$,
$R_{21}$ Wasserstoff, $—NO_2$, $—NH—(CH_2)_s—Z_2$, $—CH_2—Z_2$, $—SO_2—NH—(CH_2)_s—Z_2$, $—SO_2—NH_2$,

$—CO—CH_2—Z_2$, $—CO—NH—(CH_2)_s—Z_2$ oder 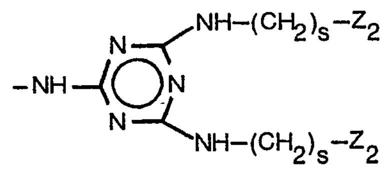

$R_{22}$ Wasserstoff, $—NO_2$, $—SO_2—NH_2$, $—SO_2—N(R_{22a})$ $—SO_2—NH—(CH_2)_s—OH$, $—CH_2—Z_2$, $—SO_2—NH—(CH_2)_s—Z_2$, $—CO—NH—(CH_2)_s—Z_2$, $—NH—CO—(CH_2)_s—Z_2$ oder

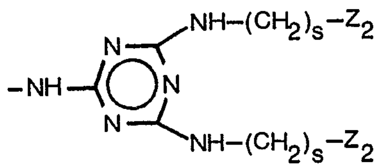

$R_{22a}$ (1—4C)-Alkyl,
$R_{23}$ Wasserstoff oder $—CH_3$;
T

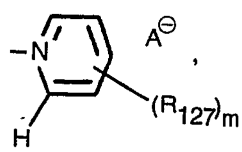 $A^{\ominus}$ , 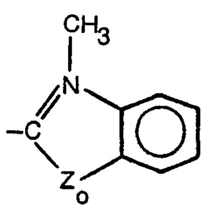 $A^{\ominus}$ , $—N(CH_3)_2$, $—N(|)—R_{35}$;

$—^{\oplus}N(CH_3)_3\ A^{\ominus}$ oder —CN, $Z_o$ —S—, —O— oder

$R_{35}$ Wasserstoff, $(C_{1-4})$Alkyl oder $—CH_2—COO—R_{35a}$
$R_{35a}$ $(C_{1-4})$Alkyl,
$R_{127}$ Methyl oder Aethyl,
m 0, 1 oder 2;
$Z_2$ eine Gruppe der Formel

$$-NH_2\ ;\quad -N(R_o)_2\ ;\quad -\overset{\oplus}{N}(R_o)_3\quad A^{\oplus}$$

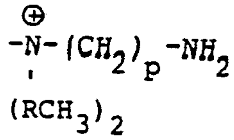 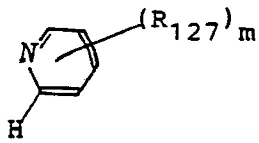

or 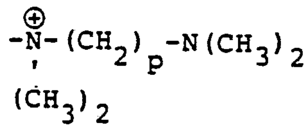 $A^{\ominus}$

P 1, 2 oder 3, jedes $R_o$ unabhängig voneinander Methyl, Aethyl, β-Hydroxyäthyl, Benzyl, $—CH_2COCH_3$ oder

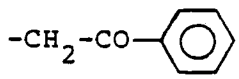

mit der Massgabe, dass nicht mehr als ein Benzylrest, $—CH_2COCH_3$ oder

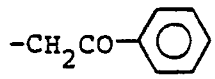

an ein N-Atom gebunden ist und nicht mehr als zwei β-Hydroxygruppen an ein N-Atom gebunden sind,

$R_{24}$ Wasserstoff, $(C_{1-4})$Alkyl, $—C_2H_4OH$, $—CH_2)_p—Z_2$, Benzyl, 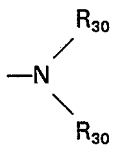, $—(CH_2)_3OCH_3$;

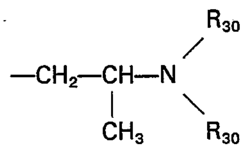, 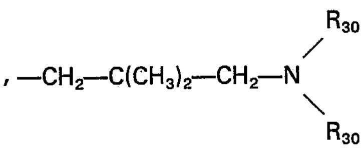;

$R_{24a}$ $(C_{1-4})$Alkyl, vorteilhaft $—CH_3$;
$R_{25}$ $(C_{1-4})$Alkyl, $—COO—(R_{25a})$ oder COOH, $R_{25a}$ $(C_{1-4})$Alkyl;
$R_{26}$ Wasserstoff, Halogen $(C_{1-4})$Alkyl oder $(C_{1-4})$-Alkoxy;
Wa $—(CH_2)_s—$,

$$—NHCO(\overset{*}{C}H_2)_s—,\ —CONH—(\overset{*}{C}H_2)_s—\ \text{oder}\ —SO_2—NH—(\overset{*}{C}H_2)_s—,$$

worin das mit * bezeichnete C-Atom an das N-Atom der Gruppe $Z_2$ gebunden ist,
s 1, 2, 3, 4, 5 oder 6; p 1, 2 oder 3;
$R_{28}$ Wasserstoff, $(C_{1-4})$Alkyl, $(C_{1-4})$Alkoxy oder Halogen,
$R_{29}$ Wasserstoff, $(C_{1-4})$Alkyl, $(C_{1-4})$Alkoxy, Halogen, $—NH—(CH_2)_s—Z_2$ oder $—NH—C_2H_4OH$, jedes
$R_{30}$ unabhängig voneinander Wasserstoff oder $(C_{1-4})$Alkyl,
$R_{32}$ Wasserstoff,

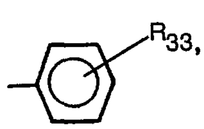 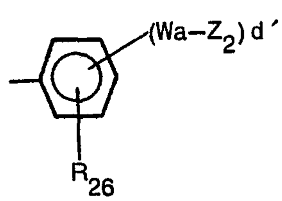 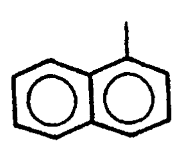,

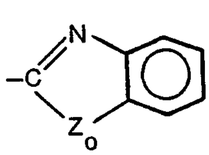 oder 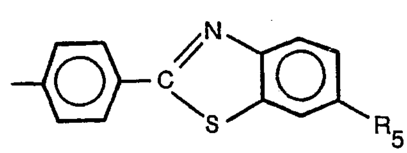;

d' 0 oder 1, $Z_o$, Wa und $R_5'$ wie zuvor definiert,
$R_{33}$ Wasserstoff, Halogen $(C_{1-4})$Alkyl, $(C_{1-4})$-Alkoxy, $SO_2NH_2$ oder $-SO_2N(CH_3)_2$;
$R_5$ Wasserstoff, $(C_{1-4})$Alkyl und $(C_{1-4})$Alkoxy und
$A^\ominus$ ein nicht chromophores Anion bedeuten, mit den Massgaben, dass
i) $R_{20}$ und $R_{21}$ nicht gleichzeitig $NO_2$ bedeuten,
ii) $R_{21}$ und $R_{22}$ nicht für die gleiche Gruppe stehen können, mit Ausnahme dass $R_{21}$ und $R_{22}$ gleichzeitig für Wasserstoff stehen und
iii) falls $R_{21}$ und $R_{22}$ gleichzeitig für Wasserstoff stehen, $R_{20}$ nicht $NO_2$ bedeutet.

2. Eine Azoverbindung in metallfreier Form, welche im Mittel wenigstens zwei wasserlöslichmachende basische Gruppen pro Farbstoffeinheit hat, worin die Verbindung der Formel III

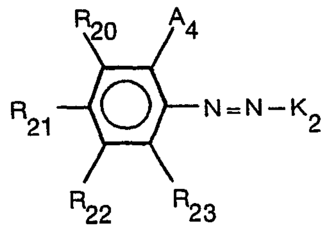

III

entspricht, worin $A_4$ Wasserstoff, OH, $NH_2$, $(C_{1-4})$Alkoxy oder COOH;
$K_2$ einer der Gruppen der Formel

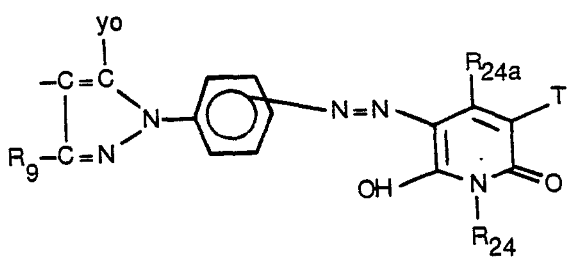

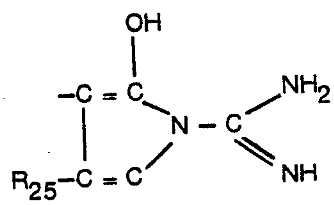

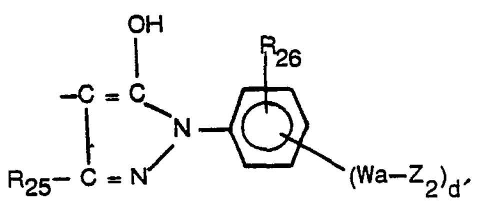

oder

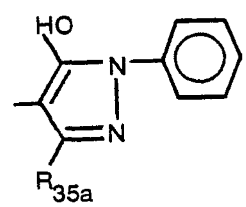

entsprechen, worin die Symbole im Anspruch 1 definiert sind.

3. Eine Verbindung gemäss Anspruch 2 in metallfreier Form der Formel IIIa

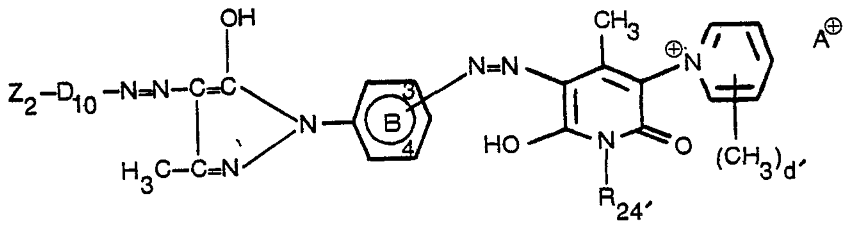

IIIa

entsprechend,

worin $R_{24}'$ Wasserstoff, $-N(CH_3)_2$, $-CH_3$, $-C_2H_5$, n-$C_3H_7$, n-$C_4H_9$, i-$C_3H_7$, i-$C_4H_9$, Benzyl, $-C_2H_4OH$, $-(CH_2)_{m'}-Z_2$, $-CH_2-CH(CH_3)-N(CH_3)_2$ oder $-CH_2-CH-(CH_3)_2-CH_2-N(CH_3)_2$,

m' 2 oder 3,

$Z_2-D_{10}^-$

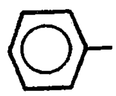 , 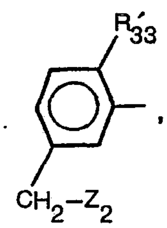 , 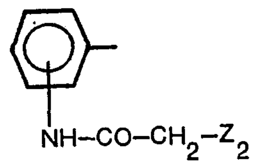 , 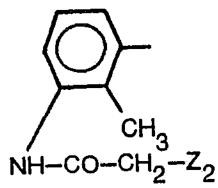 , 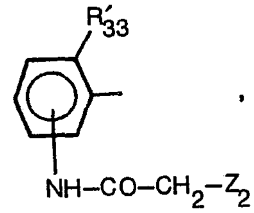 ,

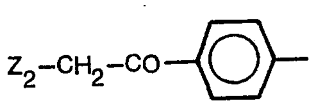 , 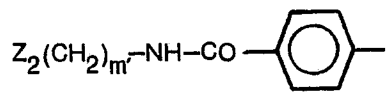 ,

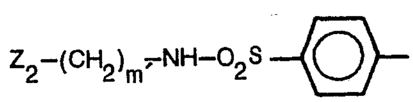 , 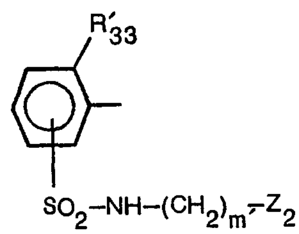

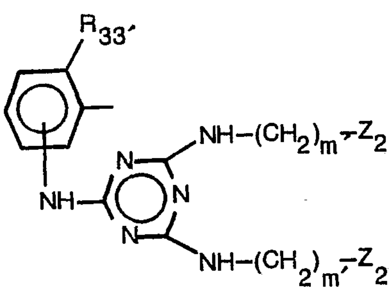 oder 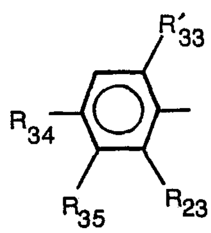 ,

$R_{33}'$ —OH, $-OCH_3$, $-CH_2H_5$ oder —COOH;

$R_{34}$ Wasserstoff, $-NO_2$, $-SO_2-NH_2$ oder $-CH_2-Z_2$;

$R_{35}$ Wasserstoff, $-NO_2$, $-SO_2NH-(CH_2)_2-OH$, $-SO_2-NH_2$, $-SO_2-NH(CH_2)_3N(CH_3)_2-$ oder

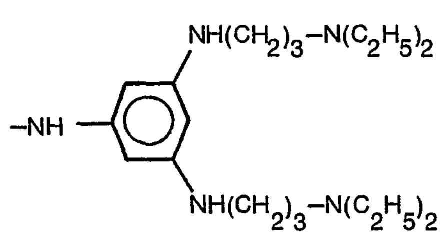

bedeuten, und worin die andern Symbole im Anspruch 1 definiert sind, mit der Massgabe dass,

(i) die Azobrücke im Ring B in 3- oder 4-Stellung ist,

(ii) $R_{34}$ und $R_{35}$ nicht gleichzeitig $NO_2$ bedeuten, oder eine Verbindung der Formel IIIc)

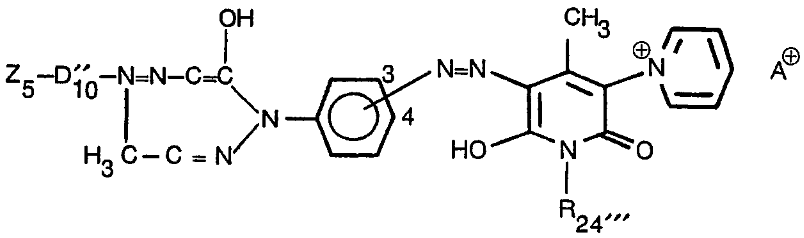

IIIc

worin $R_{24}'''$ Wasserstoff, $-C_2H_4OH$, $-(CH_2)_3-N(CH_3)_2$, $-(CH_2)_3-N(C_2H_5)_2$ oder $-(CH_2)_3-{}^+N(CH_3)_3\ A^{\ominus}$, $Z_5-D_{10}''-$

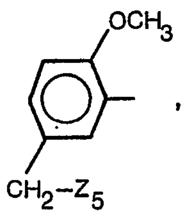 ,
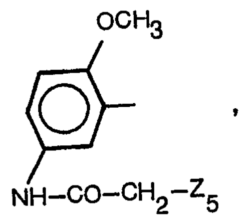 ,
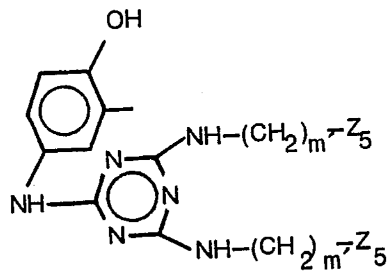

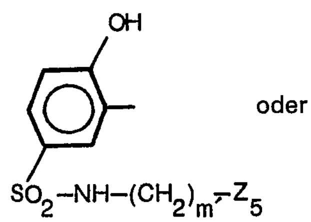 oder 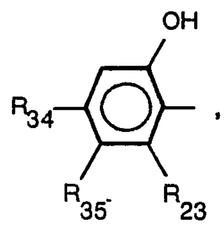 ,

$Z_5$

$-N(CH_3)_2$, $-N(C_2H_5)_2$, $-{}^{\oplus}N(CH_3)_3\ A^{\ominus}$ or 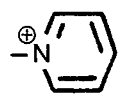 $A^{\ominus}$

bedeuten, und worin alle andern Symbole zuvor definiert sind, mit der Massgabe, dass $R_{34}$ und $R_{35}$ nicht gleichzeitig $NO_2$ bedeuten, oder eine Verbindung der Formel IIId

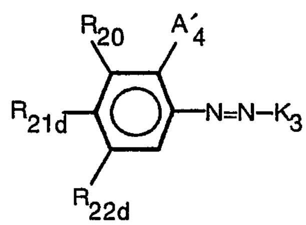

IIId

worin $A_4'$ Wasserstoff, $-OH$, $-OCH_3$ oder $-COOH$,
$R_{20}$ Wasserstoff oder $NO_2$,
$R_{21d}$ Wasserstoff, $-NO_2$, $-NH-CO-(CH_2)_q-Z_3$, $-CH_2-Z_3$, $-SO_2-NH_2$, $-SO_2-NH-(CH_2)_q-Z_3$,

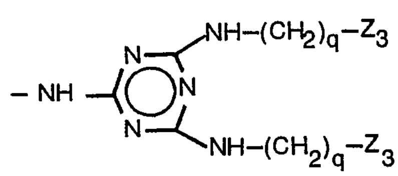 oder $CO-NH-(CH_2)_q-Z_3$,

$R_{22d}$ Wasserstoff, $-CH_2-Z_3$, $-SO_2-N(CH_3)_2$, $-NO_2$, $-SO_2-NH-(CH_2)_q-OH$,

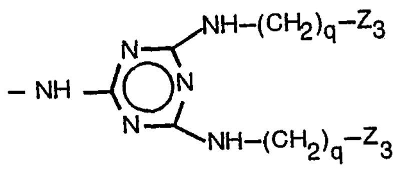

$—SO_2—NH—(CH_2)_q—Z_3$, $—CO—NH—(CH_2)_q—Z_3$ oder $—NH—CO(CH_2)_q—Z_3$,

$K_3$

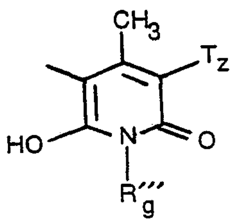 , IIIaa

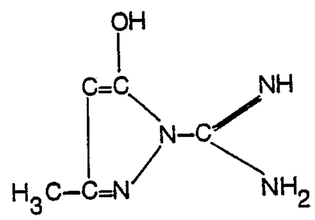 IIIab

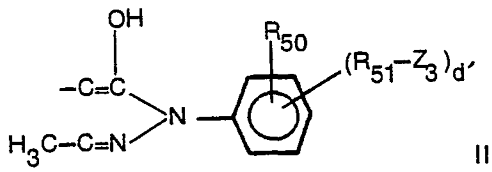 IIIad

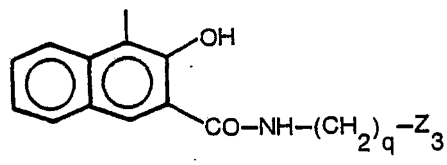 IIIac

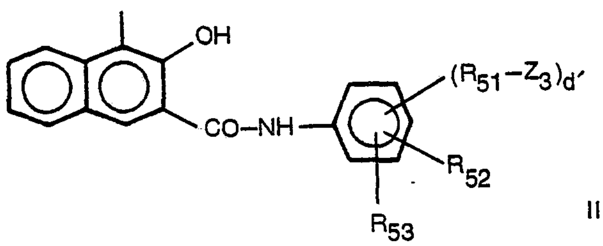 IIIaf

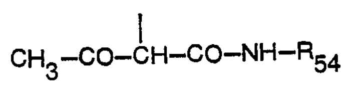 IIIae

worin $T_z$

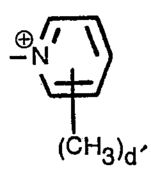 $A^{\ominus}$ oder $-CN$;

$Z_3$

$-N(CH_3)_2$, $-\overset{\oplus}{N}(CH_3)_3$ $A^{\ominus}$, 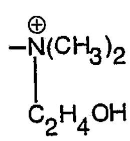 $A^{\ominus}$ 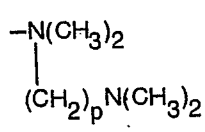

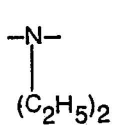 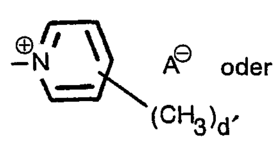 $A^{\ominus}$ oder 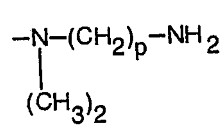 $A^{\ominus}$

$R_g'''$ Wasserstoff, $-CH_3$, $-C_2H_5$, i-$C_3H_7$, i-$C_4H_9$, n-$C_3H_7$, n-$C_4H_9$, $-C_2H_4OH$ oder $-(CH_2)_q-Z_3$,
$R_{50}$ Wasserstoff, —Cl, —Br, $-CH_3$ oder $OCH_3$;
$R_{51}$ $-(CH_2)_q-$,

$$-NH-CO(\overset{*}{C}H_2)_q-, -CO-NH-(\overset{*}{C}H_2)_q- \text{ oder } -SO_2-NH-(\overset{*}{C}H_2)_q-,$$

$R_{52}$ Wasserstoff, —Cl, —Br, $-CH_3$ oder $-OCH_3$,
$R_{53}$ Wasserstoff, $-NH-(CH_2)_q-Z_3$, $-NH-C_2H_4OH$, —Cl, —Br, $-CH_3$ oder $-OCH_3$;
$R_{54}$ Wasserstoff,

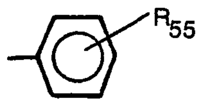
,
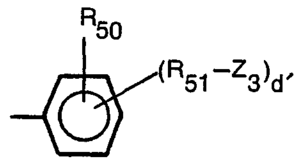
oder
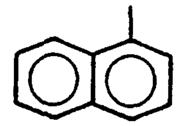

$R_{55}$ Wasserstoff, —Cl, —Br, $-CH_3$, $-SO_2NH_2$ oder $-SO_2-N(CH_3)_2$ bedeuten, mit den Massgaben, dass
(i) $R_{21d}$ und $R_{22d}$ mit Ausnahme von Wasserstoff nicht für den gleichen Rest stehen,
(ii) $R_{20}$ und $R_{20d}$ nicht beide $NO_2$ bedeuten,
(iii) das mit * bezeichnete C-Atom nicht an ein N-Atom der basischen oder quaternären Ammoniumgruppe gebunden ist, und
(iv) $R_{20}$ nicht für $NO_2$ steht, wenn $R_{21d}$ oder $R_{22d}$ für Wasserstoff stehen; oder eine Gruppe der Formel IIIe

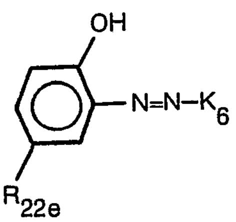

IIIe

worin $R_{22e}$ Wasserstoff, $-CH_2-Z_5$, $-SO_2-NH-(CH_2)_{m'}-Z_5$, $-CO-NH-(CH_2)_{m'}-Z_5$, $-NO_2$,

$-NH-CO-(CH_2)_a-Z_5$ oder
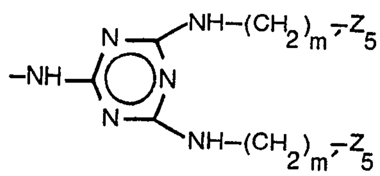

m' 2 oder 3;
$Z_5$

$$-N(CH_3)_2, \quad -N(C_2H_5)_2, \quad -\overset{\oplus}{N}(CH_3)_3 \quad A^{\ominus},$$

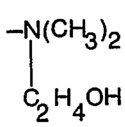
$A^{\ominus}$ or
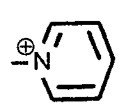
$A^{\ominus}$ ,

$K_6$

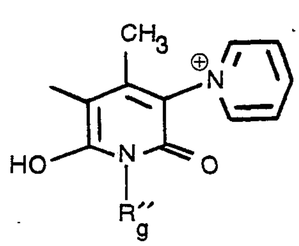
$A^{\ominus}$

$IIIa_1$

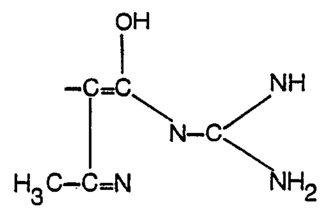

$IIIb_1$

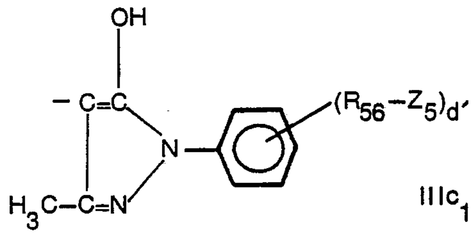 oder 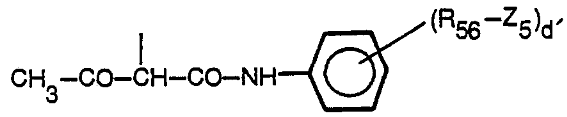

IIIc$_1$ IIId$_1$

$R_{56}$ $-(CH_2)_{m'}-$,

$-NH-CO(\overset{*}{C}H_2)_{a'}$, $-CO-NH-(\overset{*}{C}H_2)_{m'}-$ oder $-SO_2NH-(\overset{*}{C}H_2)_{m'}-$

bedeuten, worin p'' 2 oder 3 ist und das mit * bezeichnete C-Atom an die Gruppe $Z_5$ gebunden ist und alle andern Symbole im Anspruch 1 definiert sind.

4. Eine Verbindung gemäss Anspruch 1 in der 1:1-Metallkomplexform der Formel IIIf)

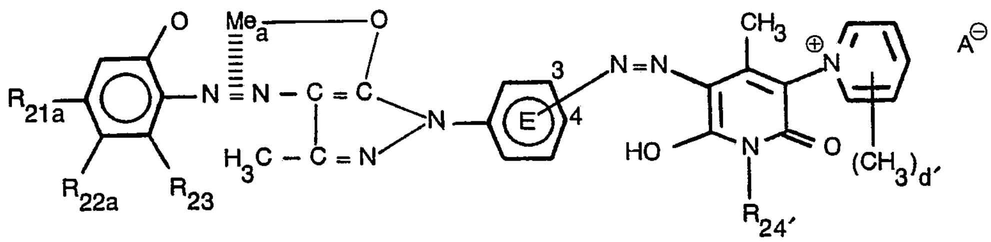

IIIf

worin $R_{21a}$ Wasserstoff, $-CH_2-Z_2$, $-NH-CO-(CH_2)_a-Z_2$, $-CO-CH_2-Z_2$, $-NO_2$, $-SO_2-NH_2$,

$-CO-NH-(CH_2)_{m'}-Z_2$, $-SO_2-NH-(CH_2)_{m'}-Z_2$ oder $-NH$ 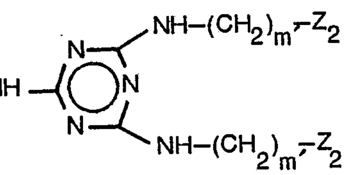 ;

$R_{22a}$ Wasserstoff, $-NO_2$, $-SO_2-NH_2$, $-SO_2-NH-(CH_2)_2-OH$, $-CH_2-Z_2$, $-NH-CO-(CH_2)_a-Z_2$,

$-SO_2-NH-(CH_2)_{m'}-Z_2$ oder $-NH$ 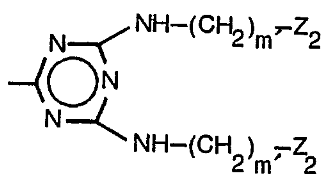 ;

$R_{23}$ in Anspruch 1 definiert,
$Me_a$ Kupfer, Kobalt, Eisen oder Chrom,
$R_{24'}$ Wasserstoff, $-N(CH_3)_2$, $-CH_3$, $-C_2H_5$, n-$C_3H_7$, n-$C_4H_9$, i-$C_3H_7$, i-$C_4H_9$, Benzyl, $-C_2H_4OH$, $-(CH_2)_{m'}-Z_2$

$-CH_2-CH(CH_3)-N(CH_3)_2$ oder $-CH_2-CH(CH_3)_2-CH_2-N(CH_3)_2$,

m' 2 oder 3;

$Z_2$—$D_{10}$

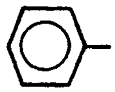 , 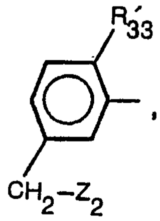 , 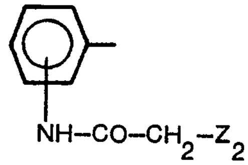 , 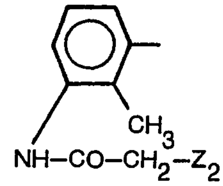 , 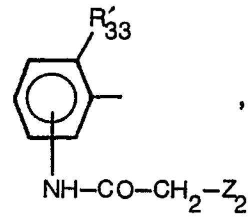 ,

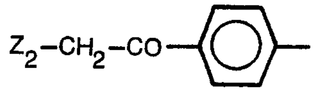 , 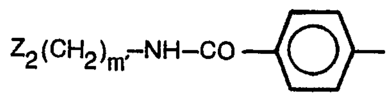 ,

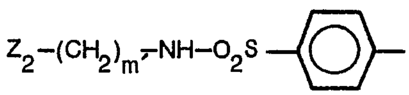 , 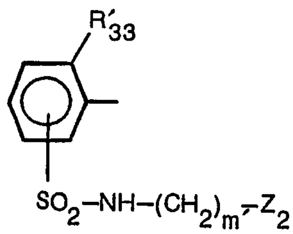

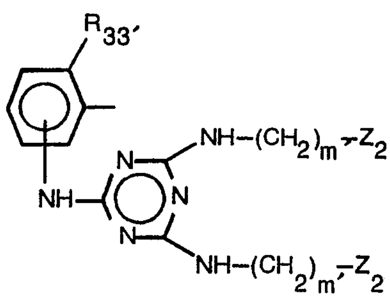 oder 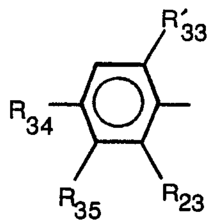 ,

d' 0 oder 1 bedeuten und die andern Symbole in Anspruch 1 definiert sind, mit den Massgaben, dass
(i) im Ring E die Azobrücke in 3- oder 4-Stellung gebunden ist, und
(ii) $R_{21a}$ und $R_{22a}$ nicht beide $NO_2$ sind, oder eine Verbindung der Formel IIIg

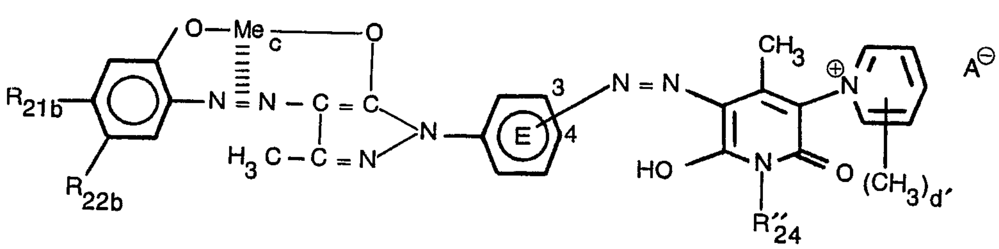 IIIg

worin $R_{21b}$ und $R_{22b}$ unabhängig voneinander Wasserstoff, $—CH_2—Z_3$, $—NO_2$, $—SO_2—NH_2$, $—NH—CO—CH_2—Z_3$, $—SO_2—NH—(CH_2)_{m'}—Z_3$ oder 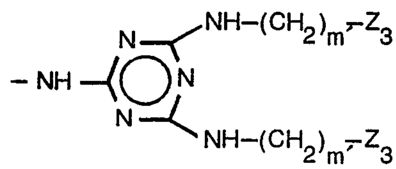

$R_{24}''$ Wasserstoff, $—CH_3$, $—C_2H_5$, $—C_2H_5$, $—C_2H_4OH$ oder $—(CH_2)_{m'}—Z_3$,

$Z_3$—$D_{10}'$—

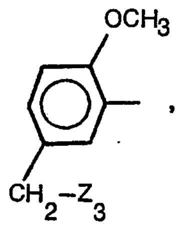 , 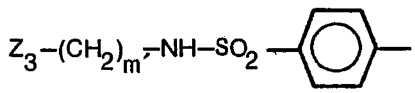 , 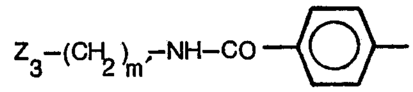 ,

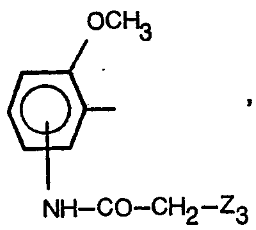 , 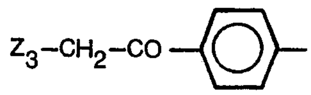 , 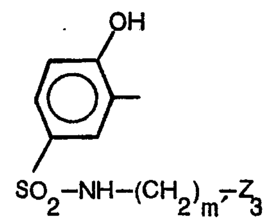

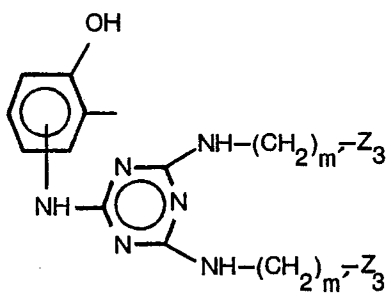 oder 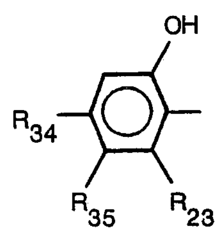

bedeuten,

d' wie zuvor definiert und

$Me_c$ für Kupfer, Kobalt oder Chrom stehen, und alle andern Symbole in Anspruch 1 oder Anspruch 3 definiert sind, mit den Massgaben, dass

(i) $R_{34}$ und $R_{35}$ nicht beide $NO_2$ bedeuten,

(ii) $R_{21b}$ und $R_{22b}$ nicht beide $NO_2$ bedeuten; oder eine Verbindung der Formel IIIi,

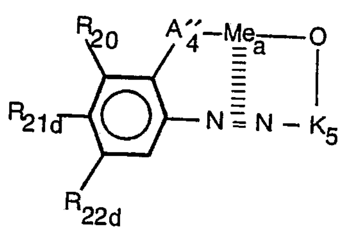

IIIi

oder eine Verbindung der Formel IIIj)

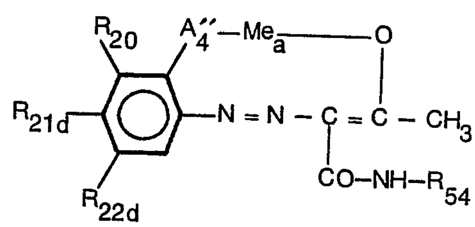

IIIj

worin $A_4''$ —O— oder —COO—,

—$K_5$—O— eine der nachstehenden Formeln IIIba bis IIIbf

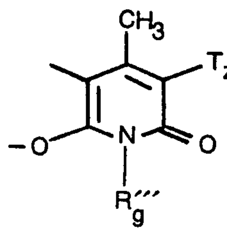 IIIba

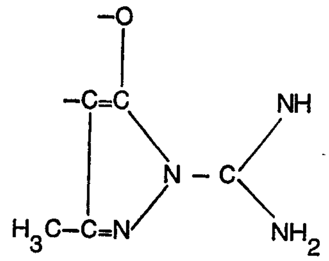 IIIbb

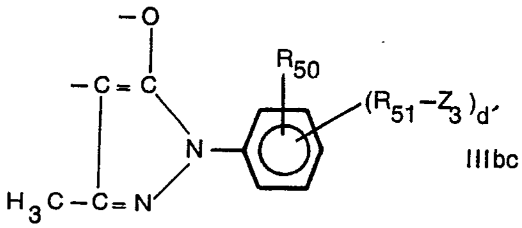 IIIbc

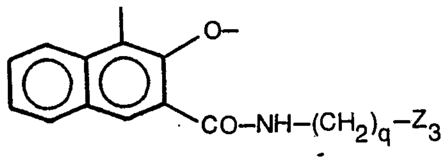 IIIbd

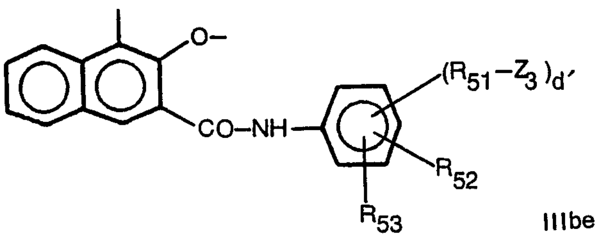 IIIbe

oder 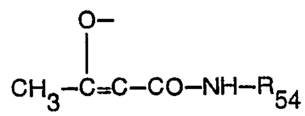 IIIbf

bedeuten,

$R_{20}$ gemäss Anspruch 1 definiert ist, und worin

$R_{21d}$ Wasserstoff, $—NO_2$, $—NH—CO—(CH_2)_q—Z_3$, $—CH_2—Z_3$, $—SO_2—NH_2$, $—SO_2—NH—(CH_2)_q—Z_3$,

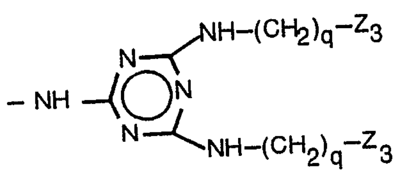 oder $CO—NH—(CH_2)_q—Z_3$,

$R_{22d}$ Wasserstoff, $—CH_2—Z_3$, $—SO_2—N(CH_3)_2$, $—NO_2$, $—SO_2—NH—(CH_2)_q—OH$,

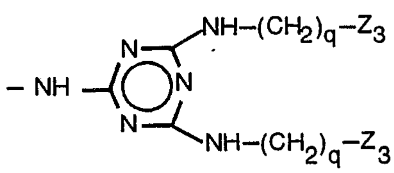

$—SO_2—NH—(CH_2)_q—Z_3$, $—CO—NH—(CH_2)_q—Z_3$ oder $—NH—CO—(CH_2)_q—Z_3$,

$R_{51}$ $—(CH_2)_q$,

$—NH—CO—(\overset{*}{C}H_2)_q—$, $—CO—NH—(\overset{*}{C}H_2)_q—$ oder $—SO_2—NH—(\overset{*}{C}H_2)_q$,

$R_{52}$ Wasserstoff, $—Cl$, $—Br$, $—CH_3$ oder $—OCH_3$,

$R_{53}$ Wasserstoff, $—NH—(CH_2)_q—Z_3$, $—NH—C_2H_4OH$, $—Cl$, $—Br$, $—CH_3$ oder $—OCH_3$;

$R_{54}$ Wasserstoff,

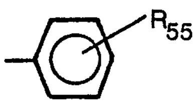 , 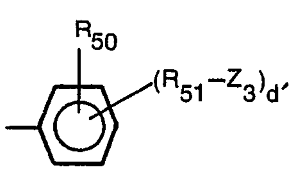 oder 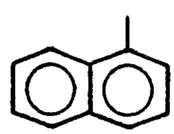

$Z_3$

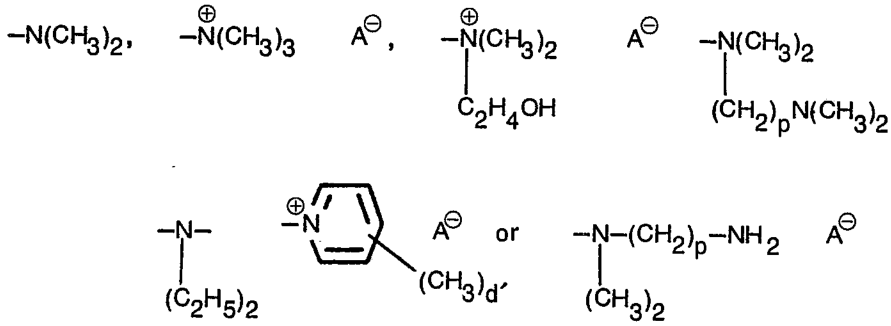
or

$—D_1—Z_3$ die Bedeutungen von $—D_1—Z_2$ mit Ausnahme, dass $Z_2$ durch $Z_3$ ersetzt ist, bedeuten, worin $R_g'''$ Wasserstoff, $CH_3$, $—C_2H_5$, $i\text{-}C_3H_7$, $i\text{-}C_4H_9$, $n\text{-}C_3H_7$, $n\text{-}C_4H_9$, $—C_2H_4OH$ oder $—(CH_2)_q—Z_3$, q 1, 2, 3 oder 4 bedeuten.

5. Eine Verbindung gemäss Anspruch 1 in der 1:2-Metallkomplexform der Formel IIIm)

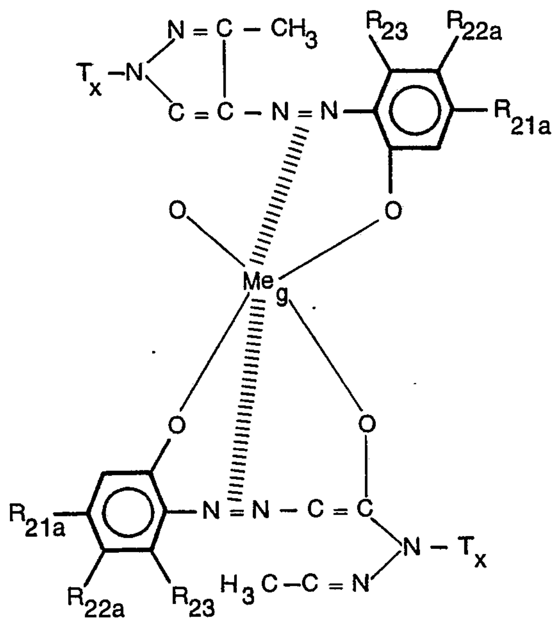

IIIm

worin jedes $T_x$ unabhängig voneinander für

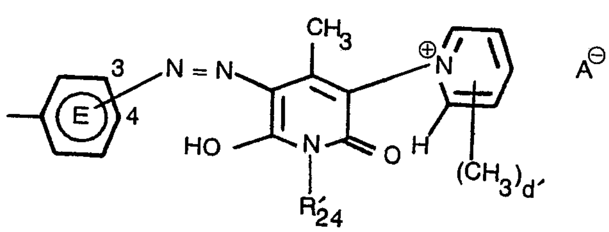

steht,

worin $Me_g$ Chrom, Eisen oder Kobalt,

$R_{21a}$ Wasserstoff, $—CH_2—Z_2$, $—NH—CO—(CH_2)_a—Z_2$, $—CO—CH_2—Z_2$, $—NO_2$, $—SO_2—NH_2$, $—CO—NH—(CH_2)_{m'}—Z_2$, $—SO_2—NH—(CH_2)_{m'}—Z_2$ oder —NH 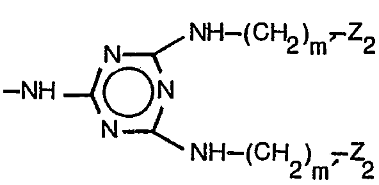 ;

$R_{22a}$ Wasserstoff, $-NO_2$, $-SO_2-NH_2$, $-SO_2-NH-(CH_2)_2-OH$, $-CH_2-Z_2$, $-NH-CO-(CH_2)_a-Z_2$,

$-SO_2-NH-(CH_2)_{m'}-Z_2$ oder —NH 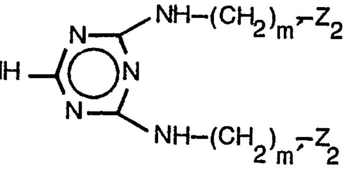 ;

bedeuten,

die andern Symbole wie zuvor definiert und

$R_{23}$ in Anspruch 1 definiert ist, mit den Massgaben, dass

(i) im Ring E die Azobrücke in 3- oder 4-Stellung gebunden ist,

(ii) $R_{21a}$ und $R_{22a}$ nicht beide $NO_2$ bedeuten, oder eine Verbindung der Formel IIIp oder der Formel IIIq

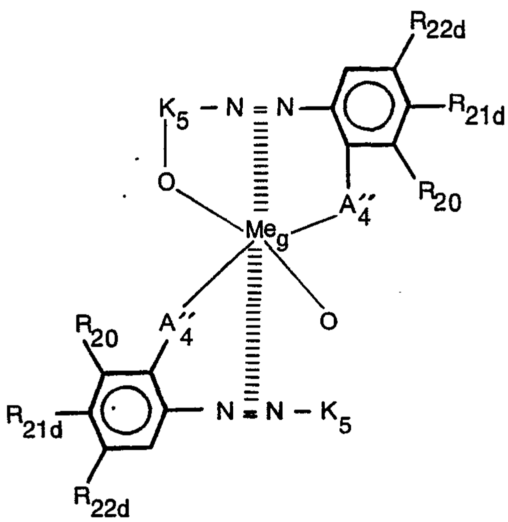 IIIp

oder

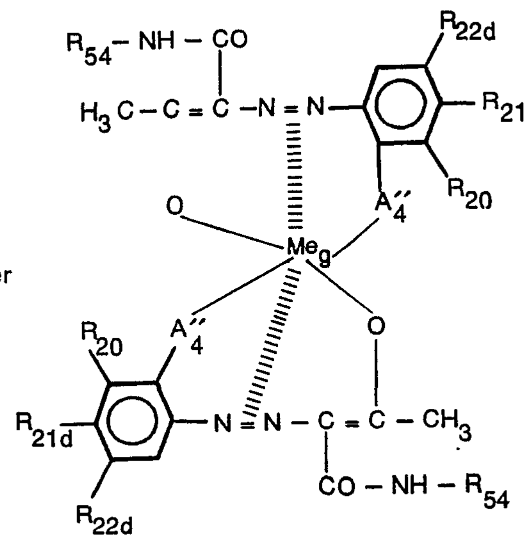 IIIq

worin $R_{21d}$ Wasserstoff, $-NO_2$, $-NH-CO(CH_2)_q-Z_3$, $-CH_2-Z_3$, $-SO_2-NH_2$, $-SO_2-NH-(CH_2)_q-Z_3$,

– NH 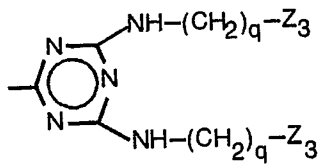 oder $CO-NH-(CH_2)_q-Z_3$,

$R_{22d}$ Wasserstoff, $-CH_2-Z_3$, $-SO_2-N(CH_3)_2$, $-NO_2$, $-SO_2-NH-(CH_2)_q-OH$,

– NH 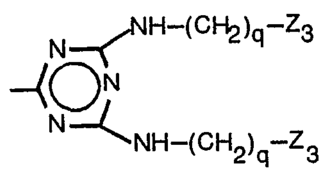

$-SO_2-NH-(CH_2)_q-Z_3$, $-CO-NH-(CH_2)_q-Z_3$ oder $-NH-CO-(CH_2)_q-Z_3$,

$A_4''$ —O— oder —COO—,

$-K_5-O-$ eine der Formeln IIIba bis IIIbf

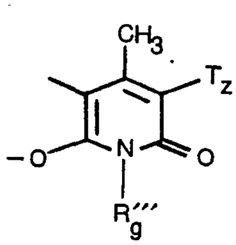 IIIba

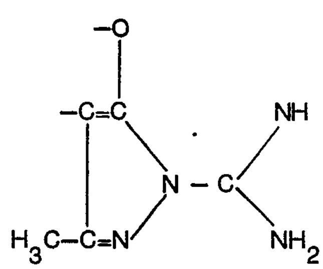 IIIbb

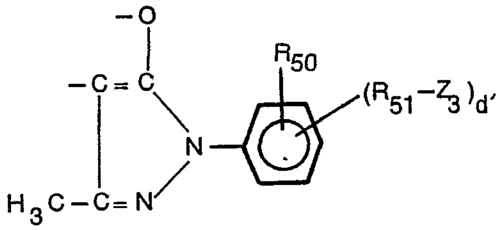 IIIbc

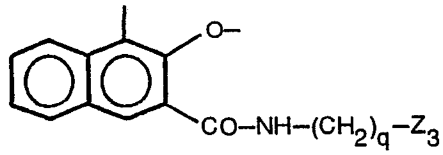 IIIbd

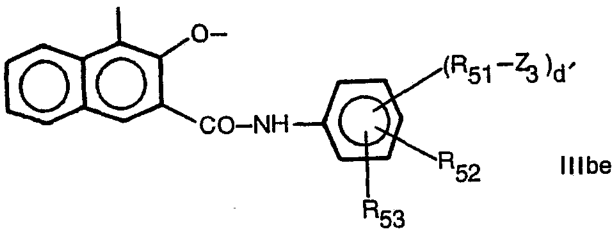 IIIbe

oder

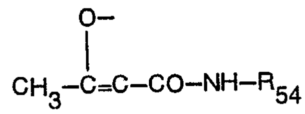 IIIbf

bedeuten,

$R_{51}$ $-(CH_2)_q-$,

$-NH-CO-\overset{*}{(CH_2)_q}-$, $-CO-NH-\overset{*}{(CH_2)_q}-$ oder $-SO_2-NH-\overset{*}{(CH_2)_q}-$,

$R_{52}$ Wasserstoff, $-Cl$, $-Br$, $-CH_3$ oder $-OCH_3$;
$R_{53}$ Wasserstoff, $-NH-(CH_2)_q-Z_3$, $-NH-C_2H_4OH$, $-Cl$, $-Br$, $-CH_3$ oder $-OCH_3$;
$R_{54}$ Wasserstoff,

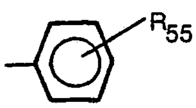 , 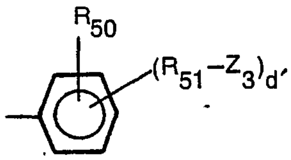 oder 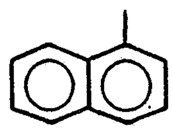

$Z_3$

$-N(CH_3)_2$, $-\overset{\oplus}{N}(CH_3)_3$ $A^{\ominus}$, 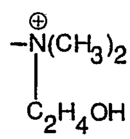 $A^{\ominus}$ 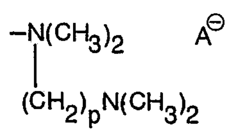 $A^{\ominus}$

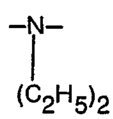 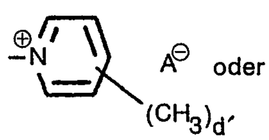 $A^{\ominus}$ oder 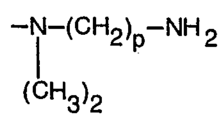 $A^{\ominus}$

bedeuten,

worin $-D_1-Z_3$ die Bedeutungen von $-D_1-Z_2$ haben, mit der Ausnahme, dass $Z_2$ durch $Z_3$ ersetzt ist und

d' für 0 oder 1 steht.

6. Verfahren zum Färben von Substraten, dadurch gekennzeichnet, dass man hierzu eine Verbindung de Formel III gemäss Anspruch 1 verwendet.

7. Leder oder Papier gefärbt nach einem Verfahren gemäss Anspruch 6.

8. Verfahren zur Herstellung von Azoverbindungen der Formel III gemäss Anspruch 1, dadurch gekennzeichnet, dass man die Diazoverbindung aus einem Amin der Formel γ

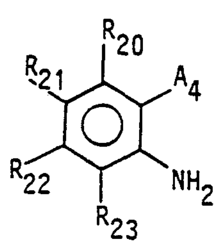 γ

worin die Symbole im Anspruch 1 definiert sind mit einer Kupplungskomponente der Formel δ

$$K_2—H \qquad δ$$

kuppelt,

worin die Symbole im Anspruch 1 definiert sind, und metallisierbaren mit einer metallabgebenden Verbindung, die fähig ist einen 1:1-oder 1:2-Metallkomplex zu bilden oder die fähig ist einen 1:1-oder 1:2-Metallkomplex zu bilden.

**Revendications**

1. Un composé azoïque sous forme de complexe métallifère 1:1 ou de compexe métallifère 1:2 ayant une moyenne au moins 2 groupes basiques hydrosolubilisants par unité de colorant, le composé répondant à la formule III

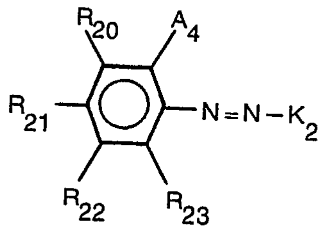

III

dans laquelle

$A_4$ et un groupe hydroxy ou amino sur $K_2$ forment ensemble le groupe —NH—Me—O—, —NH—Me—NH—, —NH—Me—OOC—, —O—Me—O— ou —O—Me—OOC— où Me est un métal capable de former soit un complexe métallifère 1:1, soit un complexe métallifère 1:2, ou capable de former aussi bien un complexe métallifère 1:1 qu'un complexe métallifère 1:2,

$K_2$ représente l'un des groupes de formule

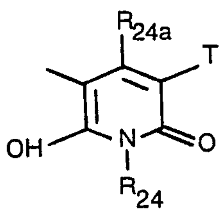

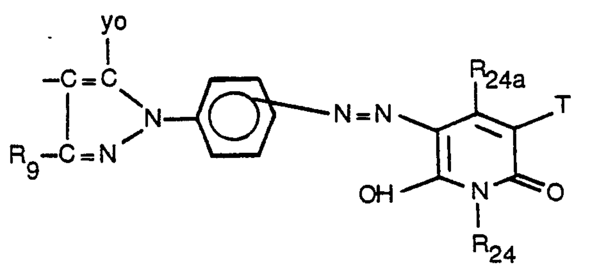

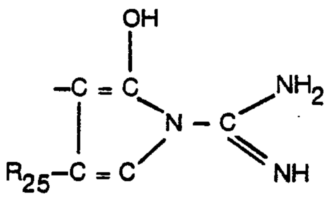

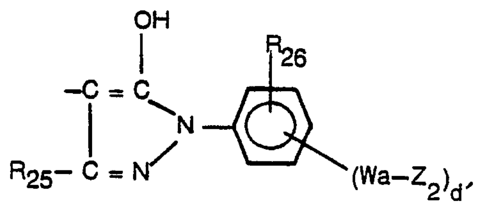

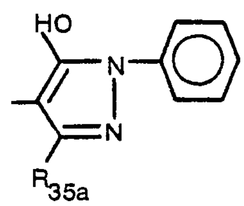

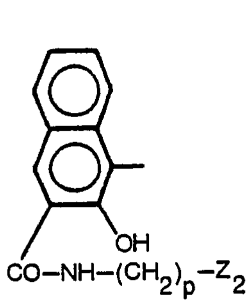

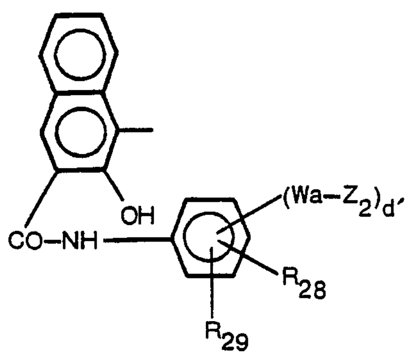

$CH_3—CO—CH—CO—NH—R_{32}$

où $R_9$ signifie $—CH_3$ ou —COOH et yo signifie OH ou $NH_2$,
$R_{20}$ représente l'hydrogène ou $—NO_2$,
$R_{21}$ représente l'hydrogène, $—NO_2$, $—NH—(CH_2)_s—Z_2$, $—CH_2—Z_2$, $—SO_2—NH—(CH_2)_s—Z_2$, $—SO_2—NH_2$, $—CO—CH_2—Z_2$, $—CO—NH—(CH_2)_s—Z_2$ ou 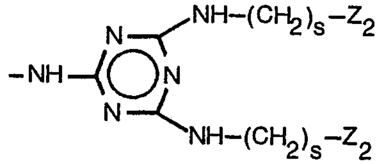

$R_{22}$ représente l'hydrogène, $—NO_2$, $—SO_2—NH_2$, $—SO_2—N(R_{22a})$ $—SO_2—NH—(CH_2)_s—OH$, $—CH_2—Z_2$, $—SO_2—NH—(CH_2)_s—Z_2$, $—CO—NH—(CH_2)_s—Z_2$, $—NH—CO—(CH_2)_s—Z_2$ ou

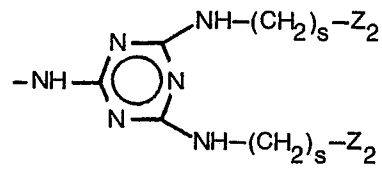

où $R_{22a}$ représente un groupe alkyle en $C_1—C_4$;
$R_{23}$ représente l'hydrogène ou $—CH_3$;
T représente

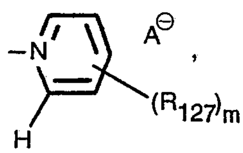 $A^\ominus$ , 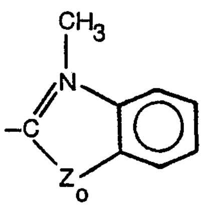 $A^\ominus$ , $—CO—NH_2$, $—NH_2$, $—N(CH_3)_2$, $—\overset{\oplus}{N}(CH_3)_3$ $A^\ominus$

ou —CN, où $Z_o$ représente —S—, —O—, ou $—N—R_{35}$; où
$R_{35}$ représente l'hydrogène, un groupe alkyle en $C_1—C_4$ ou $—CH_2—COO—R_{35a}$ où $R_{35a}$ représente un groupe alkyle;
$R_{127}$ représente un groupe méthyle ou éthyle;
m signifie 0, 1 ou 2;
$Z_2$ représente un groupe de formule

$-NH_2$ ; $-N(R_o)_2$ ; $-\overset{\oplus}{N}(R_o)_3$ $A^\oplus$

$-\overset{\oplus}{N}(RCH_3)_2-(CH_2)_p-NH_2$ 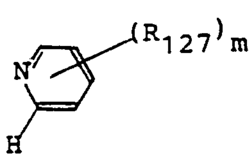

ou $-\overset{\oplus}{N}(CH_3)_2-(CH_2)_p-N(CH_3)_2$ $A^\ominus$

P signifie 1, 2 ou 3;
où chaque $R_o$ représente indépendamment un groupe méthyle, éthyle, β-hydroxyéthyle, benzyle, $—CH_2COCH_3$ ou $-CH_2-CO-$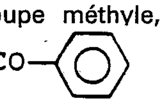

avec la condition que pas plus d'un groupe benzyle, $—CH_2COCH_3$ ou $-CH_2CO-$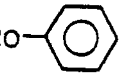

ou pas plus de deux groupes β-hydroxyéthyle soient fixés à un atome d'azote,

$R_{24}$ représente l'hydrogène, un groupe alkyle en $C_1$—$C_4$, $—C_2H_4OH$, $—(CH_2)_p—Z_2$,

benzyle, 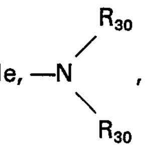 , $—(CH_2)_3OCH_3$; 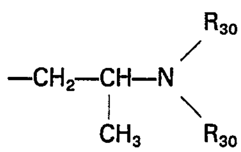 ; 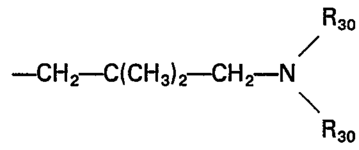 ;

$R_{24a}$ représente un groupe alkyle en $C_1$—$C_4$, de préférence $—CH_3$;

$R_{25}$ représente un groupe alkyle en $C_1$—$C_4$, $—COO—(R_{25a})$ ou COOH où $R_{25a}$ représente un groupe alkyle en $C_1$—$C_4$;

$R_{26}$ représente l'hydrogène, un halogène ou un groupe alkyle en $C_1$—$C_4$ ou alcoxy en $C_1$—$C_4$;

Wa représente

$$—(CH_2)_s—,\ —NHCO(\overset{*}{C}H_2)_s—,\ —CONH—(\overset{*}{C}H_2)_s—\ \text{ou}\ —SO_2—NH—(\overset{*}{C}H_2)_s—,$$

dans lesquels l'atome de carbone marqué d'un astérisque est fixé à l'atome d'azote du groupe $Z_2$ défini ci-dessus,

s signifie 1, 2, 3, 4, 5 ou 6; p signifie 1, 2 ou 3;

$R_{28}$ représente l'hydrogène, un groupe alkyle en $C_1$—$C_4$, alcoxy en $C_1$—$C_4$ ou un halogène,

$R_{29}$ représente l'hydrogène, un groupe alkyle en $C_1$—$C_4$, alcoxy en $C_1$—$C_4$, un halogène, $—NH—(CH_2)_s—Z_2$ ou $—NH—C_2H_4OH$;

chaque $R_{30}$ représente indépendamment de l'hydrogène ou un groupe alkyle en $C_1$—$C_4$;

$R_{32}$ représente l'hydrogène,

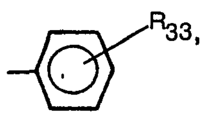 , 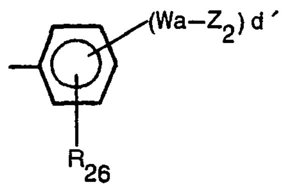 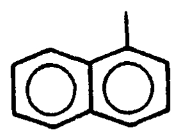 ,

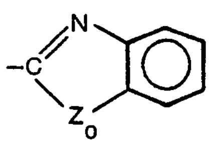 ou 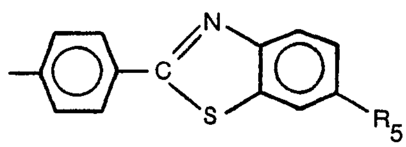 ;

où d' signifie 0 ou 1, $Z_o$, Wa et $R'_5$ sont définis ci-dessus;

$R_{33}$ signifie l'hydrogène, un halogène, un groupe alkyle en $C_1$—$C_4$, alcoxy en $C_1$—$C_4$, $—SO_2NH_2$ ou $—SO_2N(CH_3)_2$;

$R_5$ représente l'hydrogène où un groupe alkyle en $C_1$—$C_4$ et alcoxy en $C_1$—$C_4$; et $A^{\ominus}$ représente un anion non-chromophore;

avec les conditions que

i) $R_{20}$ et $R_{21}$ ne signifient pas tous les deux $—NO_2$,

ii) $R_{21}$ et $R_{22}$ ne représentent pas le même groupe, sauf s'ils signifient tous les deux l'hydrogène,

iii) $R_{20}$ ne représente pas $—NO_2$ lorsque $R_{21}$ et $R_{22}$ signifient tous les deux l'hydrogène.

2. Un composé azoïque sous forme non-métallisée, ayant une moyenne d'au moins deux groupes basiques hydrosolubilisants par unité de colorant, le composé répondant à la formule III

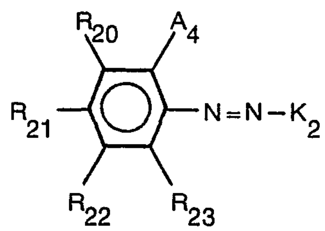 III

dans laquelle $A_4$ représente l'hydrogène, OH, $NH_2$, alcoxy en $C_1$—$C_4$ ou COOH,:

$K_2$ représente un des groupes de formule

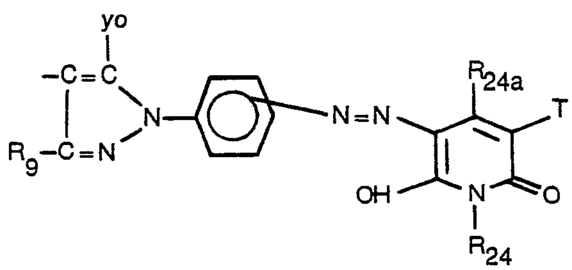

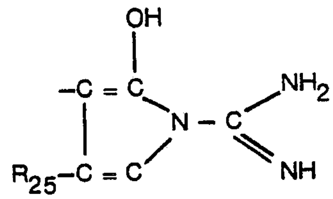

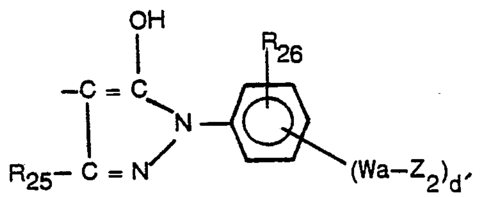

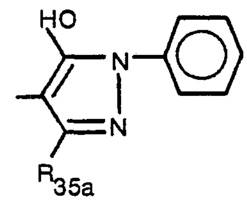

et les autres symboles sont définis à la revendication 1.

3. Un composé selon la revendication 2 sous forme non-métallisée de formule IIIa

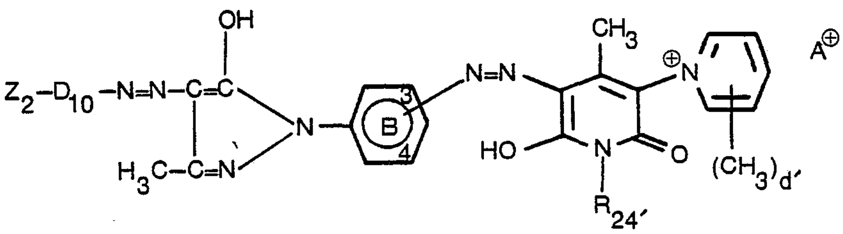

IIIa

dans laquelle

$R'_{24}$ représente l'hydrogène, $-N(CH_3)_2$, $-CH_3$, $-C_2H_5$, $n-C_3H_7$, $n-C_4H_9$, $i-C_3H_7$, $i-C_4H_9$, benzyle, $-C_2H_4OH$,

$$-(CH_2)_{m'}-Z_2,\ -CH_2-CH(CH_3)-N(CH_3)_2 \text{ ou } -CH_2-CH-(CH_3)_2-CH_2-N(CH_3)_2;$$

m' signifie 2 ou 3;

$Z_2-D_{10}$ représente

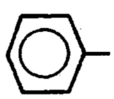 , 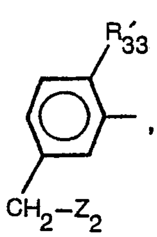 , 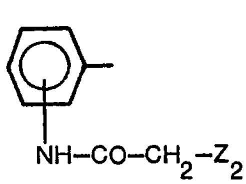 , 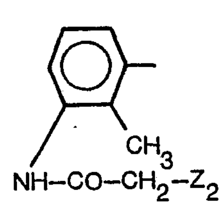 , 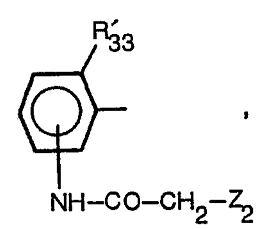 ,

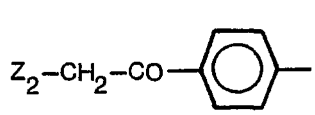 , 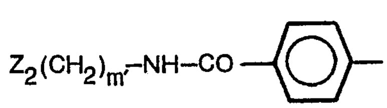 ,

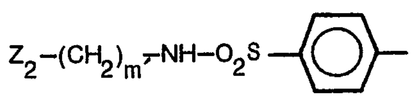
,
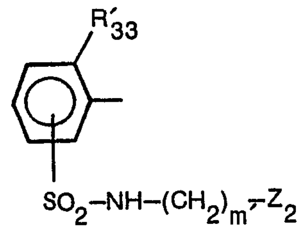

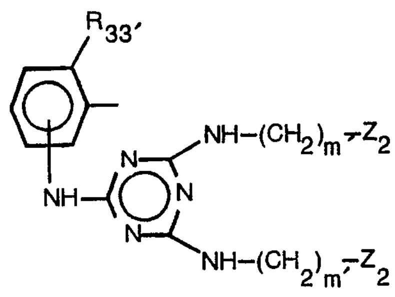
ou
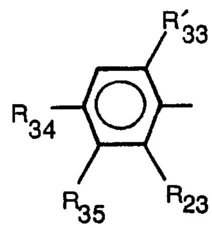
,

$R'_{33}$ représente —OH, —$OCH_3$, —$OC_2H_5$ ou —COOH;
$R_{34}$ représente l'hydrogène, —$NO_2$, —$SO_2$—$NH_2$ ou —$CH_2$—$Z_2$;
$R_{35}$ représente l'hydrogène, —$NO_2$, —$SO_2NH$—$(CH_2)_2$—OH, —$SO_2$—$NH_2$, —$SO_2$—$NH(CH_2)_3N(CH_3)_2$— ou

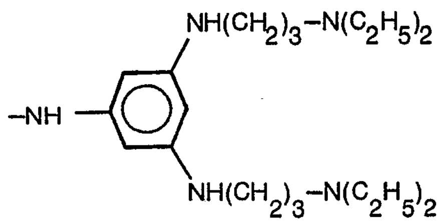

et les autres symboles sont définis à la revendication 1, avec les conditions que

i) le pont azo dans le cycle B soit en position 3 ou 4,

ii) $R_{34}$ et $R_{35}$ ne signifient pas tous les deux —$NO_2$;

ou un composé de formule (IIIc)

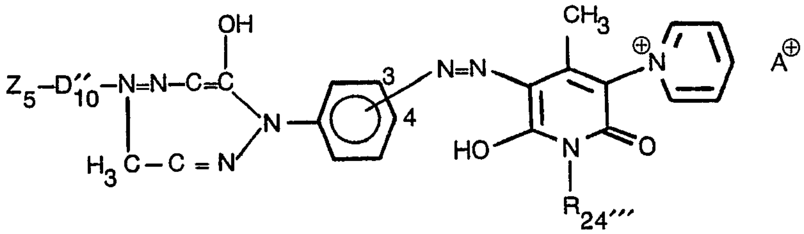
IIIc

dans laquelle

$R_{24}'''$ représente l'hydrogène, —$C_2H_4OH$, —$(CH_2)_3$—$N(CH_3)_2$, —$(CH_2)_3$—$N(C_2H_5)_2$ ou

$$—(CH_2)_3—{}^{\oplus}N(CH_3)_3\ A^{\ominus},$$

$Z_5—D''_{10}$ représente

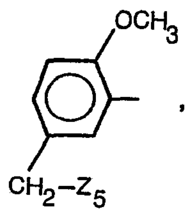
,
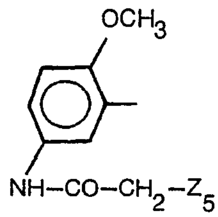
,
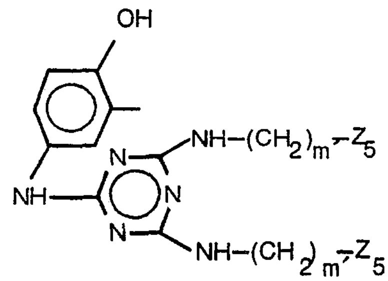

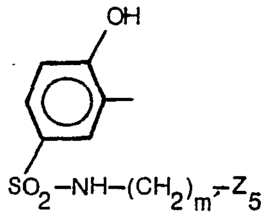
ou
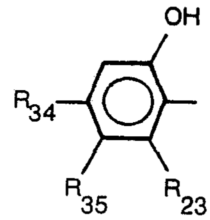
,

$Z_5$ représente

$-N(CH_3)_2$, $-N(C_2H_5)_2$, $-\overset{\oplus}{N}(CH_3)_3\ A^{\ominus}$ ou 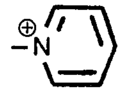 $A^{\ominus}$

et tous les autres symboles sont définis ci-dessus, avec la condition que $R_{34}$ et $R_{35}$ ne signifient pas tous les deux $NO_2$;
ou un composé de formule IIId

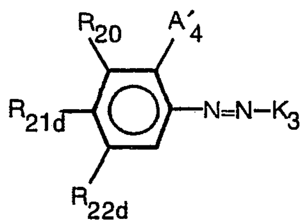
IIId

dans laquelle

$A'_4$ représente l'hydrogène, —OH, —$OCH_3$ ou —COOH;

$R_{20}$ représente l'hydrogène ou $NO_2$;

$R_{21d}$ représente l'hydrogène, —$NO_2$, —NH—CO—$(CH_2)_q$—$Z_3$, —$CH_2$—$Z_3$, —$SO_2$—$NH_2$,

—$SO_2$—NH—$(CH_2)_q$—$Z_3$, 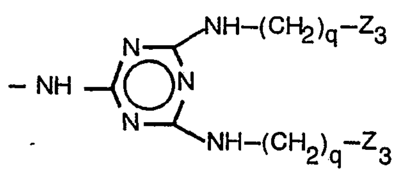 ou CO—NH—$(CH_2)_q$—$Z_3$,

$R_{22d}$ représente l'hydrogène, —$CH_2$—$Z_3$, —$SO_2$—$N(CH_3)_2$, —$NO_2$, —$SO_2$—NH—$(CH_2)_q$—OH,

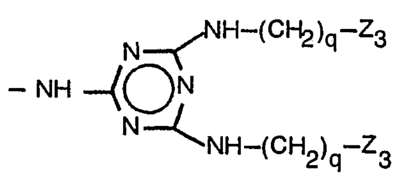

—$SO_2$—NH—$(CH_2)_q$—$Z_3$, —CO—NH—$(CH_2)_q$—$Z_3$ ou —NH—CO—$(CH_2)_q$—$Z_3$,

$K_3$ représente

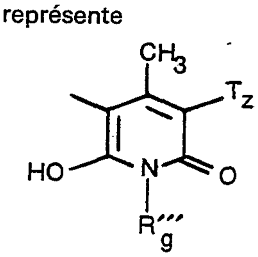
, IIaa

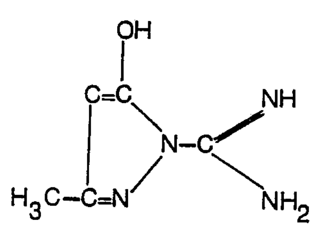
IIab

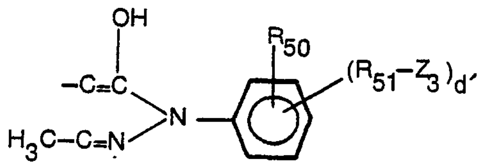 IIIac

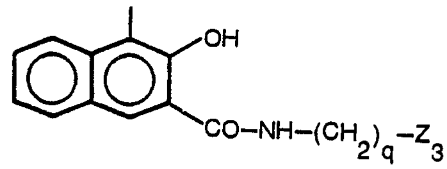 IIIad

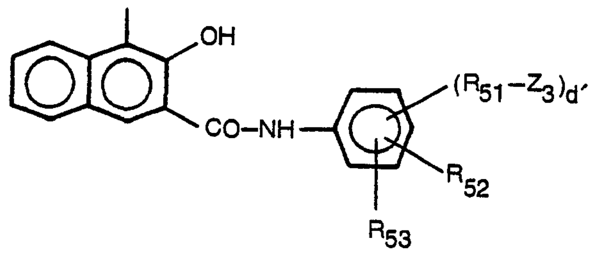 IIIae

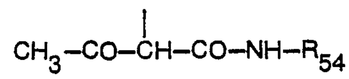 IIIaf

où

$T_z$ représente

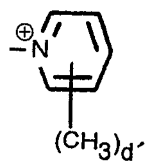 $A^{\ominus}$ ou $-CN$;

$Z_3$ représente

$-N(CH_3)_2$, $-\overset{\oplus}{N}(CH_3)_3$ $A^{\ominus}$, 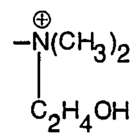 $A^{\ominus}$ 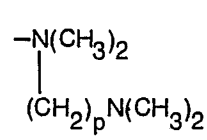

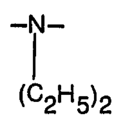 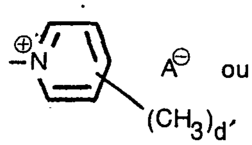 $A^{\ominus}$ ou 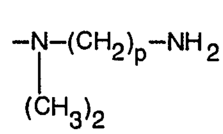 $A^{\ominus}$

$R_9''$ représente l'hydrogène, $CH_3$, $—C_2H_5$, $i\text{-}C_3H_7$, $i\text{-}C_4H_9$, $n\text{-}C_3H_7$, $n\text{-}C_4H_9$, $—C_2H_4OH$, $—(CH_2)_q—Z_3$;
$R_{50}$ représente l'hydrogène, —Cl, —Br, $—CH_3$ ou $OCH_3$;
$R_{51}$ représente

$$—(CH_2)_q—, —NH—CO—(\overset{*}{C}H_2)_q—, —CO—NH—(\overset{*}{C}H_2)_q— \text{ ou } —SO_2—NH—(\overset{*}{C}H_2)_q—;$$

$R_{52}$ représente l'hydrogène, —Cl, —Br, $—CH_3$ ou $—OCH_3$;
$R_{53}$ représente l'hydrogène, $—NH—(CH_2)_q—Z_3$, $—NH—C_2H_4OH$, —Cl, —Br, $—CH_3$ ou $—OCH_3$;
$R_{54}$ représente l'hydrogène,

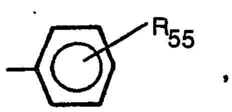 , 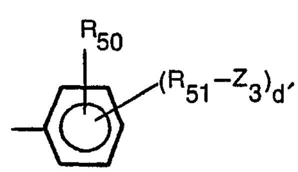 ou 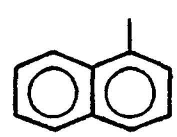

$R_{55}$ représente l'hydrogène, —Cl, —Br, $—CH_3$, $—OCH_3$, $—SO_2NH_2$ ou $—SO_2—N(CH_3)_2$
avec les conditions que

i) $R_{21}d$ et $R_{22d}$ ne soient pas tous les deux identiques sauf s'ils signifient tous les deux l'hydrogène;

ii) $R_{20}$ et $R_{21d}$ ne signifient pas tous les deux $NO_2$;

iii) l'atome de carbone marqué d'un astérisque ne soit pas fixé à l'atome d'azote du groupe basique ou ammonium quaternaire; et

iv) $R_{20}$ ne représente pas $NO_2$ lorsque $R_{21d}$ et $R_{22d}$ signifient tous les deux l'hydrogène, ou un composé de formule IIIe

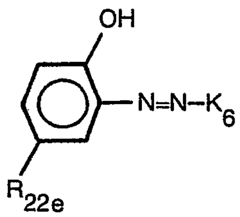

IIIe

dans laquelle

$R_{22e}$ représente l'hydrogène, $-CH_2-Z_5$, $-SO_2-NH-(CH_2)'_m-Z_5$, $-CO-NH-(CH_2)'_m-Z_5$, $-NO_2$,

$-NH-CO-(CH_2)_a-Z_5$ ou 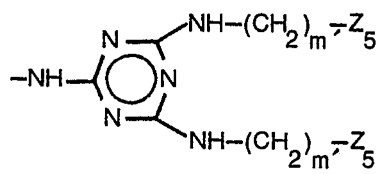

m' signifie 2 ou 3;

$Z_5$ représente

$-N(CH_3)_2$, $-N(C_2H_5)_2$, $-N(CH_3)_3$ $A^{\ominus}$,

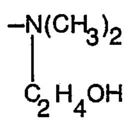 $A^{\ominus}$ or 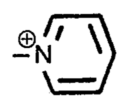 $A^{\ominus}$,

$K_6$ représente

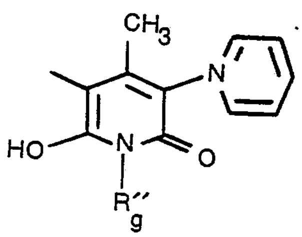 A IIIa$_1$

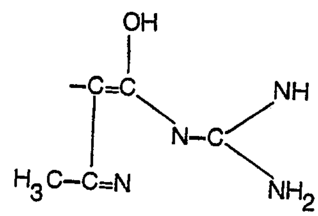 IIIb$_1$

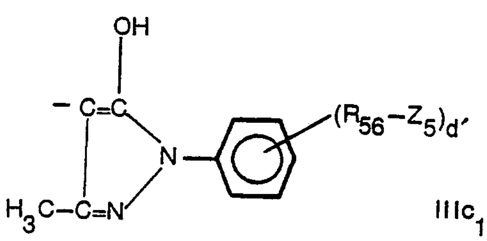 IIIc$_1$

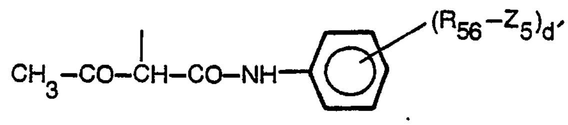 IIId$_1$

$R_{56}$ représente

$-(CH_2)'_m-$, $-NH-CO-\overset{*}{C}H_2)_a-$, $-CO-NH-(\overset{*}{C}H_2)_{m'}-$ ou $-SO_2NH-(\overset{*}{C}H_2)_{m'}-$

où p'' signifie 2 ou 3 et l'atome de carbone marqué d'un astérisque est fixé au groupe $Z_5$ et tous les autres symboles sont tels que définis ci-dessus ou à la revendication 1.

4. Un composé selon la revendication 1 sous forme de complexe métallifère 1:1 de formule IIIf

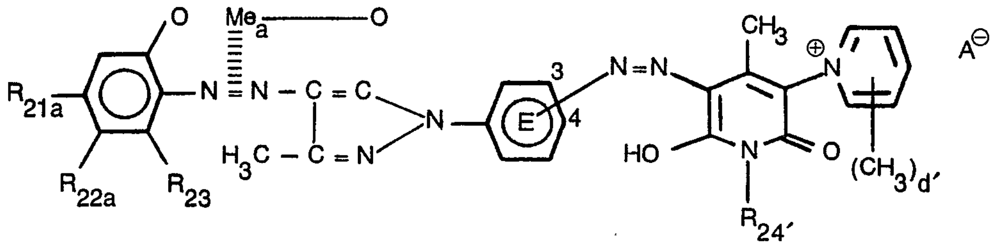

IIIf

dans laquelle

$R_{21a}$ représente l'hydrogène, $-CH_2-Z_2$, $-NH-CO-(CH_2)_a-Z_2$, $-CO-CH_2-Z_2$, $-NO_2$, $-SO_2-NH_2$, $-CO-NH-(CH_2)_{m'}-Z_2$, $-SO_2-NH-(CH_2)_{m'}-Z_2$ ou 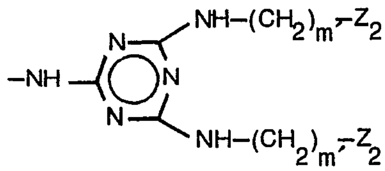 ;

$R_{22a}$ représente l'hydrogène, $-NO_2$, $-SO_2-NH_2$, $-SO_2-NH-(CH_2)_2-OH$, $-CH_2-Z_2$, $-NH-CO-(CH_2)_a-Z_2$ $-SO_2-NH-(CH_2)_{m'}-Z_2$ ou 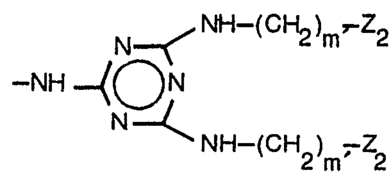 ;

$R_{23}$ est défini à la revendication 1;

$Me_a$ signifie le cuivre, le cobalt, le fer ou le chrome,

$R_{24}'$ représente l'hydrogène, $-N(CH_3)_2$, $-CH_3$, $-C_2H_5$, n-$C_3H_7$, n-$C_4H_9$, i-$C_3H_7$, i-$C_4H_9$, benzyle, $-C_2H_4OH$, $-(CH_2)_{m'}-Z_2$, $-CH_2-\underset{CH_3}{\underset{|}{CH}}-N(CH_3)_2$ ou $-CH_2-CH-(CH_3)_2-CH_2-N(CH_3)_2$;

m' signifie 2 ou 3;

$Z_2-D_{10}$ représente

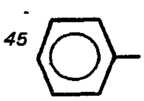 , 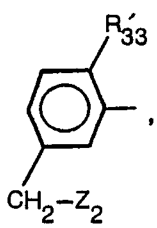 , 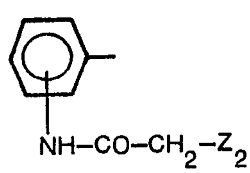 , 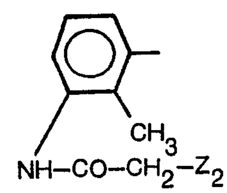 , 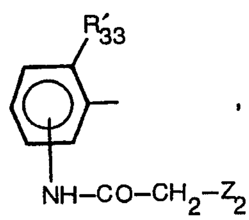 ,

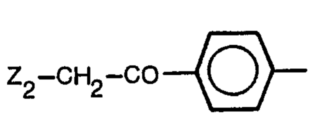 , 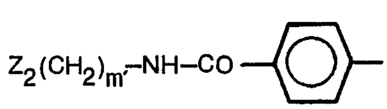 ,

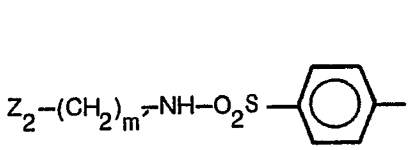 , 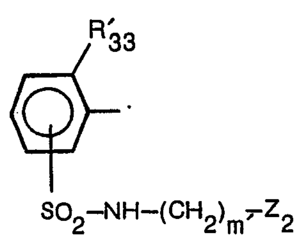

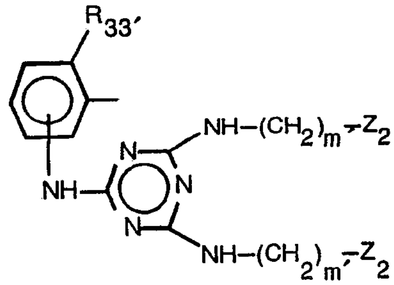

ou

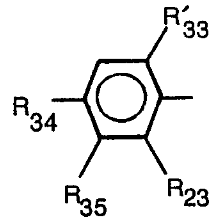

,

d' signifie 0 ou 1; et les autres symboles sont définis à la revendication 1, avec les conditions que

i) le pont azo soit en position 3 ou 4 dans le cycle E; et

ii) $R_{21a}$ et $R_{22a}$ ne signifient pas tous les deux $—NO_2$, ou un composé de formule IIIg

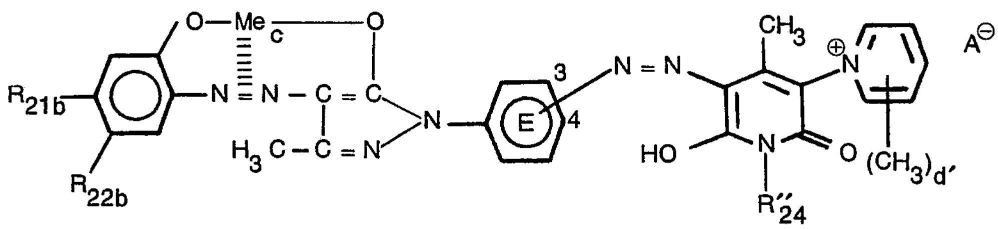

IIIg

dans laquelle

$R_{21b}$ et $R_{22b}$ signifient indépendamment l'hydrogène, $—CH_2—Z_3$, $—NO_2$, $—SO_2—NH_2$, $—NH—CO—CH_2—Z_3$, $—SO_2—NH—(CH_2)_{m'}—Z_3$ ou

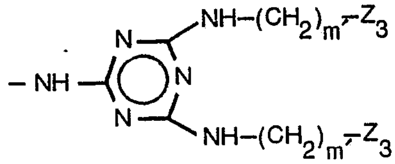

$R''_{24}$ signifie l'hydrogène, $—CH_3$, $—C_2H_5$, $—C_2H_4OH$ ou $—(CH_2)_{m'}—Z_3$;

$Z_3—D'_{10}$ représente

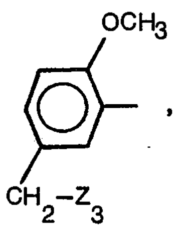

,

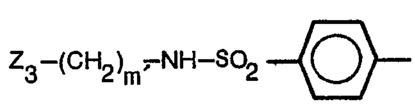

,

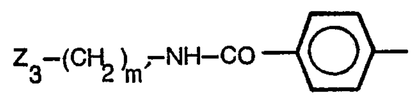

,

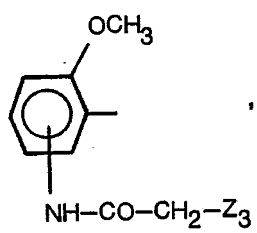

,

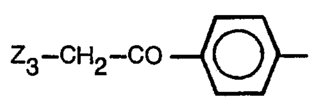

,

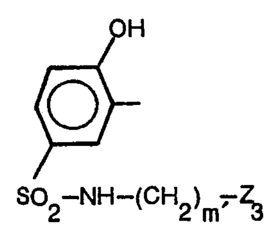

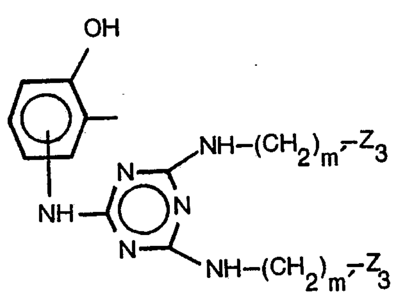

ou

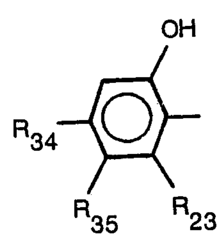

d' est défini ci-dessus; et

$Me_c$ signifie le cuivre, le cobalt ou le chrome;

et tous les autres symboles sont définis à la revendication 1 ou 3;

avec les conditions que

i) $R_{34}$ et $R_{35}$ ne signifient pas tous les deux $—NO_2$,

ii) $R_{21b}$ et $R_{22b}$ ne signifient pas tous les deux $—NO_2$;

ou un composé de formule IIIi

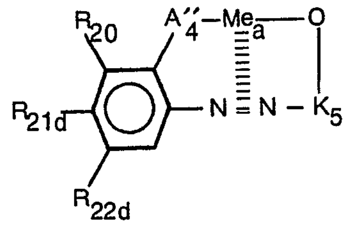

IIIi

un composé de formule IIIj

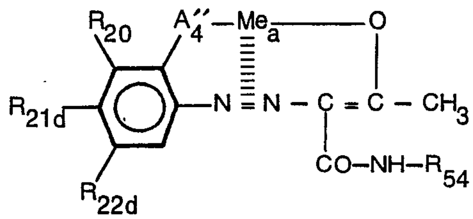

IIIj

dans lesquelles

$A_4''$ représente —O— ou —COO—,

$—K_5—O—$ répond à l'une des formules IIIba à IIIbf suivantes

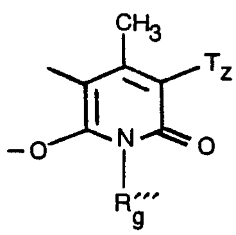

IIIba

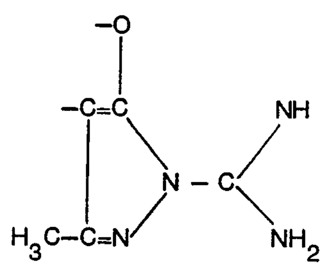

IIIbb

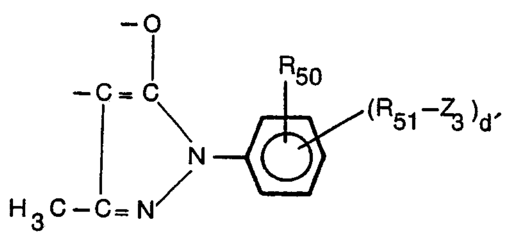

IIIbc

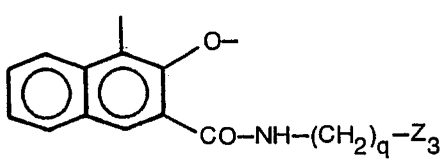

IIIbd

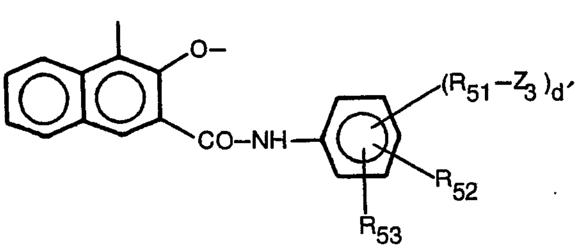

IIIbe

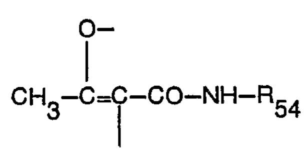

IIIbf

$R_{20}$ est défini à la revendication 1;
$R_{21d}$ représente l'hydrogène, $—NO_2$, $—NH—CO—(CH_2)_q—Z_3$, $—CH_2—Z_3$, $—SO_2—NH_2$,

$—SO_2—NH—(CH_2)_q—Z_3$, 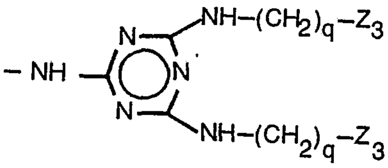 ou $CO—NH—(CH_2)_q—Z_3$,

$R_{22d}$ représente l'hydrogène, $—CH_2—Z_3$, $—SO_2—N(CH_3)_2$, $—NO_2$, ou $—SO_2—NH—(CH_2)_q—OH$,

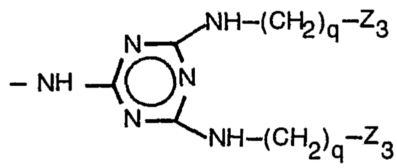

$—SO_2—NH—(CH_2)_q—Z_3$, $—CO—NH—(CH_2)_q—Z_3$ ou $—NH—CO—(CH_2)_q—Z_3$,

$R_{51}$ représente

$—(CH_2)_q—$, $—NH—CO—(\overset{*}{C}H_2)_q—$, $—CO—NH—(\overset{*}{C}H_2)_q—$ ou $—SO_2—NH—(\overset{*}{C}H_2)_q—$;

$R_{52}$ représente l'hydrogène, $—Cl$, $—Br$, $—CH_3$ ou $—OCH_3$;
$R_{53}$ représente l'hydrogène, $—NH—(CH_2)_q—Z_3$, $—NH—C_2H_4OH$, $—Cl$, $—Br$, $—CH_3$ ou $—OCH_3$;
$R_{54}$ représente l'hydrogène,

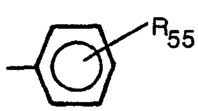 , 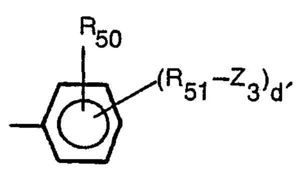 ou 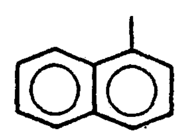

$Z_3$ représente

$-N(CH_3)_2$, $-\overset{\oplus}{N}(CH_3)_3$ $A^{\ominus}$, 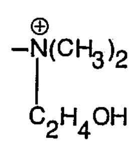 $A^{\ominus}$ 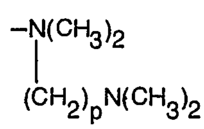

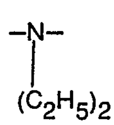 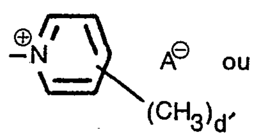 $A^{\ominus}$ ou 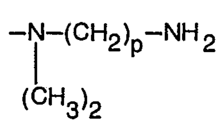 $A^{\ominus}$

où
$—D_1—Z_3$ a les significations de $—D_1—Z_2$ excepté que $Z_2$ est remplacé par $Z_3$
$R_9''$ représente l'hydrogène, $CH_3$, $—C_2H_5$, $i-C_3H_7$, $i-C_4H_9$, $n-C_3H_7$, $n-C_4H_9$, $—C_2H_4OH$, $—(CH_2)_q—Z_3$;
q signifie 1, 2, 3 ou 4.

5. Un composé selon la revendication 1 sous forme de complexe métallifère 1:2 de formule IIIm

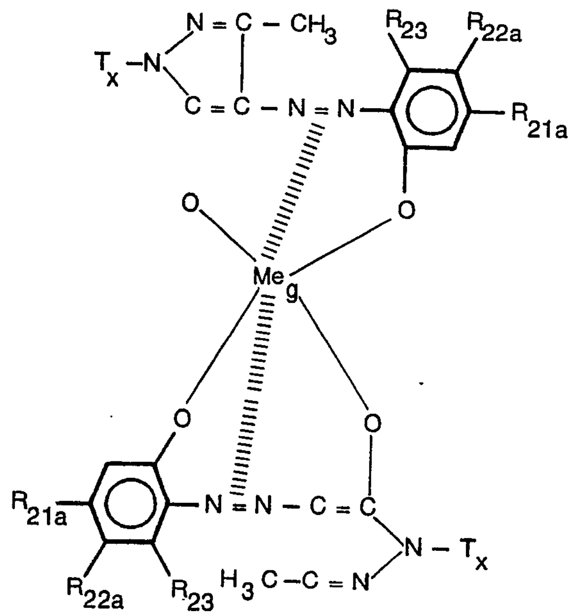

IIIm

dans laquelle chaque $T_x$, indépendamment, représente

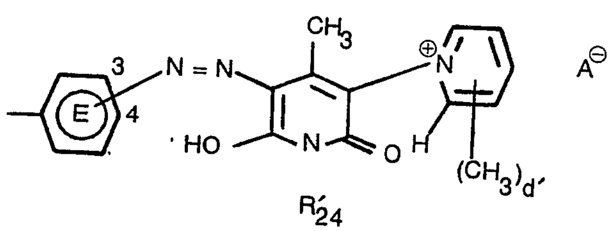

$Me_g$ signifie le chrome, le fer ou le cobalt,
$R_{21a}$ représente l'hydrogène, $-CH_2-Z_2$, $-NH-CO-(CH_2)_a-Z_2$, $-CO-CH_2-Z_2$, $-NO_2$, $-SO_2-NH_2$, $-CO-NH-(CH_2)_{m'}-Z_2$, $-SO_2-NH-(CH_2)_{m'}-Z_2$ ou 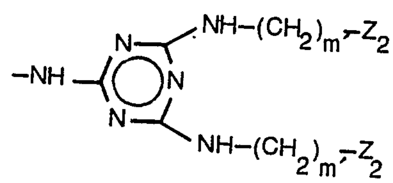 ;

$R_{22a}$ représente l'hydrogène, $-NO_2$, $-SO_2-NH_2$, $-SO_2-NH-(CH_2)_2-OH$, $-CH_2-Z_2$, $-NH-CO-(CH_2)_a-Z_2$, $-SO_2-NH-(CH_2)_{m'}-Z_2$ ou 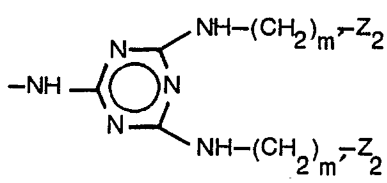 ;

et les autres symboles sont définis ci-dessus;
$R_{23}$ est défini à la revendication 1;
avec les conditions que

i) le pont azo soit en position 3 ou 4 dans le cycle E et

ii) $R_{21a}$ et $R_{22a}$ ne signifient pas tous les deux $—NO_2$;

ou un composé de formule IIIp ou de formule IIIq

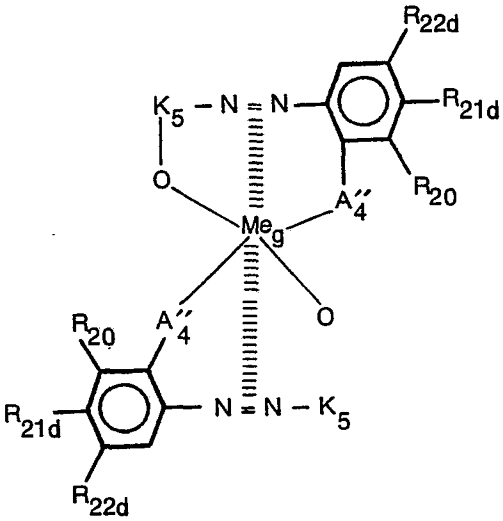
IIIp

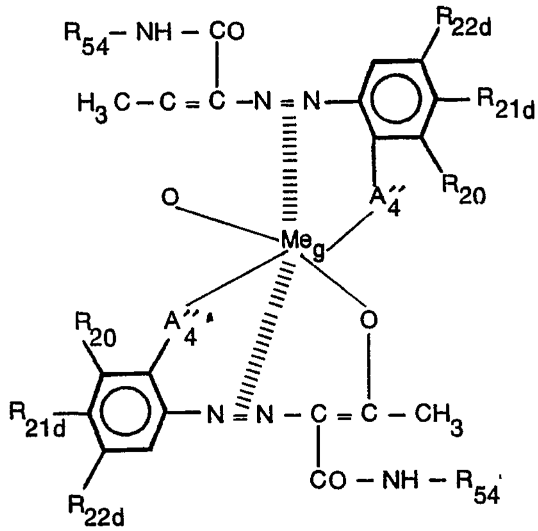
IIIq

dans lesquelles

$R_{21d}$ représente l'hydrogène $—NO_2$, $—NH—CO—(CH_2)_q—Z_3$, $—CH_2—Z_3$, $—SO_2—NH_2$,

$—SO_2—NH—(CH_2)_q—Z_3$, — NH 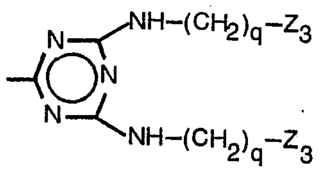 ou $CO—NH—(CH_2)_q—Z_3$,

$R_{22d}$ représente l'hydrogène, $—CH_2—Z_3$, $—SO_2—N(CH_3)_2$, $—NO_2$, $—SO_2—NH—(CH_2)_q—OH$,

— NH 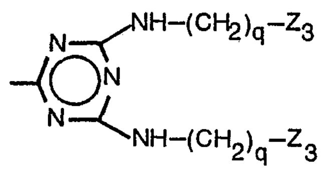

$—SO_2—NH—(CH_2)_q—Z_3$, $—CO—NH—(CH_2)_q—Z_3$ ou $—NH—CO—(CH_2)_q—Z_3$,

$A_4''$ représente —O— ou —COO—,

$—K_5—O—$ répond à l'une des formules IIIba à IIIbf suivantes:

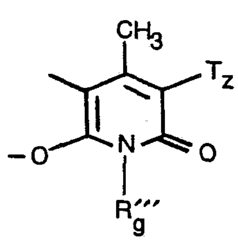
IIIba

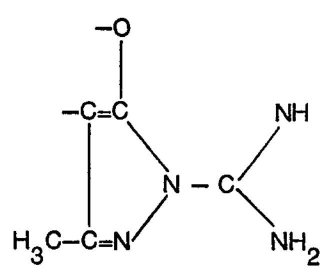
IIIbb

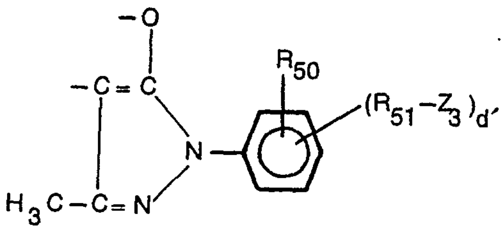 IIIbc 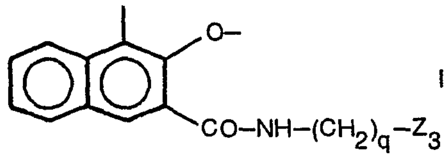 IIIbd

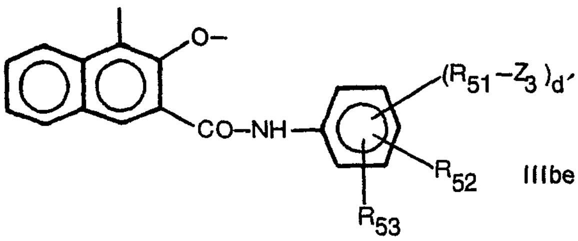 IIIbe 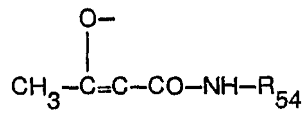 IIIbf

$R_{51}$ représente

$-(CH_2)_q-$, $-NH-CO-(\overset{*}{C}H_2)_q-$, $-CO-NH-(\overset{*}{C}H_2)_q-$ ou $-SO_2-NH-(\overset{*}{C}H_2)_q-$;

$R_{52}$ représente l'hydrogène, $-Cl$, $-Br$, $-CH_3$ ou $-OCH_3$;
$R_{53}$ représente l'hydrogène, $-NH-(CH_2)_q-Z_3$, $-NH-C_2H_4OH$, $-Cl$, $-Br$, $-CH_3$ ou $-OCH_3$;
$R_{54}$ représente l'hydrogène,

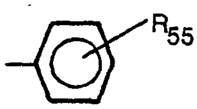 , 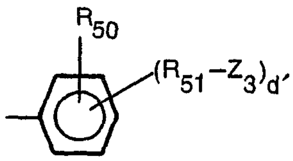 ou 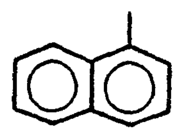

$Z_3$ représente

$-N(CH_3)_2$, $-\overset{\oplus}{N}(CH_3)_3$ $A^{\ominus}$, 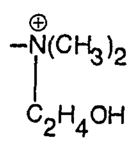 $A^{\ominus}$ 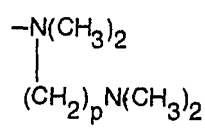

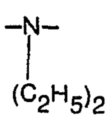 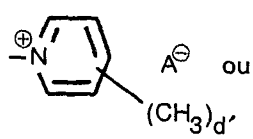 $A^{\ominus}$ ou 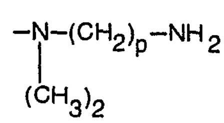 $A^{\ominus}$

où
$-D_1-Z_3$ a les significations de $-D_1-Z_2$ excepté que $Z_2$ est remplacé par $Z_3$,
d' signifie 0 ou 1.

6. Une méthode pour la teinture d'un substrat, comprenant l'application sur ce substrat d'un composé de formule I tel que défini à la revendication 1.

7. Le cuir ou le papier teint par une méthode selon la revendication 6.

8. Un procédé pour la production de composés azoïques de formule I selon la revendication 1, qui comprend la copulation d'une amine diazotée de formule γ

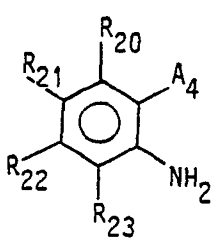 γ

dans laquelle les symboles sont définis à la revendication 1, avec une composante de copulation de formule δ

$$K_2—H \qquad (\delta)$$ et

où les symboles sont définis à la revendication 1; et la métallisation avec un métal capable de former un complexe métallifère 1:1 ou 1:2 ou capable de former un complexe métallifère 1:1 ou 1:2.